# EUROPEAN PATENT APPLICATION

(11) **EP 4 793 892 A1**
(43) Date of publication of application: **19.08.2026**
(21) Application number: 24877193.3
(22) Date of filing: 09.10.2024
(51) Int. Cl.: G06T 9/00

(54) **ENCODING DEVICE, DECODING DEVICE, ENCODING METHOD, AND DECODING METHOD**

(30) Priority: 11.10.2023 US 202363543570 P
(71) Applicant: Panasonic Intellectual Property Corporation of America, Torrance, CA 90504 (US)
(72) Inventor: IGUCHI, Noritaka, Kadoma-shi, Osaka 571-0057 (JP); SUGIO, Toshiyasu, Kadoma-shi, Osaka 571-0057 (JP); NISHI, Takahiro, Kadoma-shi, Osaka 571-0057 (JP); FUKUDA, Masaki, Kadoma-shi, Osaka 571-0057 (JP)
(74) Representative: Grünecker Patent- und Rechtsanwälte PartG mbB
(86) International application number: PCT/JP2024/036072
(87) International publication number: WO 2025/079598

(57) **Abstract**

An encoding device (1570) includes circuitry (1571) and memory (1572) coupled to the circuitry (1571). In operation, the circuitry (1571): obtains a plurality of networks included in a three-dimensional data generative model, the plurality of networks including a first network and a second network; encodes the plurality of networks; and outputs a bitstream including the plurality of networks encoded, by storing, in each of a data unit of the first network and a data unit of the second network, at least one of a density network for outputting density information or a color network for outputting color information, the density network and the color network being networks obtained as a result of learning.

## Description

### [Technical Field]

The present disclosure relates to an encoding device, a decoding device, an encoding method, and a decoding method.

### [Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

### [Citation List]

### [Patent Literature]

[PTL 1] International Publication WO 2014/020663

### [Non Patent Literature]

[NPL 1] ISO/IEC 15938-17:2022 (Information technology - Multimedia content description interface - Part 17: Compression of neural networks for multimedia content description and analysis (https//www.iso.org/standard/78480.html))

### [Summary of Invention]

### [Technical Problem]

The present disclosure aims to provide an encoding device, and the like, that can realize a reduction in storage capacity for three-dimensional data or a reduction in transmission amount of three-dimensional data.

### [Solution to Problem]

An encoding device according to an aspect of the present disclosure includes circuitry and memory coupled to the circuitry. In operation, the circuitry: obtains a plurality of networks included in a three-dimensional data generative model, the plurality of networks including a first network and a second network; encodes the plurality of networks; and outputs a bitstream including the plurality of networks encoded, by storing, in each of a data unit of the first network and a data unit of the second network, at least one of a density network for outputting density information or a color network for outputting color information, the density network and the color network being networks obtained as a result of learning.

A decoding device according to an aspect of the present disclosure includes circuitry and memory coupled to the circuitry. In operation, the circuitry: obtains a bitstream including a plurality of networks that are encoded and included in a three-dimensional data generative model, the plurality of networks including a first network and a second network, wherein at least one of a density network for outputting density information or a color network for outputting color information is stored in each of a data unit of the first network and a data unit of the second network, the density network and the color network being networks obtained as a result of learning; and decodes the plurality of networks, based on the bitstream.

It is to be noted that these general or specific aspects may be implemented as a system, an integrated circuit, a computer program, or a computer-readable recording medium such as a CD-ROM, or may be implemented as any combination of a system, a method, an integrated circuit, a computer program, and a recording medium.

### [Advantageous Effects of Invention]

An encoding device, and the like, according to the present disclosure can realize a reduction in storage capacity for three-dimensional data or a reduction in transmission amount of three-dimensional data.

### [Brief Description of Drawings]

[FIG. 1]

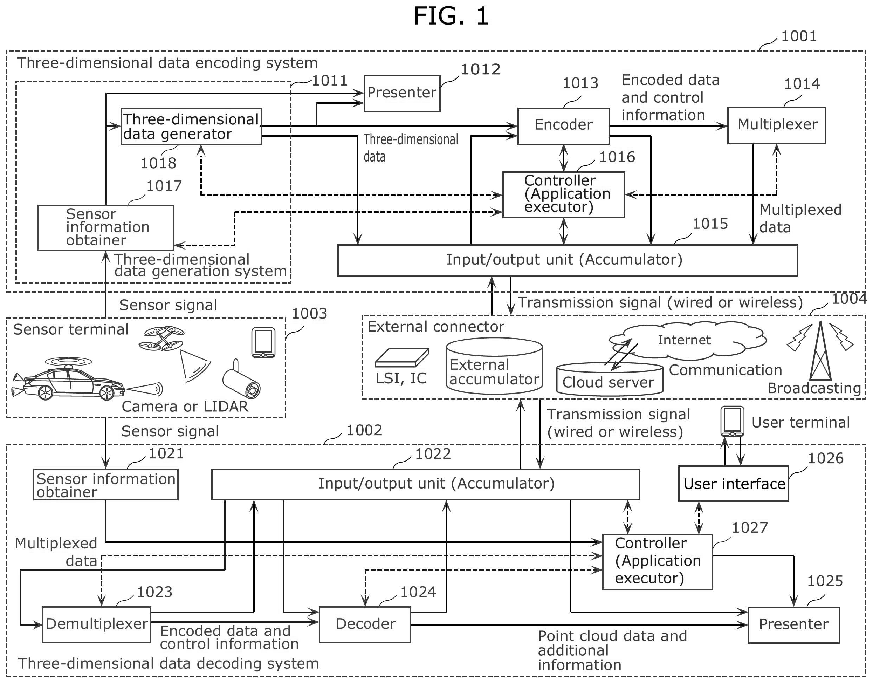

   FIG. 1 is a diagram illustrating a configuration example of a three-dimensional data encoding and decoding system according to an embodiment in Embodiment 1.
[FIG. 2]

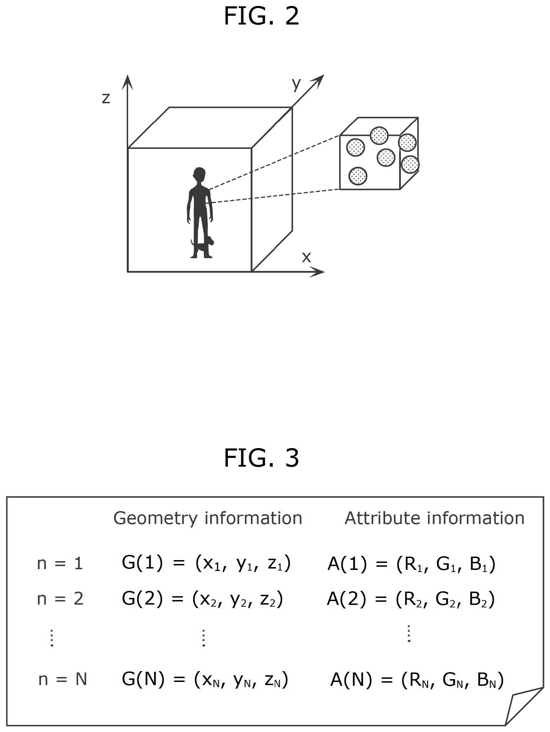

   FIG. 2 is a diagram illustrating an example of point cloud data in Embodiment 1.
[FIG. 3]
   FIG. 3 is a diagram illustrating a configuration example of a data file describing information of the point cloud data in Embodiment 1.
[FIG. 4]

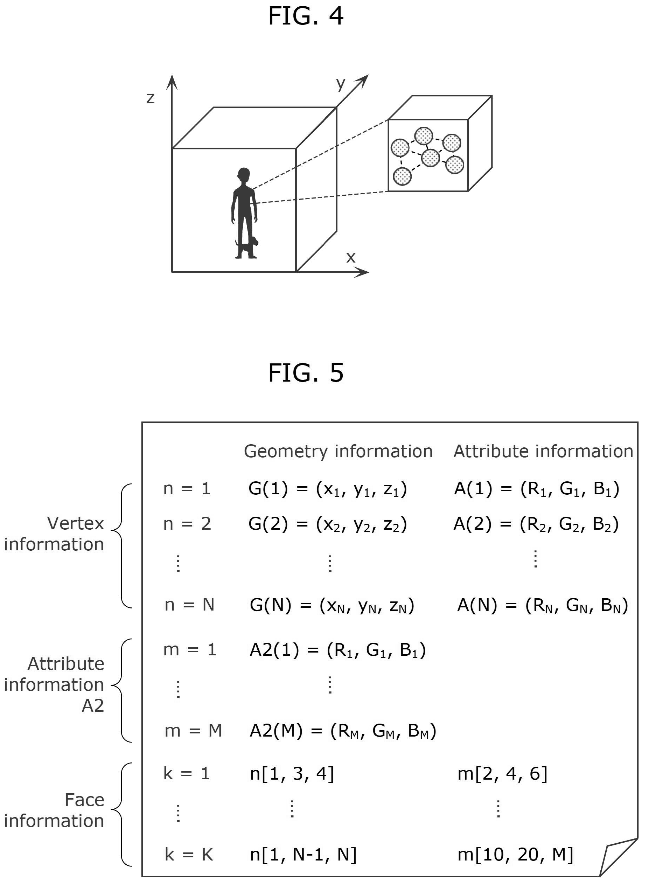

   FIG. 4 is a diagram illustrating the configuration of three-dimensional mesh data in Embodiment 1.
[FIG. 5]
   FIG. 5 is a diagram illustrating a configuration example of a data file describing information of the three-dimensional mesh data in Embodiment 1.
[FIG. 6]

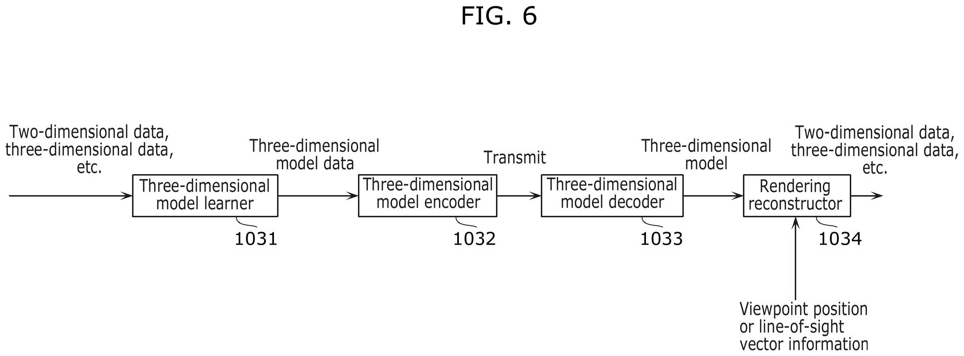

   FIG. 6 is a diagram for describing a three-dimensional model in Embodiment 1.
[FIG. 7]

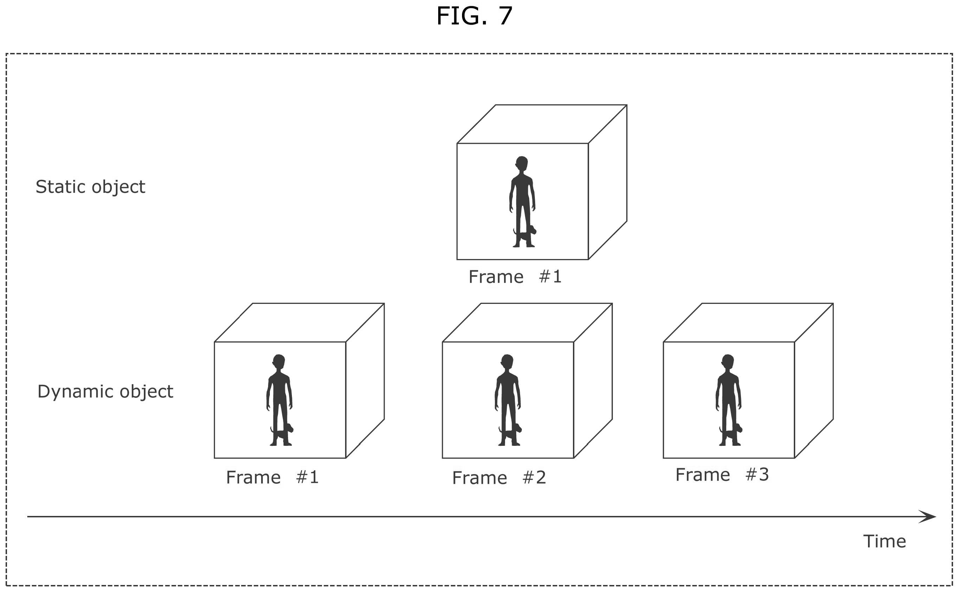

   FIG. 7 is a diagram illustrating types of three-dimensional data in Embodiment 1.
[FIG. 8]

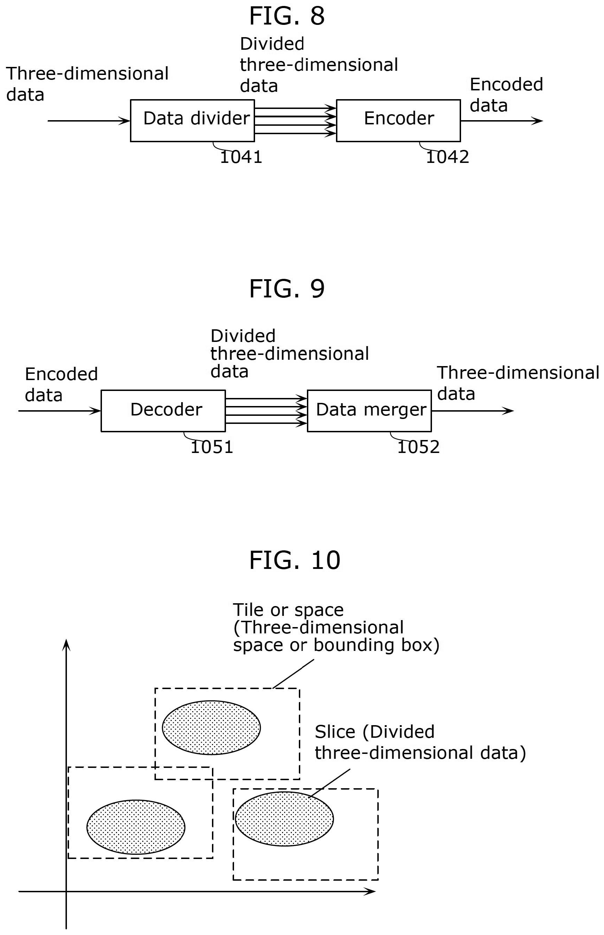

   FIG. 8 is a diagram for describing encoding processing of three-dimensional data in Embodiment 1.
[FIG. 9]
   FIG. 9 is a diagram for describing decoding processing of three-dimensional data in Embodiment 1.
[FIG. 10]
   FIG. 10 is a diagram two-dimensionally and schematically illustrating tiles and slices of three-dimensional data in Embodiment 1.
[FIG. 11]

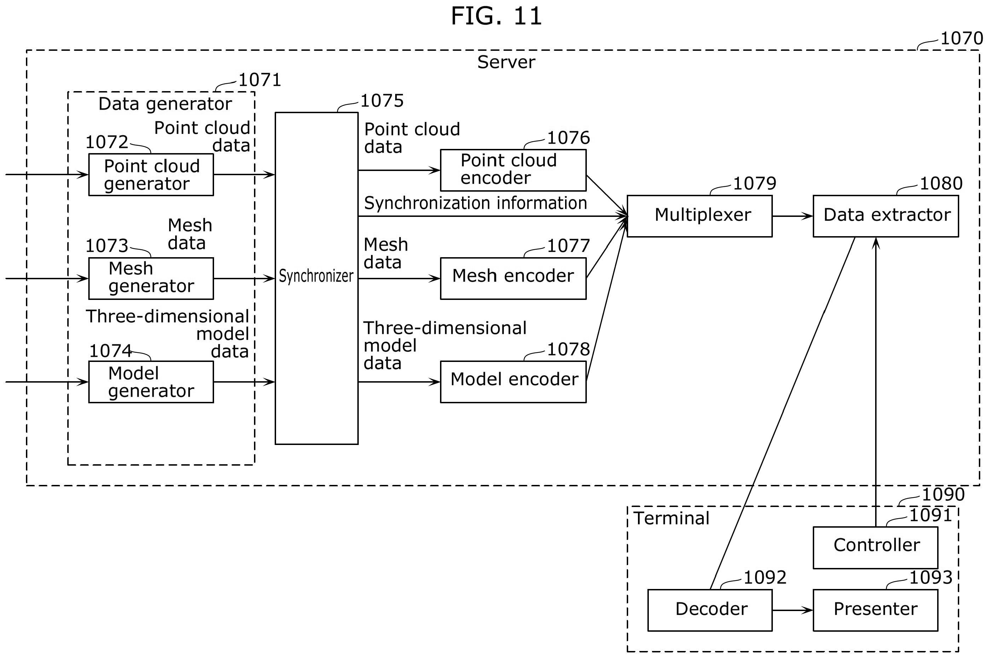

   FIG. 11 is a block diagram illustrating an example of the functional configuration of a server and a terminal in Embodiment 1.
[FIG. 12]

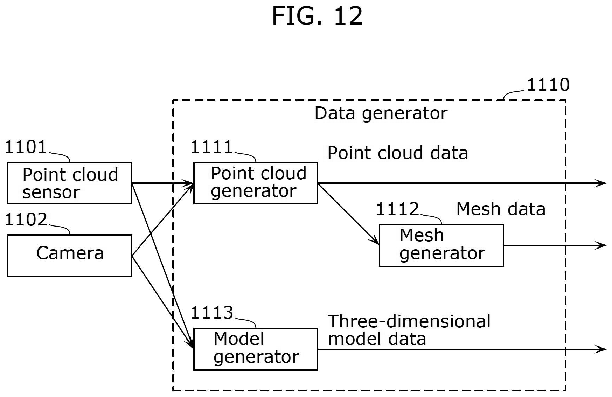

   FIG. 12 is a block diagram illustrating another example of a data generator of a server in Embodiment 1.
[FIG. 13]

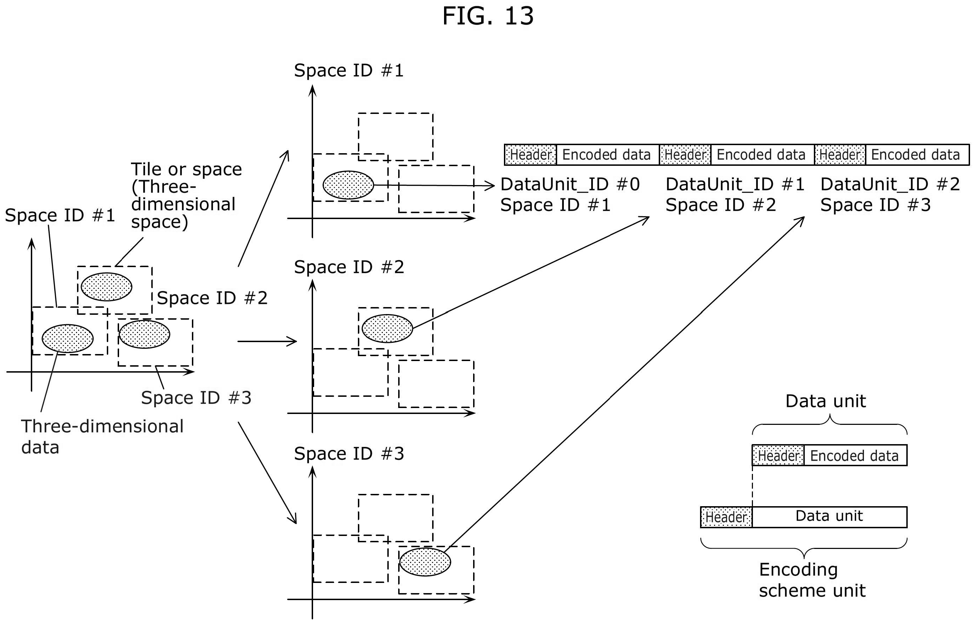

   FIG. 13 is a diagram for describing the relationship between a three-dimensional space and encoded data in Embodiment 1.
[FIG. 14]

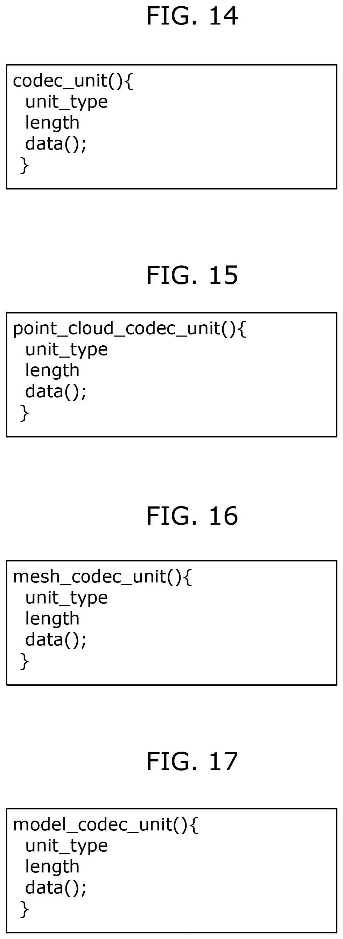

   FIG. 14 is a diagram illustrating an example of syntax of an encoding scheme unit in Embodiment 1.
[FIG. 15]
   FIG. 15 is a diagram illustrating an example of syntax of an encoded point cloud in Embodiment 1.
[FIG. 16]
   FIG. 16 is a diagram illustrating an example of syntax of an encoded mesh in Embodiment 1.
[FIG. 17]
   FIG. 17 is a diagram illustrating an example of syntax of an encoded three-dimensional model in Embodiment 1.
[FIG. 18]

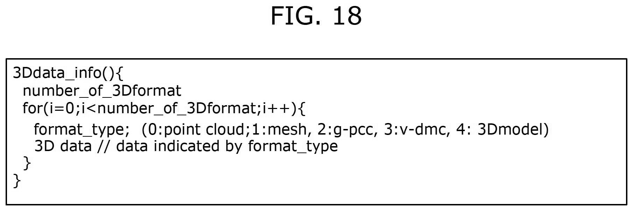

   FIG. 18 is a diagram illustrating an example of syntax of three-dimensional data information in Embodiment 1.
[FIG. 19]

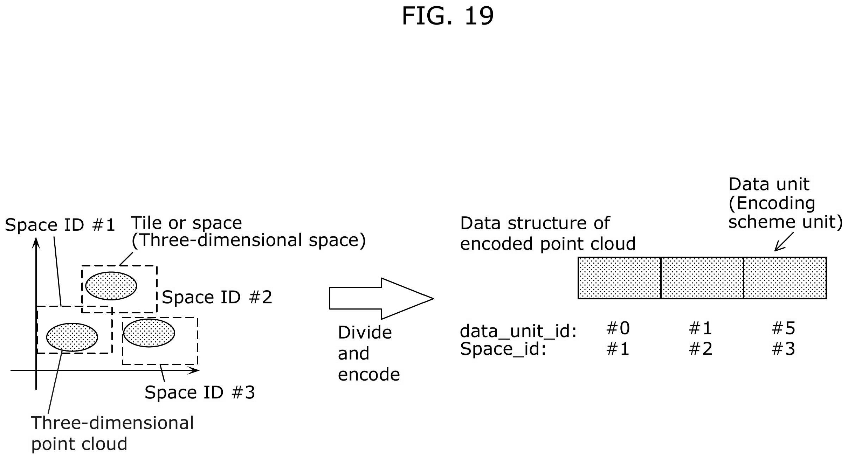

   FIG. 19 is a diagram for describing the data structure of an encoded point cloud in Embodiment 1.
[FIG. 20]

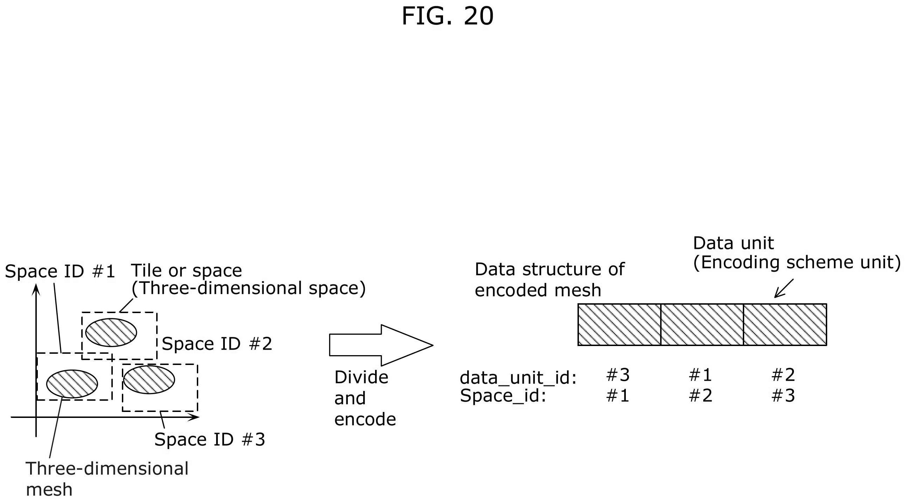

   FIG. 20 is a diagram for describing the data structure of an encoded mesh in Embodiment 1.
[FIG. 21]

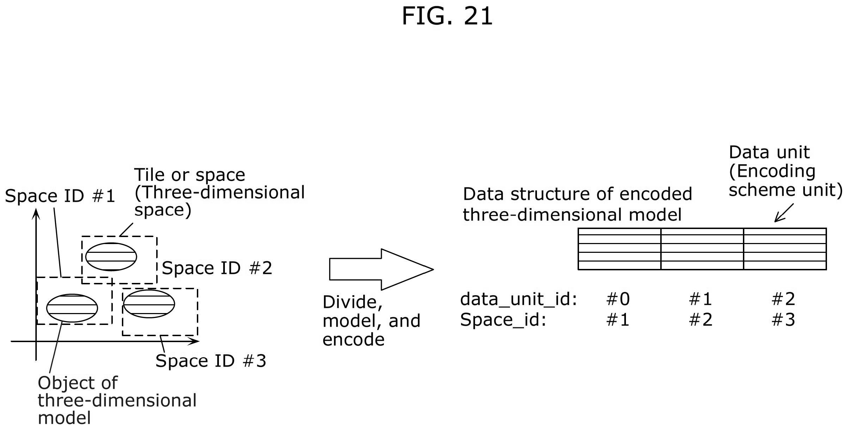

   FIG. 21 is a diagram for describing the data structure of an encoded three-dimensional model in Embodiment 1.
[FIG. 22]

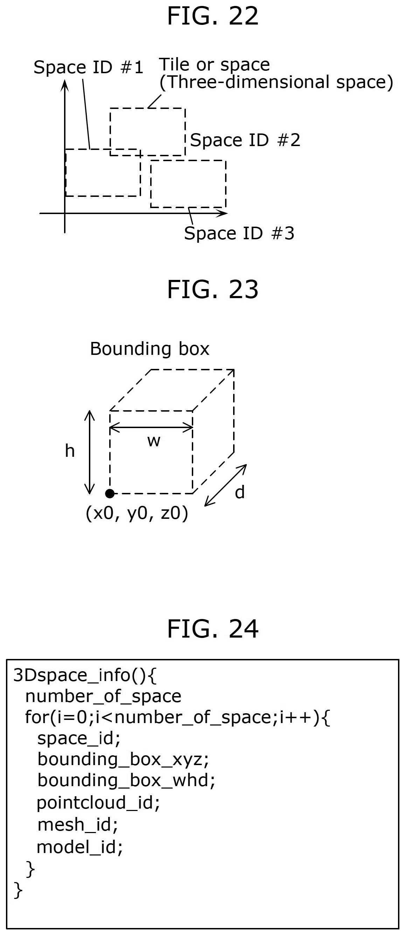

   FIG. 22 is a diagram two-dimensionally illustrating an example of a plurality of three-dimensional spaces in Embodiment 1.
[FIG. 23]
   FIG. 23 is a diagram illustrating an example of a bounding box in Embodiment 1.
[FIG. 24]
   FIG. 24 is a diagram illustrating an example of syntax of three-dimensional space information in Embodiment 1.
[FIG. 25]

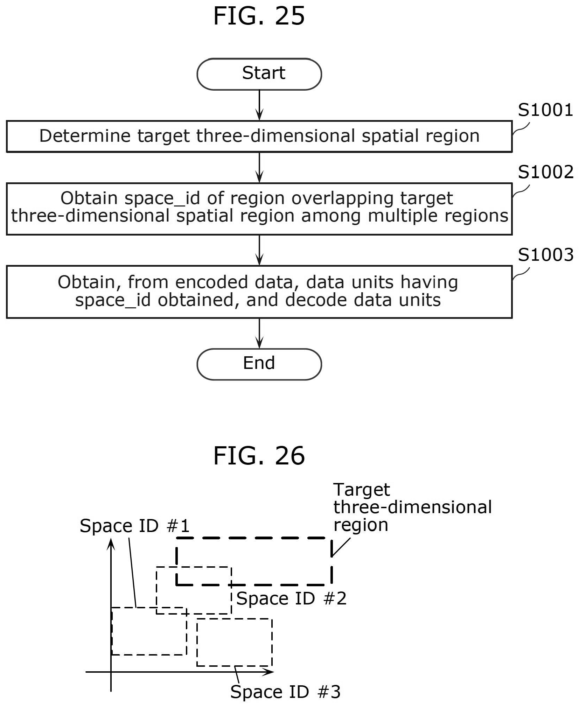

   FIG. 25 is a flowchart illustrating an example of partial decoding in Embodiment 1.
[FIG.26]
   FIG. 26 is a diagram illustrating an example of a three-dimensional spatial region that is to be the target of partial decoding in Embodiment 1.
[FIG. 27]

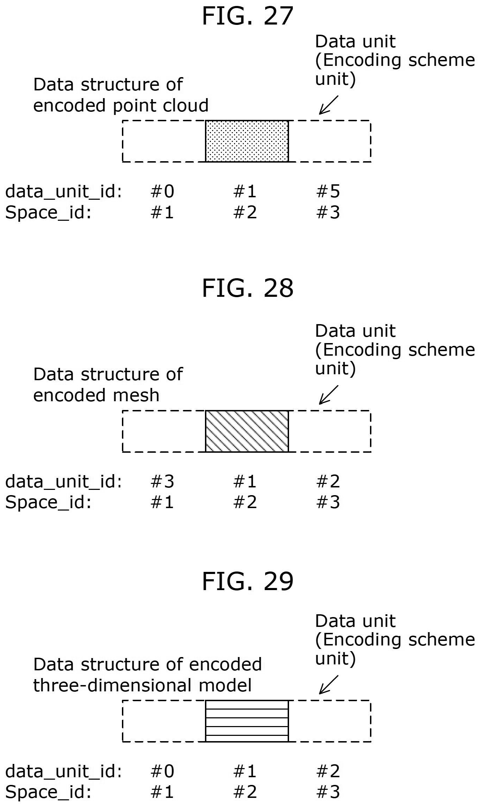

   FIG. 27 is a diagram illustrating an example of the data structure of an encoded point cloud that is to undergo partial decoding in Embodiment 1.
[FIG. 28]
   FIG. 28 is a diagram illustrating an example of the data structure of an encoded mesh that is to undergo partial decoding in Embodiment 1.
[FIG. 29]
   FIG. 29 is a diagram illustrating an example of the data structure of an encoded three-dimensional model that is to undergo partial decoding in Embodiment 1.
[FIG. 30]

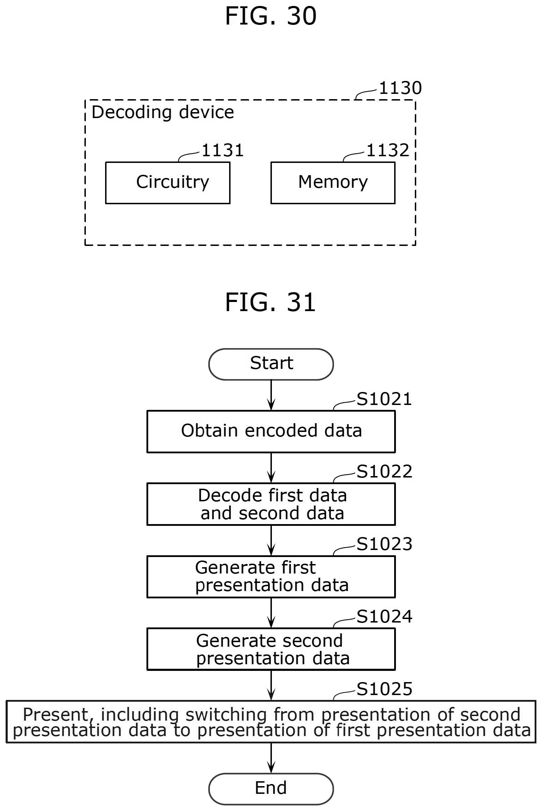

   FIG. 30 is a diagram illustrating an example of the configuration of a decoding device in Embodiment 1.
[FIG. 31]
   FIG. 31 is a flowchart illustrating an example of a decoding method performed by the decoding device in Embodiment 1.
[FIG. 32]

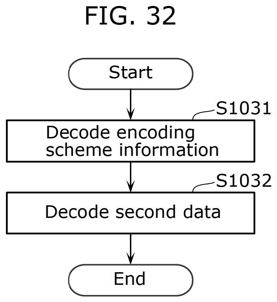

   FIG. 32 is a flowchart illustrating another example of a decoding method performed by the decoding device in Embodiment 1.
[FIG. 33]

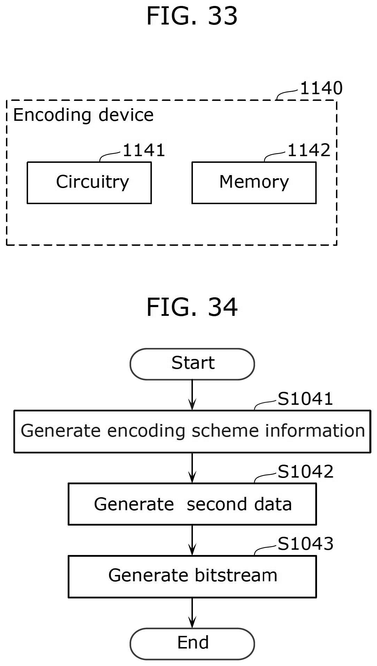

   FIG. 33 is a diagram illustrating an example of the configuration of an encoding device in Embodiment 1.
[FIG. 34]
   FIG. 34 is a flowchart illustrating an example of an encoding method performed by the encoding device in Embodiment 1.
[FIG. 35]

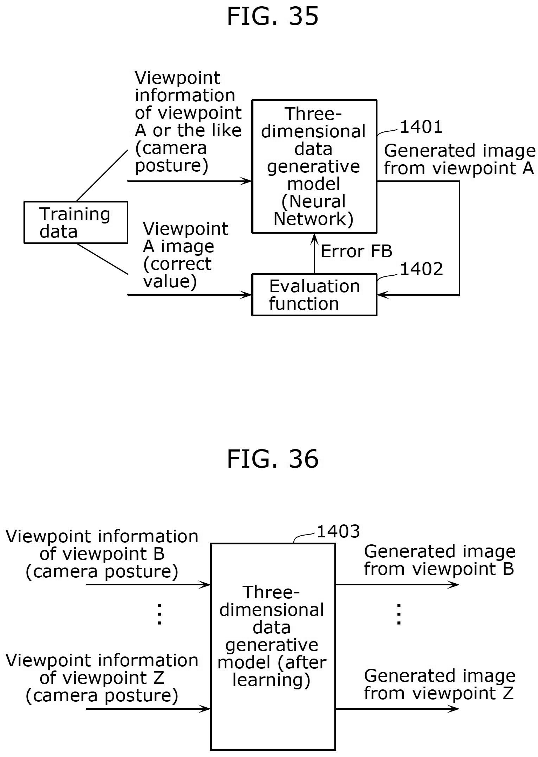

   FIG. 35 is a diagram for describing a process in learning of a three-dimensional data generative model in Embodiment 2.
[FIG. 36]
   FIG. 36 is a diagram for describing a process of generating a static image of a subject viewed from an arbitrary viewpoint using the three-dimensional data generative model in Embodiment 2.
[FIG. 37]

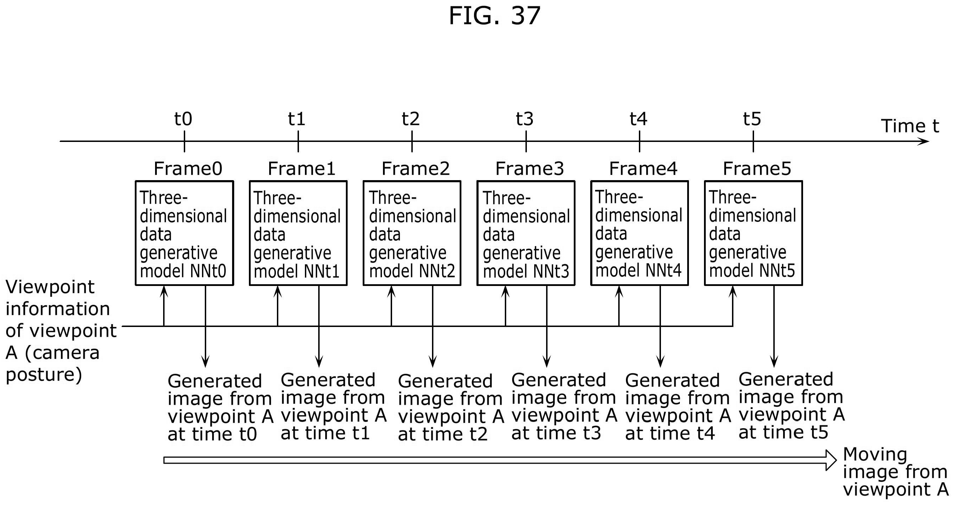

   FIG. 37 is a diagram for describing a moving image generation method using a three-dimensional data generative model according to Example 1 in Embodiment 2.
[FIG. 38]

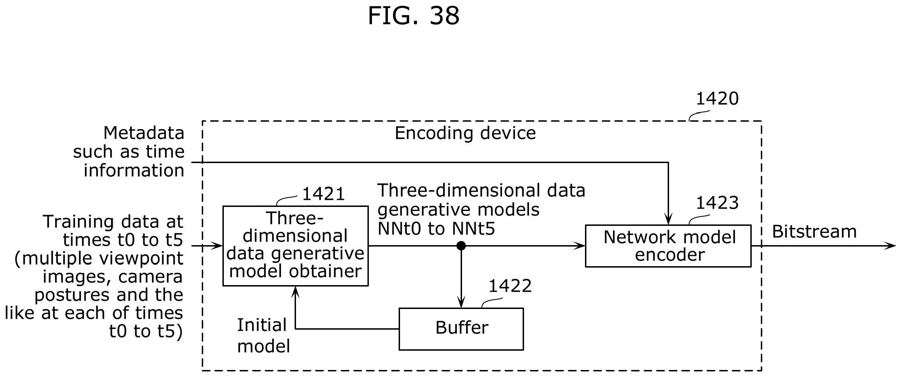

   FIG. 38 is a diagram illustrating a first example of a configuration of an encoding device according to Example 1 in Embodiment 2.
[FIG. 39]

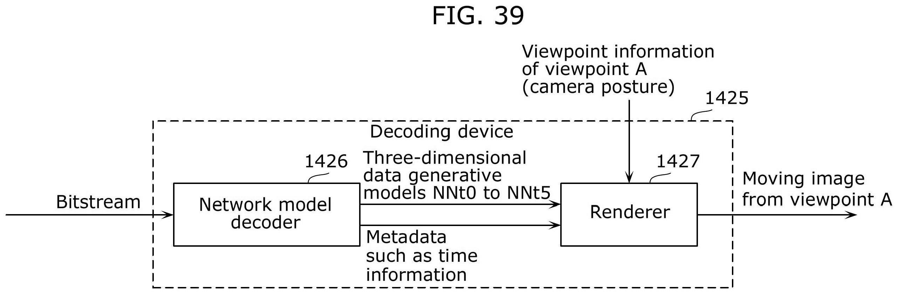

   FIG. 39 is a diagram illustrating a first example of a configuration of a decoding device according to Example 1 in Embodiment 2.
[FIG. 40]

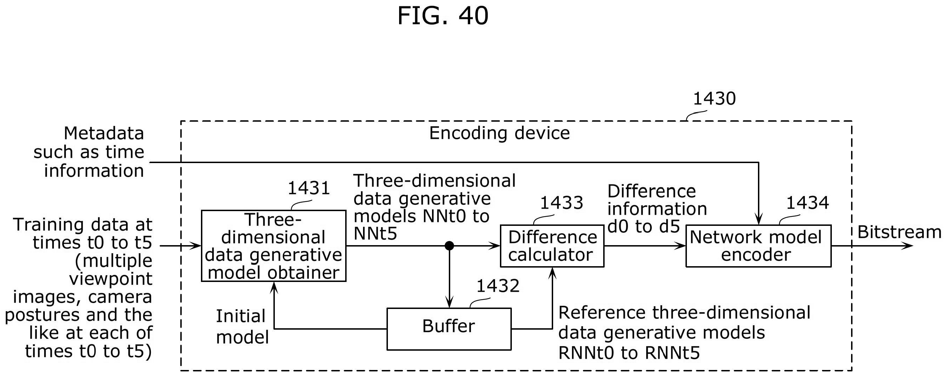

   FIG. 40 is a diagram illustrating a second example of the configuration of the encoding device according to Example 1 in Embodiment 2.
[FIG. 41]

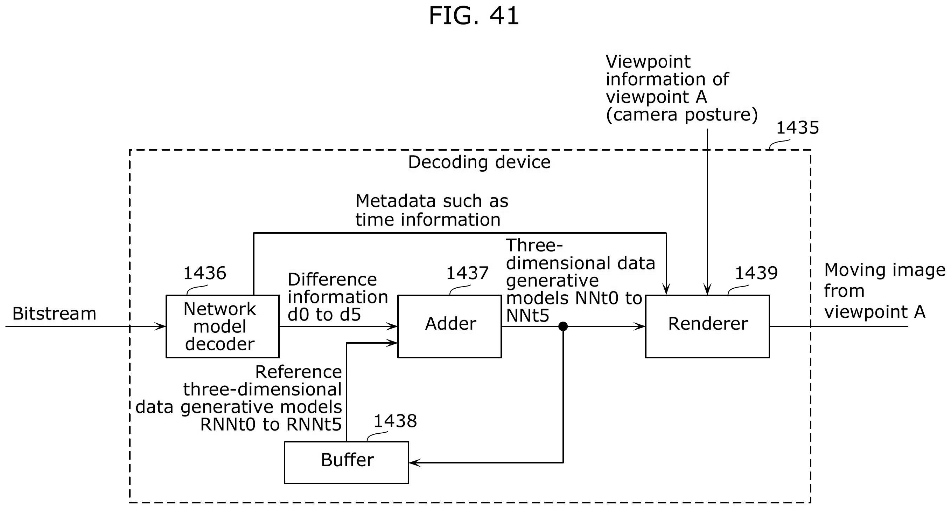

   FIG. 41 is a diagram illustrating a second example of the configuration of the decoding device according to Example 1 in Embodiment 2.
[FIG. 42]

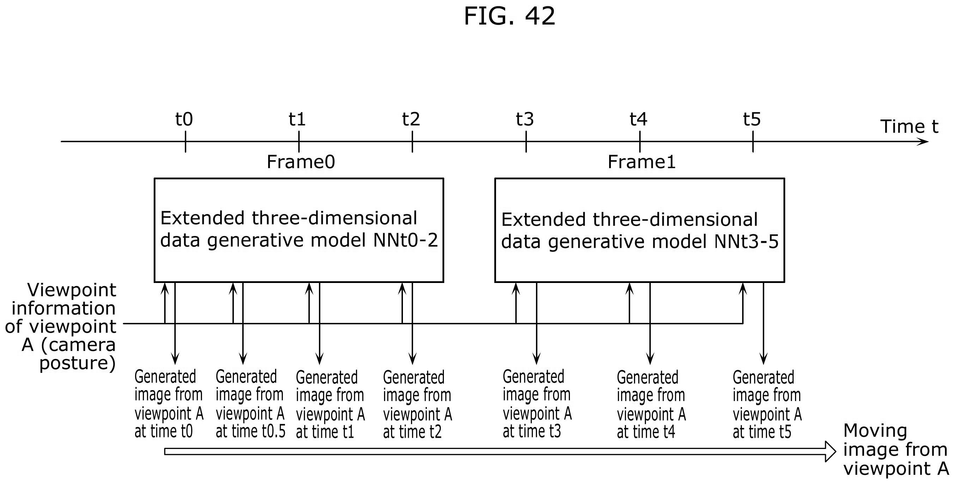

   FIG. 42 is a diagram for describing a moving image generation method using an extended three-dimensional data generative model according to Example 2 in Embodiment 2.
[FIG. 43]

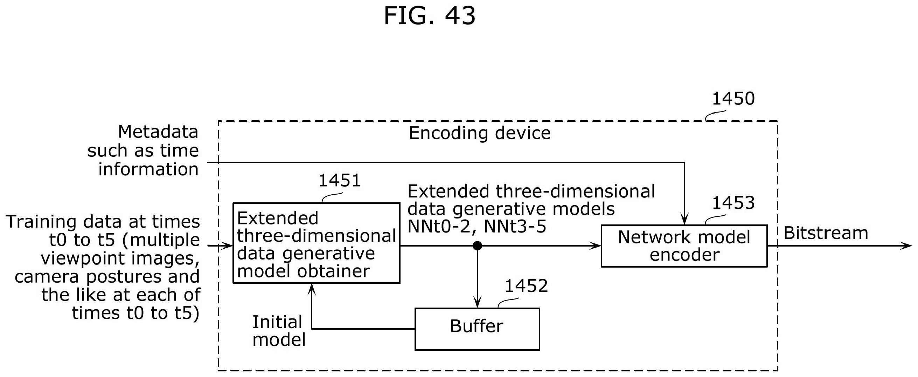

   FIG. 43 is a diagram illustrating a first example of a configuration of an encoding device according to Example 2 in Embodiment 2.
[FIG. 44]

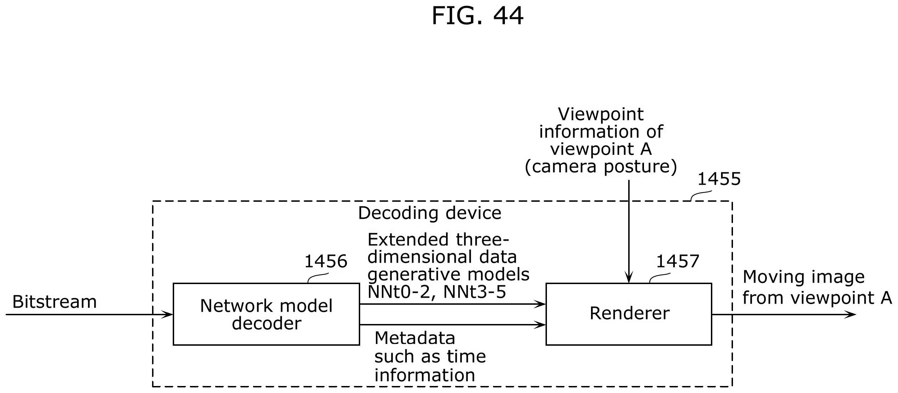

   FIG. 44 is a diagram illustrating a first example of a configuration of a decoding device according to Example 2 in Embodiment 2.
[FIG. 45]

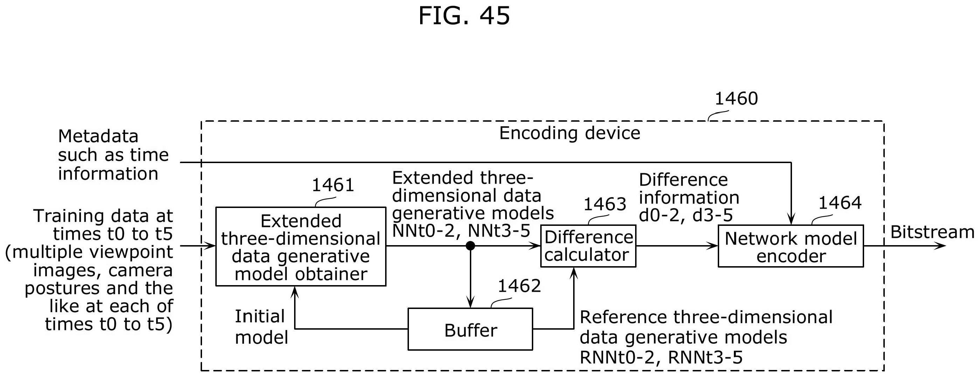

   FIG. 45 is a diagram illustrating a second example of the configuration of the encoding device according to Example 2 in Embodiment 2.
[FIG. 46]

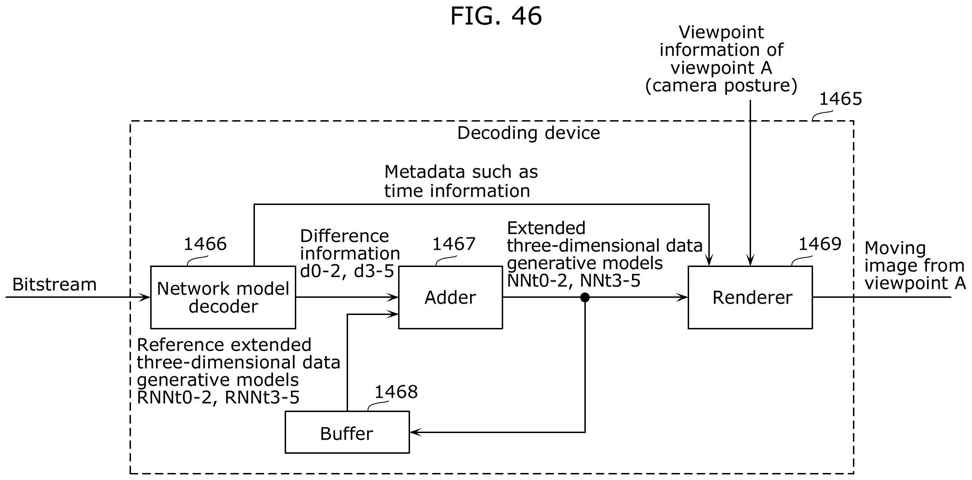

   FIG. 46 is a diagram illustrating a second example of the configuration of the decoding device according to Example 2 in Embodiment 2.
[FIG. 47]

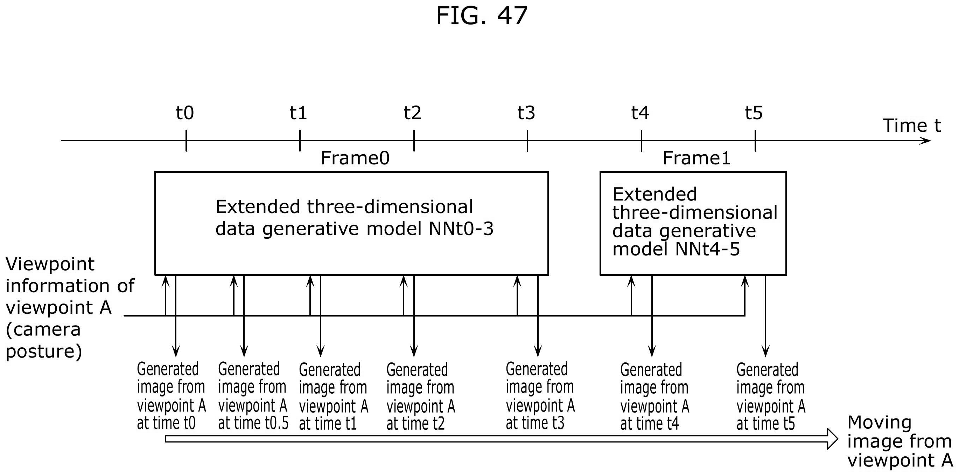

   FIG. 47 is a diagram for describing a moving image generation method using an extended three-dimensional data generative model according to a variation of Embodiment 2.
[FIG. 48]

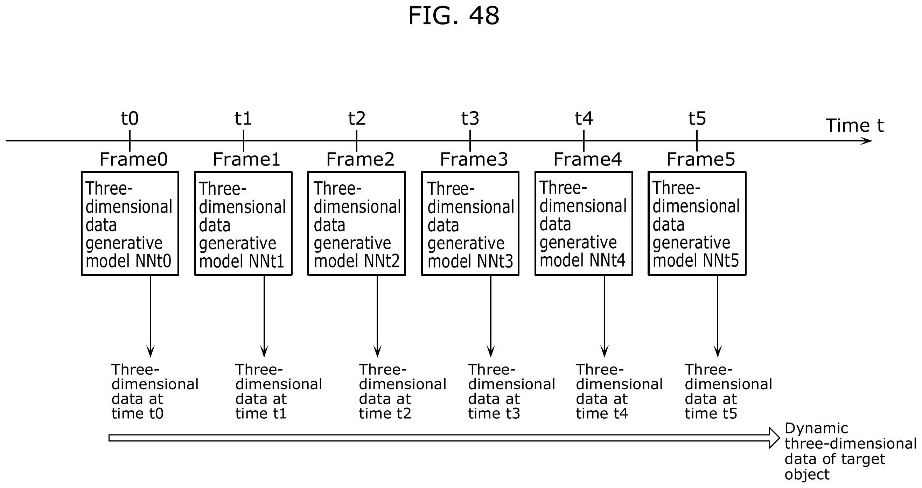

   FIG. 48 is a diagram for describing a moving image generation method using a three-dimensional data generative model according to a variation of Embodiment 2.
[FIG. 49]

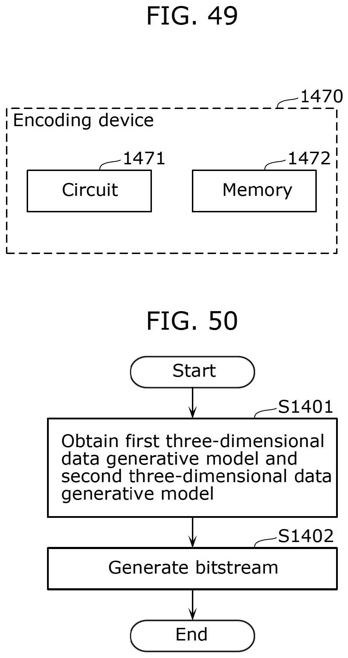

   FIG. 49 is a diagram illustrating an example of the configuration of the encoding device in Embodiment 2.
[FIG. 50]
   FIG. 50 is a flowchart illustrating an example of an encoding method by the encoding device in Embodiment 2.
[FIG. 51]

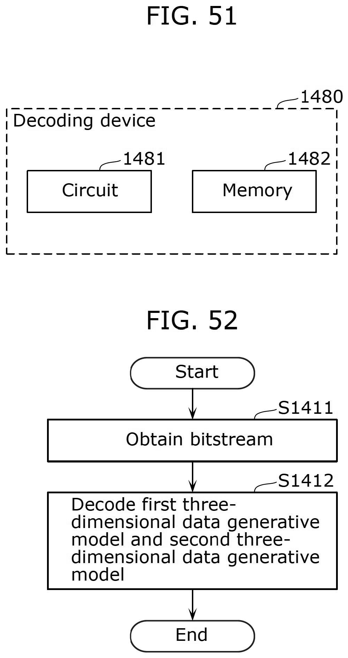

   FIG. 51 is a diagram illustrating an example of the configuration of the decoding device in Embodiment 2.
[FIG. 52]
   FIG. 52 is a flowchart illustrating an example of a decoding method by the decoding device in Embodiment 2.
[FIG. 53]

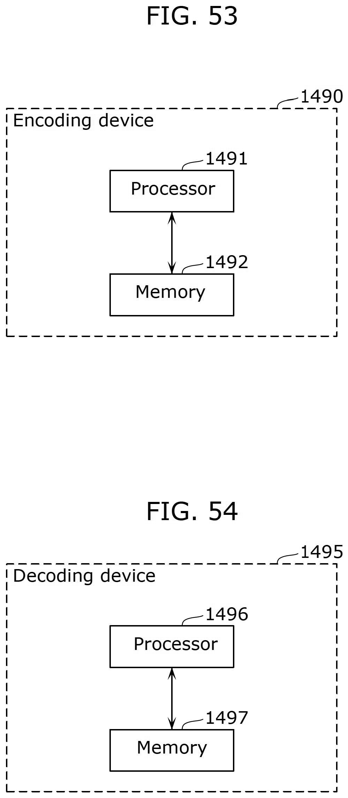

   FIG. 53 is a diagram illustrating an example of a configuration of an encoding device.
[FIG. 54]
   FIG. 54 is a diagram illustrating an example of a configuration of a decoding device.
[FIG. 55]

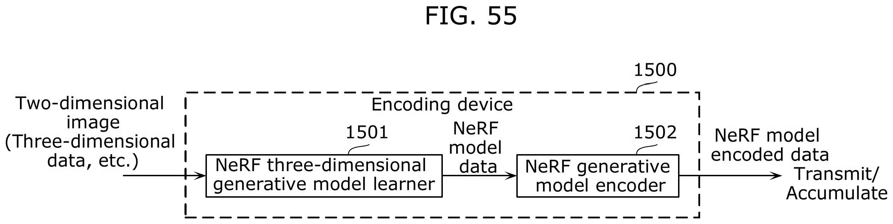

   FIG. 55 is a block diagram illustrating an example of a configuration of an encoding device in Embodiment 3.
[FIG. 56]

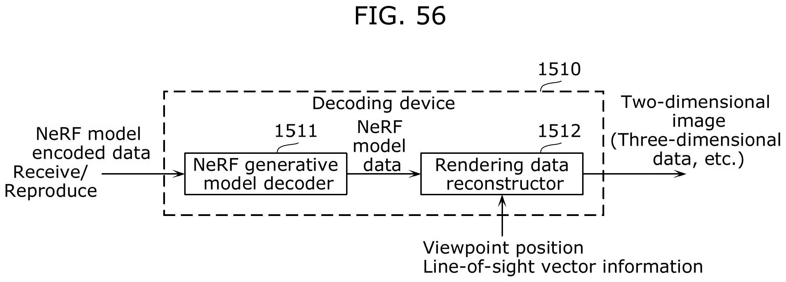

   FIG. 56 is a block diagram illustrating an example of a configuration of a decoding device in Embodiment 3.
[FIG. 57]

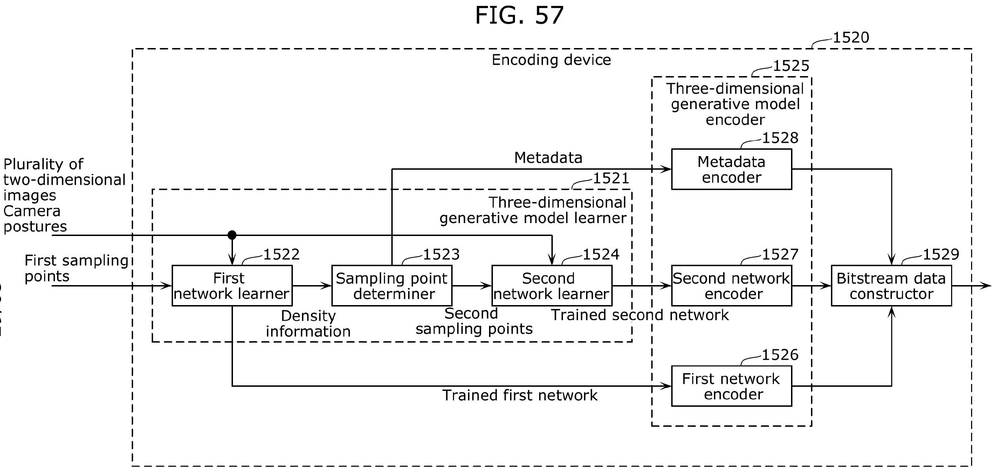

   FIG. 57 is a block diagram illustrating an example of a configuration of an encoding device that encodes a plurality of networks in Embodiment 3.
[FIG. 58]

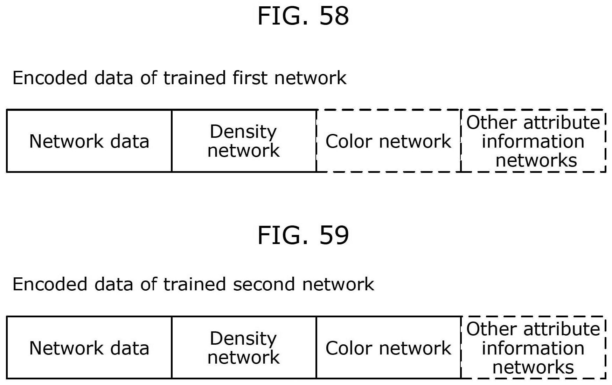

   FIG. 58 is a diagram illustrating an example of encoded data of a trained first network in Embodiment 3.
[FIG. 59]
   FIG. 59 is a diagram illustrating an example of encoded data of a trained second network in Embodiment 3.
[FIG. 60]

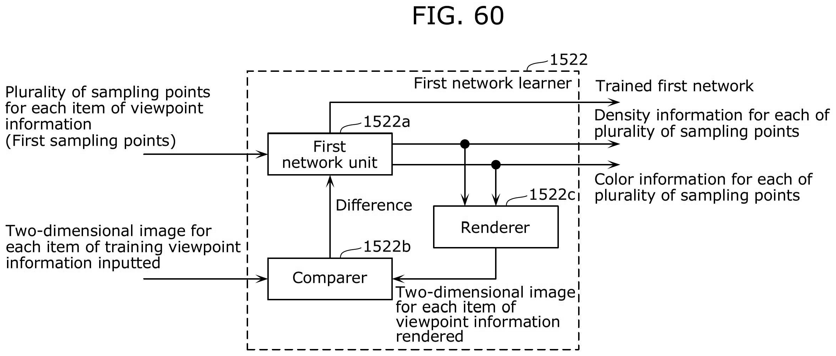

   FIG. 60 is a diagram illustrating an example of the detailed configuration of first network learner in Embodiment 3.
[FIG. 61]

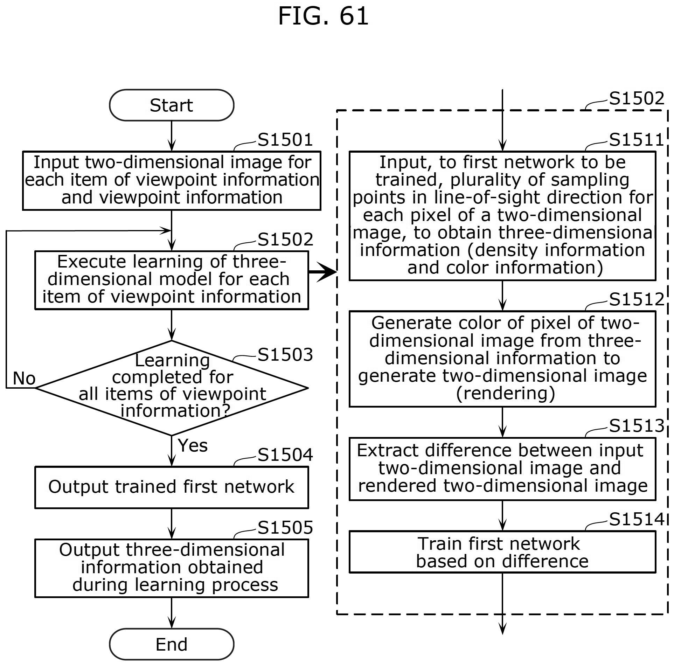

   FIG. 61 is a flowchart illustrating an example of a learning process of a network in Embodiment 3.
[FIG. 62]

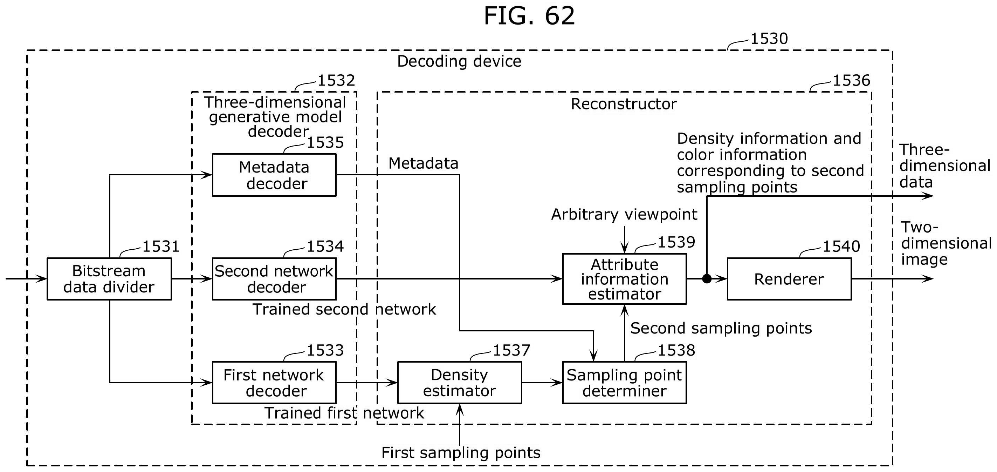

   FIG. 62 is a block diagram illustrating an example of a configuration of a decoding device that decodes a plurality of networks in Embodiment 3.
[FIG. 63]

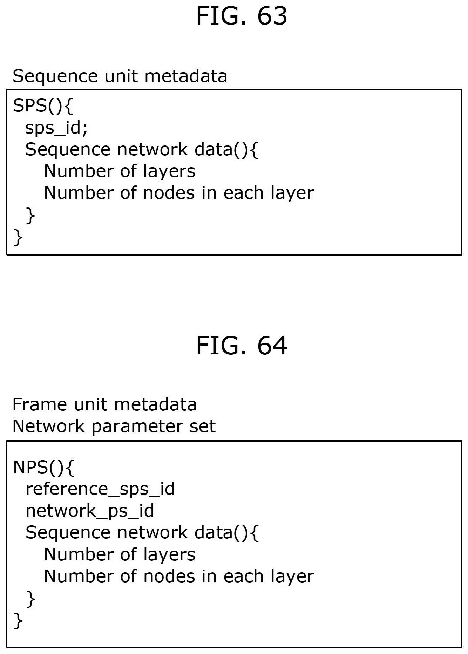

   FIG. 63 is a diagram illustrating an example of syntax of sequence unit metadata in Embodiment 3.
[FIG. 64]
   FIG. 64 is a diagram illustrating an example of syntax of frame unit metadata in Embodiment 3.
[FIG. 65]

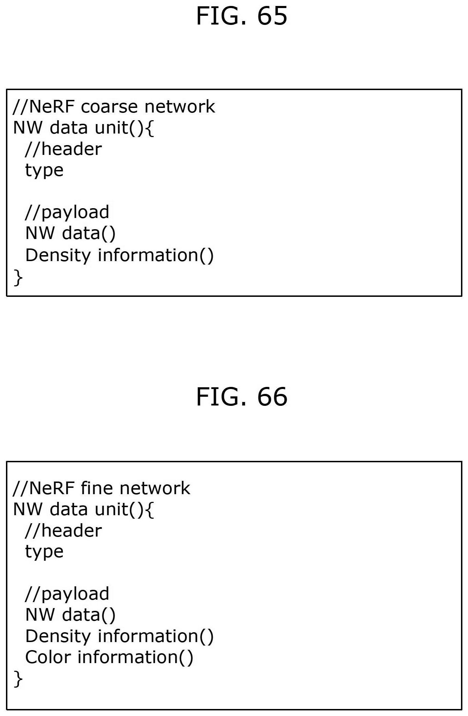

   FIG. 65 is a diagram illustrating an example of syntax of a data unit of a network with a large density in Embodiment 3.
[FIG. 66]
   FIG. 66 is a diagram illustrating an example of syntax of a data unit of a network with a small density in Embodiment 3.
[FIG. 67]

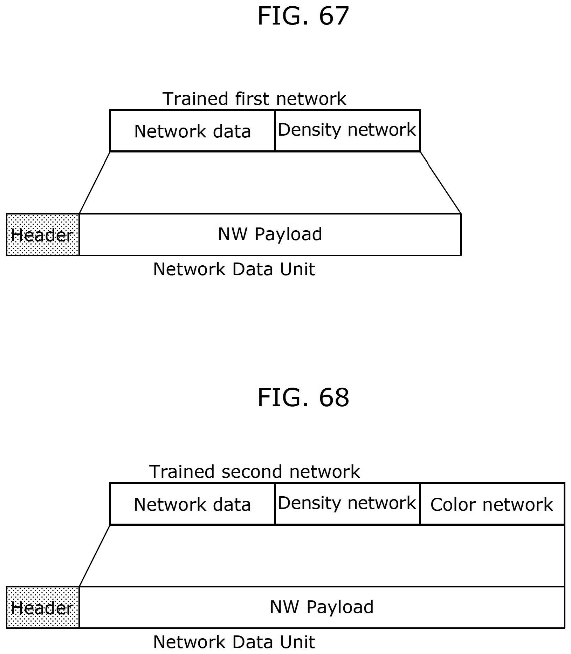

   FIG. 67 is a diagram illustrating an example of a configuration of a data unit of the first network in Embodiment 3.
[FIG. 68]
   FIG. 68 is a diagram illustrating an example of a configuration of a data unit of the second network in Embodiment 3.
[FIG. 69]

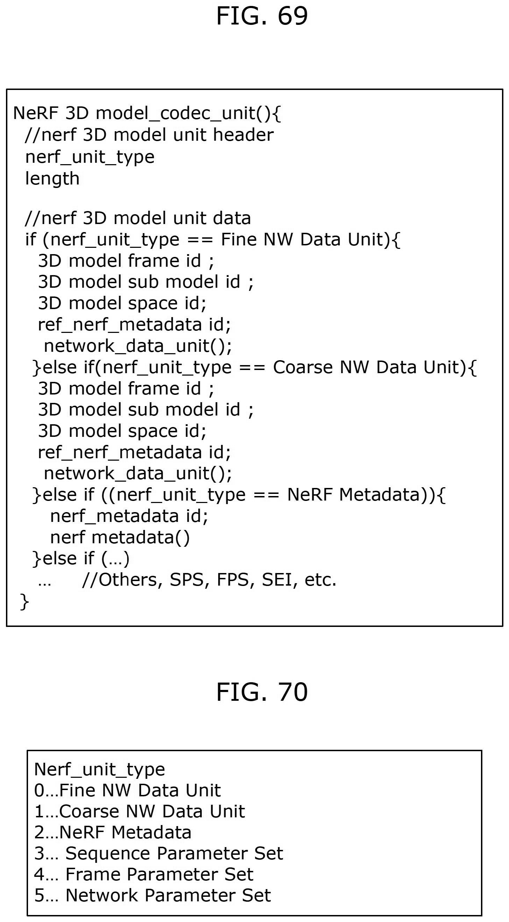

   FIG. 69 is a diagram illustrating an example of syntax of encoded data of a NeRF three-dimensional model in Embodiment 3.
[FIG. 70]
   FIG. 70 is a diagram illustrating an example of NeRF unit types in Embodiment 3.
[FIG. 71]

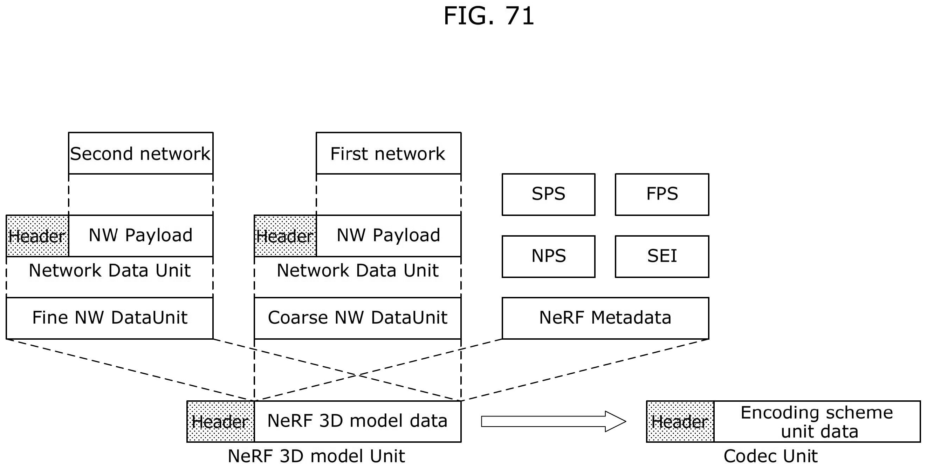

   FIG. 71 is a diagram illustrating an example of the data structure of encoded data of a NeRF three-dimensional model in Embodiment 3.
[FIG. 72]

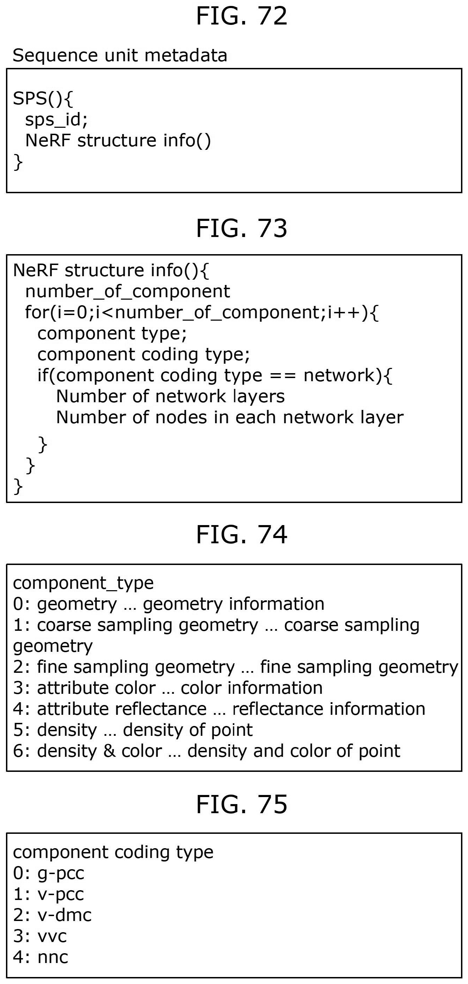

   FIG. 72 is a diagram illustrating an example of syntax of SPS of a NeRF three-dimensional model in Embodiment 3.
[FIG. 73]
   FIG. 73 is a diagram illustrating an example of syntax of structure information of a NeRF three-dimensional model in Embodiment 3.
[FIG. 74]
   FIG. 74 is a diagram illustrating an example of a component_type in Embodiment 3.
[FIG. 75]
   FIG. 75 is a diagram illustrating an example of a component coding type in Embodiment 3.
[FIG. 76]

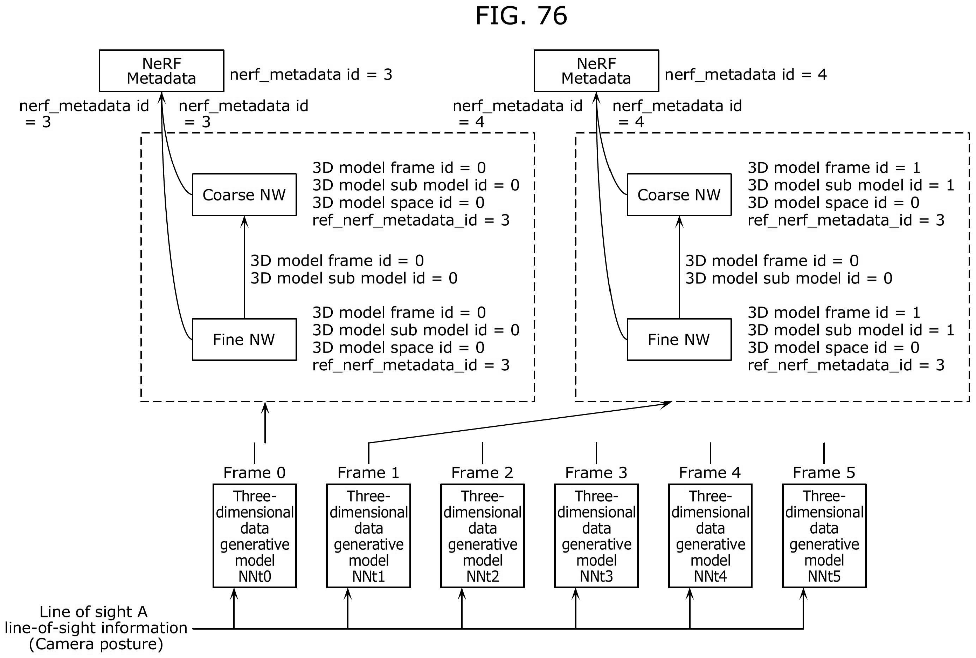

   FIG. 76 is a diagram for describing reference relationships of encoded data of a NeRF three-dimensional model in Embodiment 3.
[FIG. 77]

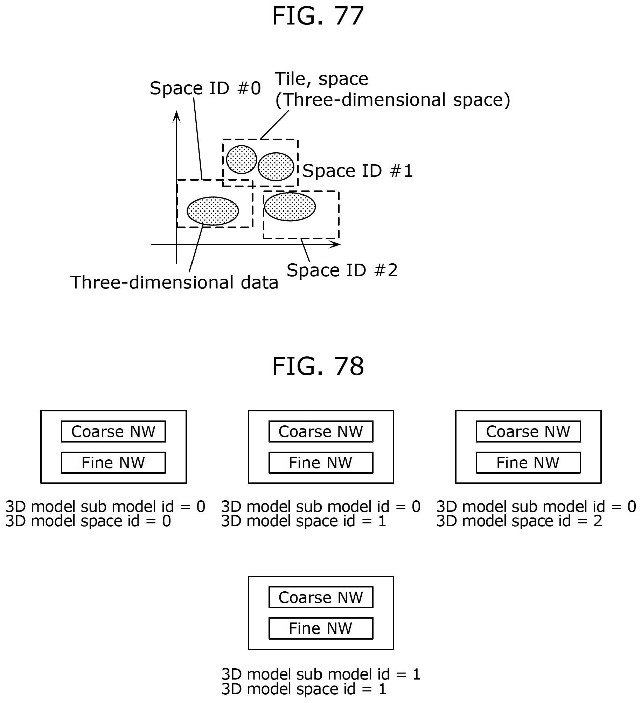

   FIG. 77 is a diagram illustrating an example in which data of one frame is divided into three three-dimensional spaces in Embodiment 3.
[FIG. 78]
   FIG. 78 is a diagram illustrating an example of IDs assigned to divided data in Embodiment 3.
[FIG. 79]

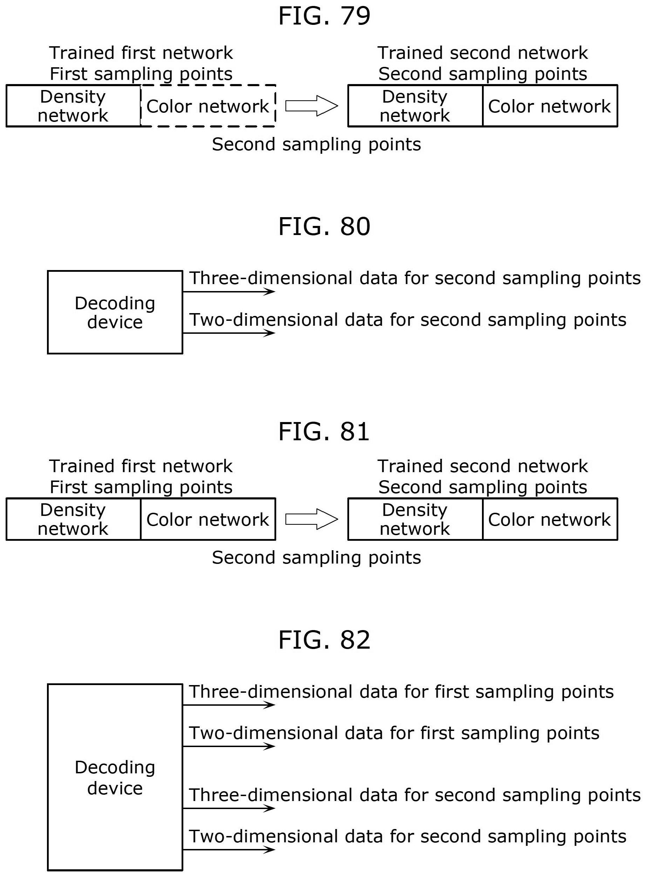

   FIG. 79 is a diagram for describing a first example of an encoding method in Embodiment 3.
[FIG. 80]
   FIG. 80 is a diagram for describing a first example of the output of the decoding device in Embodiment 3.
[FIG. 81]
   FIG. 81 is a diagram for describing a second example of an encoding method in Embodiment 3.
[FIG. 82]
   FIG. 82 is a diagram for describing a second example of the output of the decoding device in Embodiment 3.
[FIG. 83]

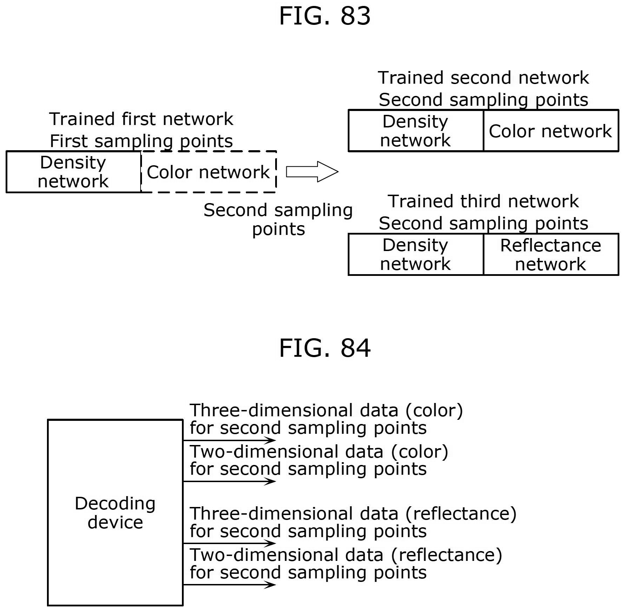

   FIG. 83 is a diagram for describing a third example of an encoding method in Embodiment 3.
[FIG. 84]
   FIG. 84 is a diagram for describing a third example of the output of the decoding device in Embodiment 3.
[FIG. 85]

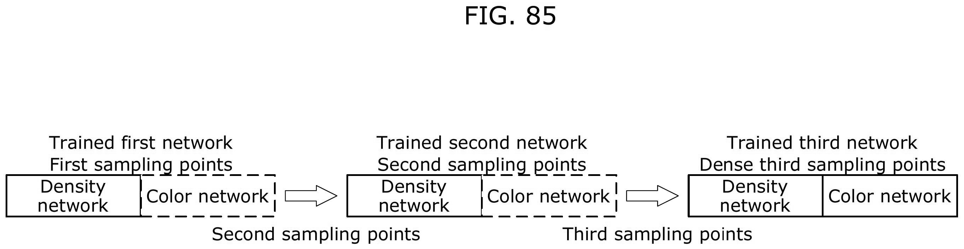

   FIG. 85 is a diagram for describing a fourth example of an encoding method in Embodiment 3.
[FIG. 86]

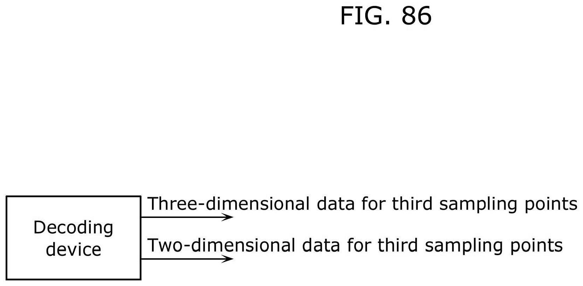

   FIG. 86 is a diagram for describing a fourth example of the output of the decoding device in Embodiment 3.
[FIG. 87]

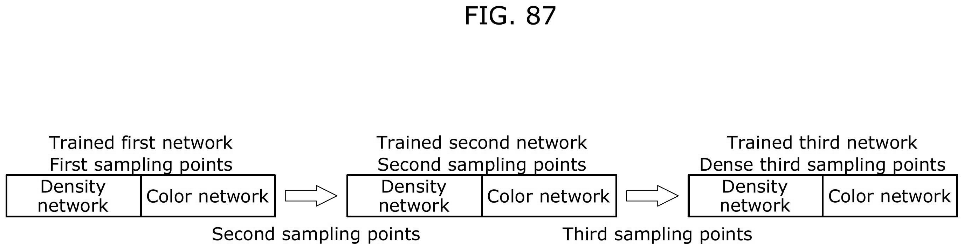

   FIG. 87 is a diagram for describing a fifth example of an encoding method in Embodiment 3.
[FIG. 88]

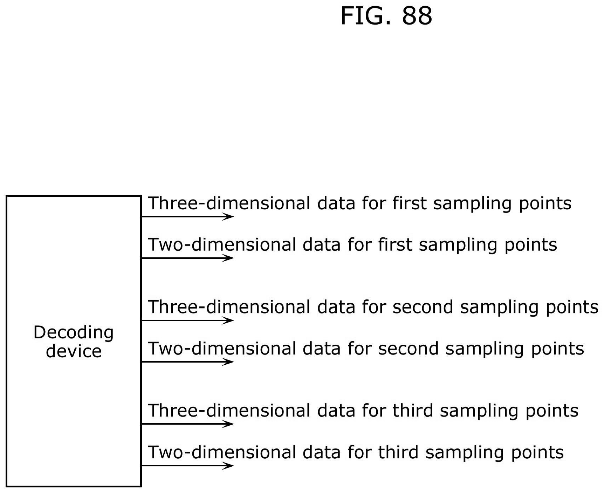

   FIG. 88 is a diagram for describing a fifth example of the output of the decoding device in Embodiment 3.
[FIG. 89]

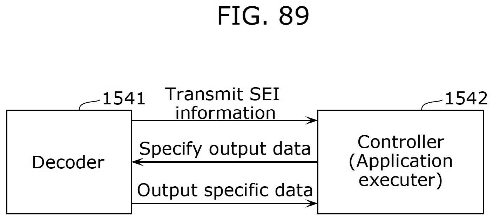

   FIG. 89 is a diagram for describing data exchange between a decoder and a controller in Embodiment 3.
[FIG. 90]

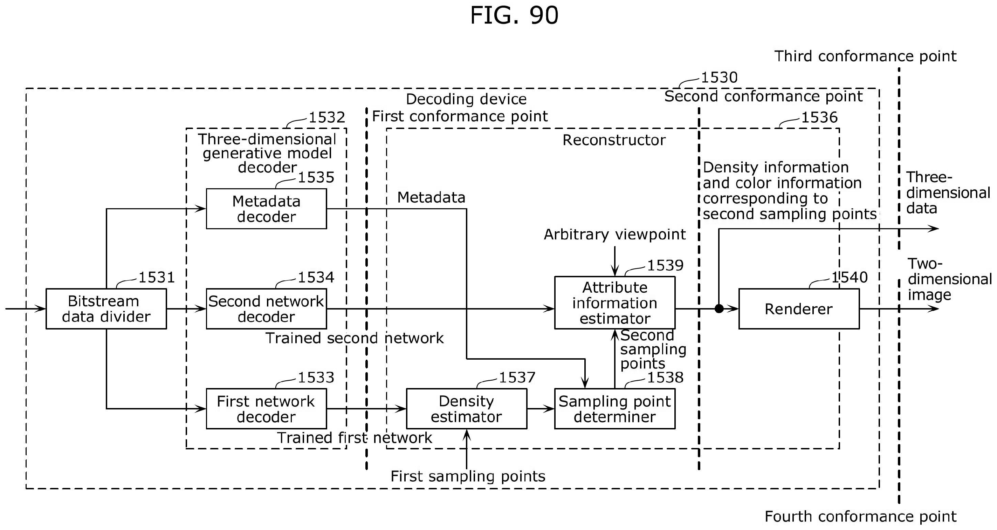

   FIG. 90 is a diagram for describing conformance points in Embodiment 3.
[FIG. 91]

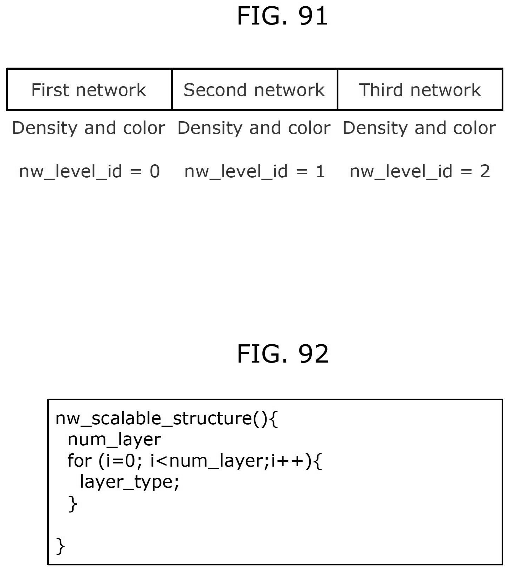

   FIG. 91 is a diagram illustrating an example of a bitstream including a plurality of networks in Embodiment 3.
[FIG. 92]
   FIG. 92 is a diagram illustrating an example of syntax of a layer structure of a plurality of networks in Embodiment 3.
[FIG. 93]

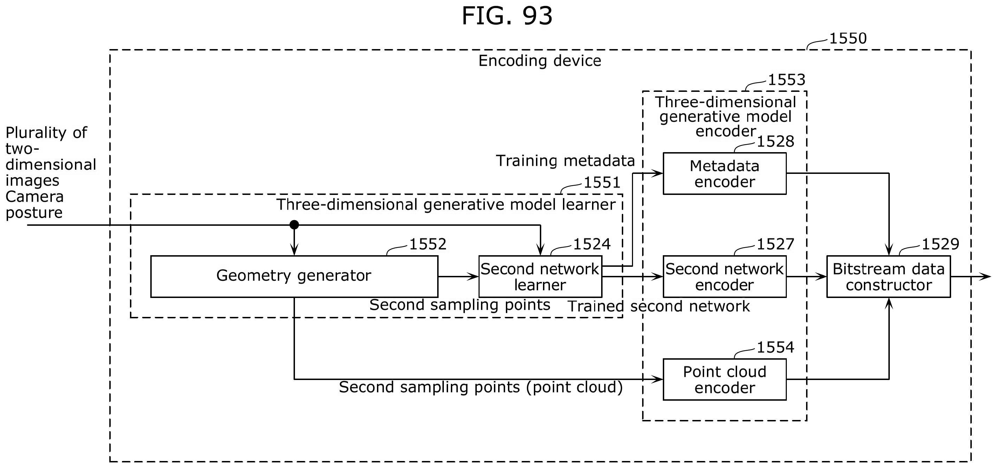

   FIG. 93 is a block diagram illustrating an example of a configuration of a variation of an encoding device in Embodiment 3.
[FIG. 94]

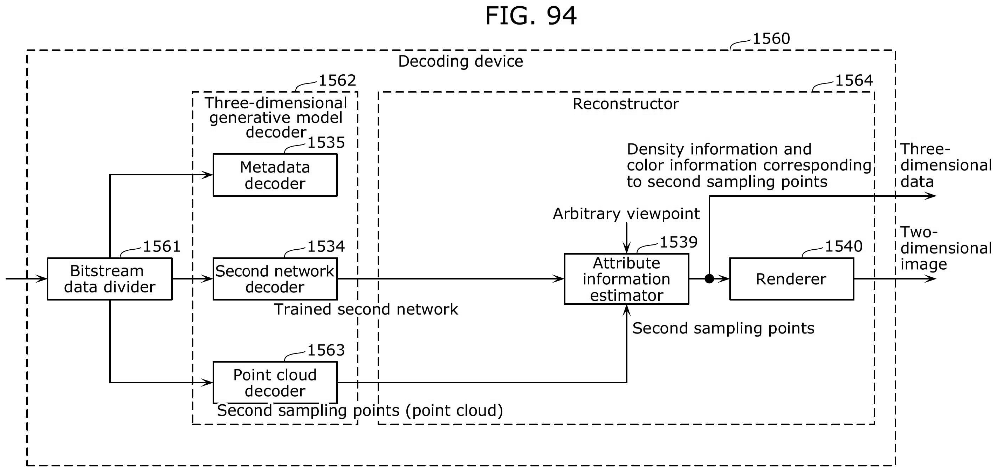

   FIG. 94 is a block diagram illustrating an example of a configuration of a variation of a decoding device in Embodiment 3.
[FIG. 95]

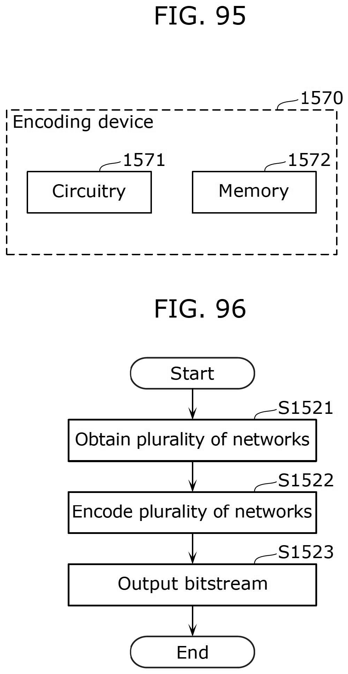

   FIG. 95 is a diagram illustrating an example of a configuration of an encoding device in Embodiment 3.
[FIG. 96]
   FIG. 96 is a flowchart illustrating a first example of an encoding method performed by the encoding device in Embodiment 3.
[FIG. 97]

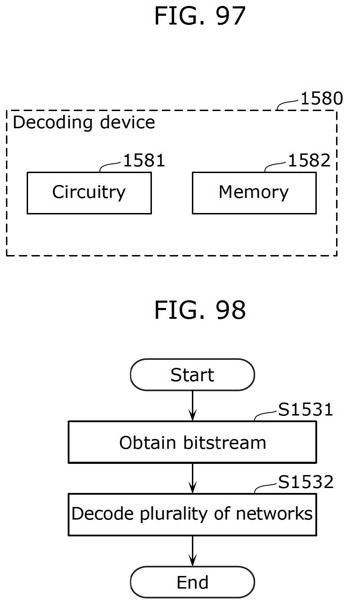

   FIG. 97 is a diagram illustrating an example of a configuration of a decoding device in Embodiment 3.
[FIG. 98]
   FIG. 98 is a flowchart illustrating a first example of a decoding method performed by the decoding device in Embodiment 3.
[FIG. 99]

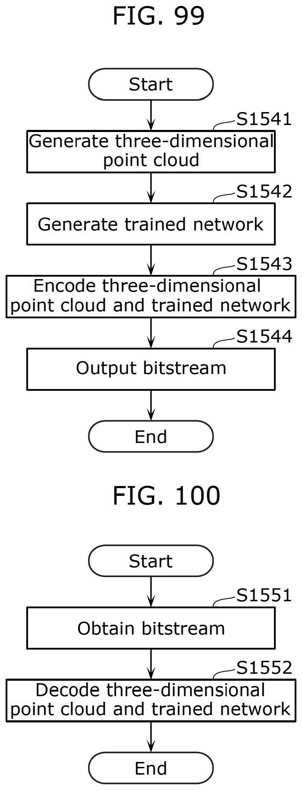

   FIG. 99 is a flowchart illustrating a second example of an encoding method performed by the encoding device in Embodiment 3.
[FIG. 100]
   FIG. 100 is a flowchart illustrating a second example of a decoding method performed by the decoding device in Embodiment 3.
[FIG. 101]

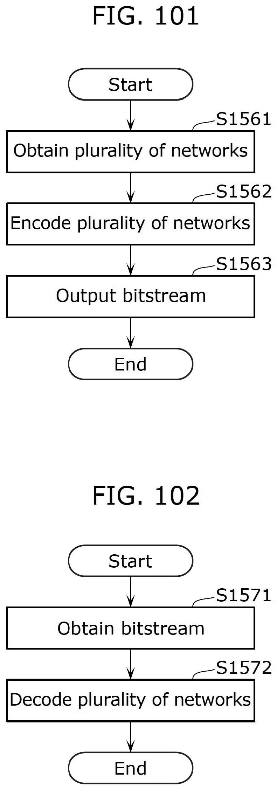

   FIG. 101 is a flowchart illustrating a third example of an encoding method performed by the encoding device in Embodiment 3.
[FIG. 102]
   FIG. 102 is a flowchart illustrating a third example of a decoding method performed by the decoding device in Embodiment 3.
[FIG. 103]

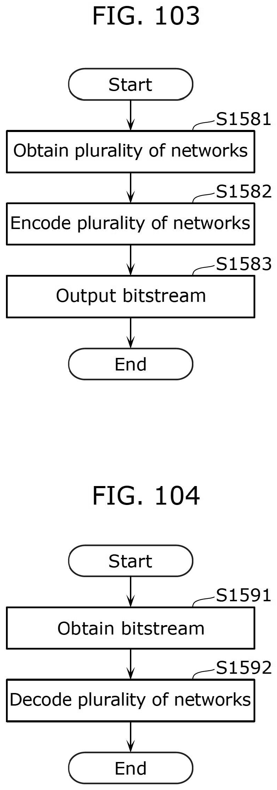

   FIG. 103 is a flowchart illustrating a fourth example of an encoding method performed by the encoding device in Embodiment 3.
[FIG. 104]
   FIG. 104 is a flowchart illustrating a fourth example of a decoding method performed by the decoding device in Embodiment 3.

### [Description of Embodiments]

An encoding device according to a first aspect of the present disclosure includes circuitry and memory coupled to the circuitry. In operation, the circuitry: obtains a plurality of networks included in a three-dimensional data generative model, the plurality of networks including a first network and a second network; encodes the plurality of networks; and outputs a bitstream including the plurality of networks encoded, by storing, in each of a data unit of the first network and a data unit of the second network, at least one of a density network for outputting density information or a color network for outputting color information, the density network and the color network being networks obtained as a result of learning.

For this reason, the encoding device can output a bitstream that includes encoded data obtained by encoding a plurality of networks included in a three-dimensional generative model. Therefore, a reduction in the storage capacity for the three-dimensional data or a reduction in the transmission amount of the three-dimensional data can be realized.

An encoding device according to a second aspect of the present disclosure is the encoding device according to the first aspect, in which, a density network for outputting density information for first sampling points is stored in the data unit of the first network, and a density network for outputting density information for second sampling points and a color network for outputting color information for the second sampling points are stored in the data unit of the second network.

Accordingly, a decoding device that has obtained the bitstream can reproduce and output three-dimensional data or two-dimensional data for second sampling data, from the density network and color network for the second sampling points.

An encoding device according to a third aspect of the present disclosure is the encoding device according to the first aspect, in which, a density network for outputting density information for first sampling points and a color network for outputting color information for the first sampling points are stored in the data unit of the first network, and a density network for outputting density information for second sampling points and a color network for outputting color information for the second sampling points are stored in the data unit of the second network.

Accordingly, a decoding device that has obtained the bitstream can reproduce and output three-dimensional data or two-dimensional data for first sampling data, from the density network and color network for the first sampling points. Furthermore, a decoding device that has obtained the bitstream can reproduce and output three-dimensional data or two-dimensional data for second sampling data, from the density network and color network for the second sampling points.

An encoding device according to a fourth aspect of the present disclosure is the encoding device according to the first aspect, in which: the plurality of networks further include a third network; a density network for outputting density information for first sampling points is stored in the data unit of the first network; a density network for outputting density information for second sampling points and a color network for outputting color information for the second sampling points are stored in the data unit of the second network; and the density network for outputting the density information for the second sampling points and a reflectance network for outputting reflectance information for the second sampling points are stored in a data unit of the third network.

Accordingly, a decoding device that has obtained the bitstream can reproduce and output three-dimensional data or two-dimensional data for second sampling data, from the density network, color network, and reflectance network for the second sampling points.

In an encoding device according to a fifth aspect of the present disclosure, the plurality of networks further include a third network; a density network for outputting density information for first sampling points is stored in the data unit of the first network; a density network for outputting density information for second sampling points is stored in the data unit of the second network; and a density network for outputting density information for third sampling points and a color network for outputting color information for the third sampling points are stored in a data unit of the third network.

Accordingly, a decoding device that has obtained the bitstream can reproduce and output three-dimensional data or two-dimensional data for third sampling data, from the density network and color network for the denser third sampling points.

An encoding device according to a sixth aspect of the present disclosure is the encoding device according to the first aspect, in which: the plurality of networks further include a third network; a density network for outputting density information for first sampling points and a color network for outputting color information for the first sampling points are stored in the data unit of the first network; a density network for outputting density information for second sampling points and a color network for outputting color information for the second sampling points are stored in the data unit of the second network; and a density network for outputting density information for third sampling points and a color network for outputting color information for the third sampling points are stored in a data unit of the third network.

Accordingly, a decoding device that has obtained the bitstream can reproduce and output three-dimensional data or two-dimensional data for first sampling data, from the density network and color network for the first sampling points. Furthermore, a decoding device that has obtained the bitstream can reproduce and output three-dimensional data or two-dimensional data for second sampling data, from the density network and color network for the second sampling points. Furthermore, a decoding device that has obtained the bitstream can reproduce and output three-dimensional data or two-dimensional data for third sampling data, from the density network and color network for the third sampling points.

An encoding device according to a seventh aspect of the present disclosure is the encoding device according to any one of the second to sixth aspects, in which: the bitstream further includes at least one of a first conformance point, a second conformance point, a third conformance point, or a fourth conformance point; the first conformance point indicates that a decoding device is capable of executing processing for the plurality of networks decoded by the decoding device; the second conformance point indicates that the decoding device is capable of executing processing for at least one of the density information for the second sampling points and the color information for the second sampling points; the third conformance point indicates that the decoding device is capable of executing processing for three-dimensional data generated based on the first network and the second network; and the fourth conformance point indicates that the decoding device is capable of executing processing for a two-dimensional image generated based on the first network and the second network.

For this reason, a device that has obtained the bitstream can determine data capable of being outputted based on the bitstream or data capable of being outputted by a decoding device, by referring to conformance points included in the bitstream, and thus the device can determine data that can be outputted.

An encoding device according to an eighth aspect of the present disclosure is the encoding device according to any one of the first to seventh aspects, in which a header of the data unit of the first network includes first hierarchical level information indicating a hierarchical level of the first network, and a header of the data unit of the second network includes second hierarchical level information indicating a hierarchical level of the second network.

A decoding device according to a ninth aspect of the present disclosure includes circuitry and memory coupled to the circuitry. In operation, the circuitry: obtains a bitstream including a plurality of networks that are encoded and included in a three-dimensional data generative model, the plurality of networks including a first network and a second network, wherein at least one of a density network for outputting density information or a color network for outputting color information is stored in each of a data unit of the first network and a data unit of the second network, the density network and the color network being networks obtained as a result of learning; and decodes the plurality of networks, based on the bitstream.

For this reason, the decoding device can appropriately decode the bitstream for which reduction in transmission amount has been realized.

A decoding device according to a tenth aspect of the present disclosure is the decoding device according to the ninth aspect, in which, a density network for outputting density information for first sampling points is stored in the data unit of the first network, and a density network for outputting density information for second sampling points and a color network for outputting color information for the second sampling points are stored in the data unit of the second network.

Accordingly, a decoding device that has obtained the bitstream can reproduce and output three-dimensional data or two-dimensional data for second sampling data, from the density network and color network for the second sampling points.

A decoding device according to an eleventh aspect of the present disclosure is the decoding device according to the ninth aspect, in which, a density network for outputting density information for first sampling points and a color network for outputting color information for the first sampling points are stored in the data unit of the first network, and a density network for outputting density information for second sampling points and a color network for outputting color information for the second sampling points are stored in the data unit of the second network.

Accordingly, a decoding device that has obtained the bitstream can reproduce and output three-dimensional data or two-dimensional data for first sampling data, from the density network and color network for the first sampling points. Furthermore, a decoding device that has obtained the bitstream can reproduce and output three-dimensional data or two-dimensional data for second sampling data, from the density network and color network for the second sampling points.

A decoding device according to a twelfth aspect of the present disclosure is the decoding device according to the ninth aspect, in which: the plurality of networks further include a third network; a density network for outputting density information for first sampling points is stored in the data unit of the first network; a density network for outputting density information for second sampling points and a color network for outputting color information for the second sampling points are stored in the data unit of the second network; and the density network for outputting the density information for the second sampling points and a reflectance network for outputting reflectance information for the second sampling points are stored in a data unit of the third network.

Accordingly, a decoding device that has obtained the bitstream can reproduce and output three-dimensional data or two-dimensional data for second sampling data, from the density network, color network, and reflectance network for the second sampling points.

A decoding device according to a thirteenth aspect of the present disclosure is the decoding device according to the ninth aspect, in which: the plurality of networks further include a third network; a density network for outputting density information for first sampling points is stored in the data unit of the first network; a density network for outputting density information for second sampling points is stored in the data unit of the second network; and a density network for outputting density information for third sampling points and a color network for outputting color information for the third sampling points are stored in a data unit of the third network.

Accordingly, a decoding device that has obtained the bitstream can reproduce and output three-dimensional data or two-dimensional data for third sampling data, from the density network and color network for the denser third sampling points.

A decoding device according to a fourteenth aspect of the present disclosure is the decoding device according to the ninth aspect, in which: the plurality of networks further include a third network; a density network for outputting density information for first sampling points and a color network for outputting color information for the first sampling points are stored in the data unit of the first network; a density network for outputting density information for second sampling points and a color network for outputting color information for the second sampling points are stored in the data unit of the second network; and a density network for outputting density information for third sampling points and a color network for outputting color information for the third sampling points are stored in a data unit of the third network.

Accordingly, a decoding device that has obtained the bitstream can reproduce and output three-dimensional data or two-dimensional data for first sampling data, from the density network and color network for the first sampling points. Furthermore, a decoding device that has obtained the bitstream can reproduce and output three-dimensional data or two-dimensional data for second sampling data, from the density network and color network for the second sampling points. Furthermore, a decoding device that has obtained the bitstream can reproduce and output three-dimensional data or two-dimensional data for third sampling data, from the density network and color network for the third sampling points.

A decoding device according to a fifteenth aspect of the present disclosure is the decoding device according to any one of the tenth to fourteenth aspects, in which: the bitstream further includes at least one of a first conformance point, a second conformance point, a third conformance point, or a fourth conformance point; the first conformance point indicates that the decoding device is capable of executing processing for the plurality of networks decoded by the decoding device; the second conformance point indicates that the decoding device is capable of executing processing for at least one of the density information for the second sampling points and the color information for the second sampling points; the third conformance point indicates that the decoding device is capable of executing processing for three-dimensional data generated based on the first network and the second network; and the fourth conformance point indicates that the decoding device is capable of executing processing for a two-dimensional image generated based on the first network and the second network.

For this reason, a device that has obtained the bitstream can determine data capable of being outputted based on the bitstream or data capable of being outputted by a decoding device, by referring to conformance points included in the bitstream, and thus the device can determine data that can be outputted.

A decoding device according to a sixteenth aspect of the present disclosure is the decoding device according to any one of the ninth to fifteenth aspects, in which, a header of the data unit of the first network includes first hierarchical level information indicating a hierarchical level of the first network, and a header of the data unit of the second network includes second hierarchical level information indicating a hierarchical level of the second network.

An encoding method according to a seventeenth aspect of the present disclosure is an encoding method to be executed by an encoding device. The encoding method includes: obtaining a plurality of networks included in a three-dimensional data generative model, the plurality of networks including a first network and a second network; encoding the plurality of networks; and outputting a bitstream including the plurality of networks encoded, by storing, in each of a data unit of the first network and a data unit of the second network, at least one of a density network for outputting density information or a color network for outputting color information, the density network and the color network being networks obtained as a result of learning.

For this reason, it becomes possible to output a bitstream that includes encoded data obtained by encoding a plurality of networks included in a three-dimensional generative model. Therefore, a reduction in the storage capacity for the three-dimensional data or a reduction in the transmission amount of the three-dimensional data can be realized.

A decoding method according to an eighteenth aspect of the present disclosure is a decoding method to be executed by a decoding device. The decoding method includes: obtaining a bitstream including a plurality of networks that are encoded and included in a three-dimensional data generative model, the plurality of networks include a first network and a second network, wherein at least one of a density network for outputting density information or a color network for outputting color information is stored in each of a data unit of the first network and a data unit of the second network, the density network and the color network being networks obtained as a result of learning; and decoding the plurality of networks, based on the bitstream..

For this reason, it is possible to appropriately decode the bitstream for which reduction in transmission amount has been realized.

It is to be noted that these general or specific aspects may be implemented as a system, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

### (Embodiment 1)

A configuration of a three-dimensional data encoding and decoding system according to this embodiment will be described.

FIG. 1 is a diagram illustrating a configuration example of the three-dimensional data encoding and decoding system according to this embodiment. As shown in FIG. 1, the three-dimensional data encoding and decoding system includes three-dimensional data encoding system 1001, three-dimensional data decoding system 1002, sensor terminal 1003, and external connector 1004.

Three-dimensional data encoding system 1001 generates encoded data or multiplexed data by encoding three-dimensional data. Three-dimensional data encoding system 1001 may be a three-dimensional data encoding device implemented by a single device or a system implemented by a plurality of devices. The three-dimensional data encoding device may include a part of a plurality of processors included in three-dimensional data encoding system 1001.

Three-dimensional data encoding system 1001 includes three-dimensional data generation system 1011, presenter 1012, encoder 1013, multiplexer 1014, input/output unit 1015, and controller 1016. Three-dimensional data generation system 1011 includes sensor information obtainer 1017, and three-dimensional data generator 1018.

Sensor information obtainer 1017 obtains a sensor signal from sensor terminal 1003, and outputs the sensor signal to three-dimensional data generator 1018. Three-dimensional data generator 1018 generates three-dimensional data from the sensor signal, and outputs the three-dimensional data to encoder 1013.

Presenter 1012 presents the sensor signal or three-dimensional data to a user. For example, presenter 1012 displays information or an image based on the sensor signal or three-dimensional data.

Encoder 1013 encodes (compresses) the three-dimensional data, and outputs the resulting encoded data, control information obtained in the course of the encoding, and other additional information to multiplexer 1014. The additional information includes the sensor signal, for example.

Multiplexer 1014 generates multiplexed data by multiplexing the encoded data, the control information, and the additional information input thereto from encoder 1013. A format of the multiplexed data is a file format for accumulation or a packet format for transmission, for example.

Input/output unit 1015 (a communication unit or interface, for example) outputs the multiplexed data to the outside. Alternatively, the multiplexed data may be accumulated in an accumulator, such as an internal memory. Controller 1016 (or an application executor) controls each processor. That is, controller 1016 controls the encoding, the multiplexing, or other processing. Controller 1016 may control demultiplexing, decoding, or presentation.

Note that the sensor signal may be input to encoder 1013 or multiplexer 1014. Alternatively, input/output unit 1015 may output the three-dimensional data or encoded data to the outside as it is.

A transmission signal (multiplexed data) output from three-dimensional data encoding system 1001 is input to three-dimensional data decoding system 1002 via external connector 1004.

Three-dimensional data decoding system 1002 generates three-dimensional data, by decoding the encoded data or multiplexed data. Note that three-dimensional data decoding system 1002 may be a three-dimensional data decoding device implemented by a single device or a system implemented by a plurality of devices. The three-dimensional data decoding device may include a part of a plurality of processors included in three-dimensional data decoding system 1002.

Three-dimensional data decoding system 1002 includes sensor information obtainer 1021, input/output unit 1022, demultiplexer 1023, decoder 1024, presenter 1025, user interface 1026, and controller 1027.

Sensor information obtainer 1021 obtains a sensor signal from sensor terminal 1003.

Input/output unit 1022 obtains the transmission signal, decodes the transmission signal into the multiplexed data (file format or packet), and outputs the multiplexed data to demultiplexer 1023.

Demultiplexer 1023 obtains the encoded data, the control information, and the additional information from the multiplexed data, and outputs the encoded data, the control information, and the additional information to decoder 1024.

Decoder 1024 reconstructs point cloud data by decoding the encoded data.

Presenter 1025 presents the point cloud data to a user. For example, presenter 1025 displays information or an image based on the point cloud data. User interface 1026 obtains an indication based on a manipulation by the user. Controller 1027 (or an application executor) controls each processor. That is, controller 1027 controls the demultiplexing, the decoding, the presentation, or other processing.

Note that input/output unit 1022 may obtain the point cloud data or encoded data as it is from the outside. Presenter 1025 may obtain additional information, such as a sensor signal, and present information based on the additional information. Presenter 1025 may perform a presentation based on an instruction from a user obtained on user interface 1026.

Sensor terminal 1003 generates a sensor signal, which is information obtained by a sensor. Sensor terminal 1003 is a terminal provided with a sensor or a camera. For example, sensor terminal 1003 is a mobile body such as an automobile, a flying object such as an aircraft, a mobile terminal, or a camera.

Sensor signals that can be obtained by sensor terminal 1003 includes a signal indicating (1) the distance between sensor terminal 1003 and an object or the reflectance of the object obtained by LiDAR, a millimeter wave radar, or an infrared sensor or (2) the distance between a camera and an object or the reflectance of the object obtained by a plurality of monocular camera images or a stereo-camera image, for example. The sensor signal may include the posture, orientation, gyro (angular velocity), position (GPS information or altitude), velocity, or acceleration of the sensor, for example. The sensor signal may include air temperature, air pressure, air humidity, or magnetism, for example.

External connector 1004 is implemented by an integrated circuit (LSI or IC), an external accumulator, communication with a cloud server via the Internet, or broadcasting, for example.

Next, point cloud data will be described. FIG. 2 is a diagram illustrating a configuration of point cloud data. FIG. 3 is a diagram illustrating a configuration example of a data file describing information of the point cloud data.

Point cloud data includes data on a plurality of points. Data on each point includes geometry information (three-dimensional coordinates) and attribute information associated with the geometry information. A set of a plurality of such points is referred to as a point cloud. For example, a point cloud indicates a three-dimensional shape of an object.

Geometry information (position), such as three-dimensional coordinates, may be referred to as geometry. Data on each point may include attribute information (attribute) on a plurality of types of attributes. A type of attribute is color or reflectance, for example.

One item of attribute information may be associated with one item of geometry information, or attribute information on a plurality of different types of attributes may be associated with one item of geometry information. Furthermore, items of attribute information on the same type of attribute may be associated with one item of geometry information.

The configuration example of a data file illustrated in FIG. 3 is an example in which geometry information and attribute information are associated with each other in a one-to-one relationship, and geometry information and attribute information on N points forming point cloud data are shown.

The geometry information is information on three axes, specifically, an x-axis, a y-axis, and a z-axis, for example. The attribute information is RGB color information, for example. A representative data file is ply file, for example.

Next, three-dimensional mesh data will be described. FIG. 4 is a diagram illustrating the configuration of three-dimensional mesh data. FIG. 5 is a diagram illustrating a configuration example of a data file describing information of the three-dimensional mesh data.

Three-dimensional mesh data is in a data format used in computer graphics (CG) to represent the three-dimensional shape of an object as a collection of face information items. Each face information item represents a polygon such as a triangle or a quadrangle. Three-dimensional mesh data is also referred to as polygons or a polygon mesh.

Three-dimensional mesh data is composed of a set of the following elements: a three-dimensional point cloud; vertexes, which are three-dimensional points in the three-dimensional point cloud; edges, each connecting two vertexes at three-dimensional points; and faces surrounded by edges. The three-dimensional point cloud is a set of points that include geometry information in a three-dimensional space and attribute information corresponding to the geometry information. It should be noted that a three-dimensional point may be referred to simply as a point.

A vertex may have attribute information, such as color information, reflectance, and normal vector, related to the corresponding three-dimensional point. The relationship between vertexes that form an edge or a face may be represented by information called connectivity. It should be noted that a vertex may be referred to as a position. Which side of a face is the outer side may be represented by the direction of the normal vector with respect to three-dimensional points. Furthermore, a vertex may have attribute information related to the corresponding faces.

An exemplary form of mesh data file is an object file. A mesh data file as shown in FIG. 5 indicates vertex information, including geometry information G (1) to G (N) of N vertexes that constitute a mesh, and attribute information A (1) to A (N) of the vertexes. In a mesh data file, vertex information does not necessarily need to include attribute information.

In addition, attribute information does not necessarily need to be in one-to-one correspondence with vertexes. The mesh data file in FIG. 5 illustrates an example of three-dimensional mesh data having M attribute information items A2.

Face information is represented as combinations of vertex indexes; n [1, 3, 4] indicates a triangular face formed by three vertexes with n = 1, n = 3, and n = 4.

Furthermore, m [2, 4, 6] indicates that attribute information items with m = 2, m = 4, and m = 6 in attribute information A2 correspond to the three vertexes, respectively. It should be noted that, although the example here illustrates three-vertex faces, the number of vertexes forming each face is not limited to three and may be any integer not smaller than three. For example, quadrangular faces involve four vertexes, and polygonal faces involve vertexes as many as the vertexes of the polygon.

Furthermore, attribute information A2 may be specified in a file separate from the mesh data file, and may include pointer information pointing to that file. For example, the attribute information may be stored in a two-dimensional attribute map file, and attribute information A2 in the mesh data file may indicate the name of the attribute map file and two-dimensional coordinates in the attribute map. Thus, attribute information A2 may be included in the mesh data file or may be specified in a file separate from the mesh data file. In either way, the attribute information of three-dimensional points can be specified.

Next, the three-dimensional model will be described. FIG. 6 is a diagram for describing a three-dimensional model.

A three-dimensional model is a model generated based on two-dimensional data or three-dimensional data.

Three-dimensional model learner 1031 generates a three-dimensional model. The three-dimensional model is, for example, a network model generated by learning two-dimensional data (two-dimensional images) or three-dimensional data (a point cloud or a mesh) and then using a technique such as neural network to learn a three-dimensional shape and attribute information corresponding to the three-dimensional shape.

Three-dimensional model learner 1031 may generate the three-dimensional model through learning with neural radiance fields (NeRF) based on two-dimensional images. Three-dimensional model learner 1031 may generate the three-dimensional model after performing photogrammetry on two-dimensional images to convert the two-dimensional images into three-dimensional data. The three-dimensional model may also be generated using three-dimensional data obtained by a sensor (distance sensor).

Three-dimensional model data, which constitutes the three-dimensional model, includes information indicating a network model structure, feature values, and other information. For example, the three-dimensional model data includes information on neural network components. The information on the components includes, for example, layers such as the input layer, intermediate layers, and the output layer, nodes in each layer, weighting factors for the nodes, and transformation functions for the nodes.

Three-dimensional model encoder 1032 may encode the three-dimensional model data and transmit the encoded three-dimensional model data.

Three-dimensional model decoder 1033 receives the transmitted encoded three-dimensional model data and decodes the encoded three-dimensional model data into the three-dimensional model.

Rendering reconstructor 1034 reconstructs (generates) two-dimensional data (a two-dimensional image) or three-dimensional data (a point cloud or a mesh) based on the decoded three-dimensional model. For example, for a NeRF-modeled three-dimensional model, rendering reconstructor 1034 obtains viewpoint position or line-of-sight vector information, generates rendered two-dimensional data (a two-dimensional image) based on the three-dimensional model and on the viewpoint position or the line-of-sight vector, and outputs the two-dimensional data. The generated two-dimensional data represents a two-dimensional image of a three-dimensional object viewed from the viewpoint position or viewed along the line of sight indicated by the line-of-sight vector. The three-dimensional object corresponds to the subject captured as the two- or three-dimensional data input to three-dimensional model learner 1031.

Next, types of three-dimensional data will be described. FIG. 7 is a diagram illustrating types of three-dimensional data. As illustrated in FIG. 7, three-dimensional data includes a static object and a dynamic object.

The static object is three-dimensional data at an arbitrary time (a time point). The dynamic object is three-dimensional data that varies with time. In the following, point cloud data associated with a time point will be referred to as a PCC frame or a frame. Furthermore, mesh data at an arbitrary time is referred to as a mesh frame or a frame.

The object may be a three-dimensional data whose range is limited to some extent, such as ordinary video data, or may be three-dimensional data whose range is not limited, such as map information.

There are points that have varying densities. There may be sparse point cloud data (sparse mesh data) and dense point cloud data (dense mesh data).

Hereinafter, each processing unit will be described in detail. Sensor information is obtained by various means, including a distance sensor such as LiDAR or a range finder, a stereo camera, or a combination of a plurality of monocular cameras. Three-dimensional data generator 1018 generates three-dimensional data based on the sensor information obtained by sensor information obtainer 1017. Three-dimensional data generator 1018 generates position information (geometry information) as point cloud data, and adds attribute information associated with the geometry information to the geometry information.

When generating geometry information or adding attribute information, three-dimensional data generator 1018 may process the point cloud data. For example, three-dimensional data generator 1018 may reduce the data amount by omitting a point cloud whose position coincides with the position of another point cloud. Three-dimensional data generator 1018 may also convert the geometry information (such as shifting, rotating, or normalizing the position) or may generate mesh data by processing the point cloud data. Furthermore, three-dimensional data generator 1018 may render the attribute information.

Note that, although FIG. 1 illustrates three-dimensional data generation system 1011 as being included in three-dimensional data encoding system 1001, three-dimensional data generation system 1011 may be independently provided outside three-dimensional data encoding system 1001.

Encoder 1013 generates encoded data by encoding three-dimensional data according to an encoding method previously defined. Encoding method includes G-PCC (an encoding method using geometry information), V-PCC (an encoding method using a video codec), Draco (a mesh encoding method), and V-DMC (a mesh encoding method). The encoding method is not limited to these methods, and may be a method for encoding a dynamic mesh or another method obtained by combining these methods, for example.

Decoder 1024 decodes the encoded data into the three-dimensional data using the encoding method previously defined.

Multiplexer 1014 generates multiplexed data by multiplexing the encoded data in an existing multiplexing method. The generated multiplexed data is transmitted or accumulated. Multiplexer 1014 multiplexes not only the encoded data of three-dimensional data but also another medium, such as a video, an audio, subtitles, an application, or a file, or reference time information. Multiplexer 1014 may further multiplex attribute information associated with sensor information or point cloud data.

Multiplexing schemes or file formats include ISOBMFF, MPEG-DASH, which is a transmission scheme based on ISOBMFF, MMT, MPEG-2 TS Systems, or RTP, for example.

Demultiplexer 1023 extracts encoded data of three-dimensional data, other media, time information and the like from the multiplexed data.

Input/output unit 1015 transmits the multiplexed data in a method suitable for the transmission medium or accumulation medium, such as broadcasting or communication. Input/output unit 1015 may communicate with another device over the Internet or communicate with an accumulator, such as a cloud server.

As a communication protocol, http, ftp, TCP, UDP or the like is used. The pull communication scheme or the push communication scheme can be used.

A wired transmission or a wireless transmission can be used. For the wired transmission, Ethernet (registered trademark), USB, RS-232C, HDMI (registered trademark), or a coaxial cable is used, for example. For the wireless transmission, wireless LAN, Wi-Fi (registered trademark), Bluetooth (registered trademark), or a millimeter wave is used, for example.

As a broadcasting scheme, DVB-T2, DVB-S2, DVB-C2, ATSC3.0, or ISDB-S3 is used, for example.

Next, processing for dividing (classifying) three-dimensional data into one or more three-dimensional data items will be described. FIG. 8 is a diagram for describing encoding processing of three-dimensional data. FIG. 9 is a diagram for describing decoding processing of three-dimensional data.

As shown in FIG. 8, data divider 1041 divides three-dimensional data according to one or more three-dimensional spaces to generate one or more three-dimensional data items resulting from dividing (i.e., one or more divided three-dimensional data items). Encoder 1042 may encode the one or more divided three-dimensional data items to generate encoded data. Data divider 1041 and encoder 1042 may be included in a single encoding device as components of the encoding device, or may be included in separate devices.

Each of the one or more three-dimensional spaces may be referred to as a tile or a space. A three-dimensional space is, for example, a bounding box. Furthermore, the divided three-dimensional data in each three-dimensional space may be referred to as a slice. A slice, which is a divided three-dimensional data item, includes a point cloud, a mesh, or a three-dimensional model, having geometry information (geometry) or attribute information (attribute). The slices are each encoded by encoder 1042 on an element basis and output as encoded data. The encoded data includes multiple encoded slices.

As shown in FIG. 9, in decoding processing, decoder 1051 decodes the encoded data into the one or more divided three-dimensional data items (one or more slices). Data merger 1052 merges the one or more divided three-dimensional data items to reconstruct (generate) the three-dimensional data. Decoder 1051 and data merger 1052 may be included in a single decoding device as components of the decoding device, or may be included in separate devices. The one or more divided three-dimensional data items decoded by decoder 1051 do not necessarily need to be merged. Decoder 1051 may decode a portion of the one or more divided three-dimensional data items based on a portion of the encoded data and output the decoded portion of the divided three-dimensional data items. In that case, the decoding device need not include data merger 1052.

FIG. 10 is a diagram two-dimensionally and schematically illustrating tiles and slices of three-dimensional data.

In encoding multiple slices, the encoding device may encode the slices using dependences between the slices or without using the dependences. If the slices are encoded without the use of the dependences, the encoding device can encode each slice independently, reducing the processing time by encoding multiple slices in parallel. Furthermore, if the slices are encoded without the use of the dependences, the decoding device can decode each slice independently, reducing the processing time by decoding multiple slices in parallel. In addition, the decoding device can reduce processing load through partial decoding, in which a portion of the slices are decoded.

If the slices are encoded using the dependences, the encoding device signals identifiers indicating the dependences and encodes the data in the order of dependence, starting from data depended on. If the slices are encoded using the dependences, the decoding device decodes the data in the order of dependence, starting from data depended on, based on the identifiers.

The three-dimensional data may be divided into any number of data items in any dividing method. The three-dimensional data may be divided by determining the shapes of objects and dividing the three-dimensional points on an object basis. Alternatively, the three-dimensional data may be divided based on the number of three-dimensional points allowed in each slice. That is, the upper limit may be set for the number of three-dimensional points per slice. Alternatively, the three-dimensional data may be divided by determining whether each three-dimensional point is included in any three-dimensional space (tile information) using map information or geometry information. Tile shapes may overlap.

Thus, dividing the three-dimensional data into divided three-dimensional data items as above allows adaptive encoding suitable for the content or objects, and allows parallel processing during decoding.

Now, the following describes a method of selecting three-dimensional data to be presented or transmitted from among multiple three-dimensional data items.

A server accumulates multiple three-dimensional data items for the same space. For example, the server accumulates point cloud data and mesh data for the same space. The server is an example of the encoding device. A terminal switches, based on the purpose intended on the terminal, three-dimensional data to be obtained from the server and presents the switched three-dimensional data. For example, the terminal may be capable of three-dimensional data analysis. In that case, the three-dimensional data to be presented on the terminal may be switched according to the purpose, such as analysis or viewing, based on a user operation. The terminal is an example of the decoding device.

Switching the three-dimensional data may involve switching between presenting a point cloud and presenting a mesh as the three-dimensional data. Similarly, switching the three-dimensional data may involve switching between transmitting a point cloud and transmitting a mesh as the three-dimensional data. For example, the terminal may transmit the result of a user's selection to the server, receive (download) three-dimensional data corresponding to the result of selection from the server, and present the received three-dimensional data. The three-dimensional data (a point cloud or a mesh) may be encoded or unencoded in the server. If the three-dimensional data is encoded, the terminal may receive the encoded three-dimensional data from the server, decode the received encoded three-dimensional data into three-dimensional data, and present the decoded three-dimensional data.

Next, the configuration of server 1070 and terminal 1090 will be described. FIG. 11 is a block diagram illustrating an example of the functional configuration of a server and a terminal.

Server 1070 includes data generator 1071, synchronizer 1075, point cloud encoder 1076, mesh encoder 1077, model encoder 1078, multiplexer 1079, and data extractor 1080.

Data generator 1071 generates three-dimensional data based on at least one of two-dimensional data or three-dimensional data. The three-dimensional data generated includes at least two of point cloud data, mesh data, or three-dimensional model data. Data generator 1071 includes point cloud generator 1072, mesh generator 1073, and model generator 1074. It is sufficient that data generator 1071 includes at least two of point cloud generator 1072, mesh generator 1073, or model generator 1074. Point cloud generator 1072 generates point cloud data based on at least one of two-dimensional data or three-dimensional data. Mesh generator 1073 generates mesh data based on at least one of two-dimensional data or three-dimensional data. Model generator 1074 generates three-dimensional model data by machine learning based on at least one of two-dimensional data or three-dimensional data.

The two-dimensional data input to data generator 1071 may be two-dimensional images obtained by a camera. The three-dimensional data input to data generator 1071 may be point cloud data obtained by, for example, a sensor, such as a LiDAR sensor, in space such as a construction site, a factory, or an office. For each point in the point cloud data of the three-dimensional data, data generator 1071 may generate attribute information, including color information corresponding to the point, using the two-dimensional images of the two-dimensional data. The three-dimensional data generated by data generator 1071 may be divided into data items corresponding to certain spaces. The point cloud data, the mesh data, and the three-dimensional model data may each be divided into data items corresponding to certain spaces.

Synchronizer 1075 synchronizes the spatial positions or the times (such as the playback times, decoding times, and obtainment times) of the point cloud data, the mesh data, and the three-dimensional model data generated by data generator 1071. The times of each data may include the playback time, decoding time, and obtainment time. It should be noted that, instead of synchronizing the point cloud data, the mesh data, and the three-dimensional model data, synchronizer 1075 may generate synchronization information for synchronizing these data items. It should also be noted that synchronizer 1075 may perform processing of synchronizing or generating synchronization information (a synchronization signal) for at least two types of three-dimensional data, i.e., at least two of the point cloud data, the mesh data, and the three-dimensional model data, generated by data generator 1071. Synchronizer 1075 thus does not necessarily need to perform the processing for synchronization (synchronization processing) for all the three types of three-dimensional data.

Point cloud encoder 1076 encodes the point cloud data subjected to the synchronization processing by synchronizer 1075. It should be noted that point cloud encoder 1076 does not necessarily need to encode the point cloud data. The point cloud data may be encoded in advance or may be encoded upon request from terminal 1090.

Mesh encoder 1077 encodes the mesh data subjected to the synchronization processing by synchronizer 1075.

Model encoder 1078 encodes the three-dimensional model data subjected to the synchronization processing by synchronizer 1075.

Multiplexer 1079 multiplexes the encoded point cloud data (an encoded point cloud), the encoded mesh data (an encoded mesh), the encoded three-dimensional model data, and the synchronization information, using a predetermined format or a predetermined multiplexing method. It should be noted that the multiplexing by multiplexer 1079 does not necessarily need to be performed. If the multiplexing is not performed, server 1070 need not include multiplexer 1079.

Data extractor 1080 extracts a portion of the multiplexed three-dimensional data corresponding to a request from terminal 1090 and transmits the extracted portion of the three-dimensional data to terminal 1090. It should be noted that the data extraction by data extractor 1080 does not necessarily need to be performed. If the data extraction is not performed, server 1070 need not include data extractor 1080. If the data extraction by data extractor 1080 is not performed, server 1070 may transmit the three-dimensional data multiplexed by multiplexer 1079 to terminal 1090. Furthermore, if the multiplexing by multiplexer 1079 is also not performed, server 1070 may transmit the encoded point cloud data (encoded point cloud), the encoded mesh data (encoded mesh), the encoded three-dimensional model data (encoded three-dimensional model), and the synchronization information to terminal 1090, or may transmit a bitstream that includes the encoded point cloud data (encoded point cloud), the encoded mesh data (encoded mesh), the encoded three-dimensional model data (encoded three-dimensional model), and the synchronization information to terminal 1090.

Terminal 1090 includes controller 1091, decoder 1092, and presenter 1093.

Controller 1091 transmits, to server 1070, a request for a portion of the three-dimensional data to be presented. Controller 1091 may identify the portion of the three-dimensional data based on a user operation received.

Decoder 1092 decodes the portion of the three-dimensional data based on a bitstream (encoded data) obtained from server 1070.

Presenter 1093 renders and presents the decoded portion of the three-dimensional data.

Data generator 1071 in FIG. 11 may be implemented by data generator 1110 illustrated in FIG. 12. FIG. 12 is a block diagram illustrating another example of a data generator of a server.

Data generator 1110 includes point cloud generator 1111, mesh generator 1112, and model generator 1113.

Point cloud generator 1111 has the same functions as point cloud generator 1072. Point cloud generator 1111 obtains point cloud data obtained by point cloud sensor 1101 and two-dimensional images obtained by camera 1102, and generates point cloud data based on the obtained point cloud data and two-dimensional images. The point cloud data generated by point cloud generator 1111 includes geometry information of each point, as well as attribute information (such as color information) extracted from the two-dimensional images and corresponding to each point indicated by the geometry information.

Mesh generator 1112 generates mesh data based on the point cloud data generated by point cloud generator 1111.

Model generator 1113 has the same functions as model generator 1074. Model generator 1113 obtains point cloud data obtained by point cloud sensor 1101 and two-dimensional images obtained by camera 1102, and generates three-dimensional model data through machine learning based on the point cloud data and the two-dimensional images.

Point cloud data, mesh data, and three-dimensional model data may each be data that is independently generated as described in FIG. 11. Mesh data may be generated from point cloud data as described in FIG. 12. It should be noted that point cloud data may be generated from mesh data.

A mesh may be generated from a point cloud; a point cloud may be generated from a mesh.

It should be noted that point cloud data, mesh data, and three-dimensional model data may be generated by server 1070, or may be generated by a sensor or by terminal 1090 equipped with a sensor. The sensor is, for example, point cloud sensor 1101 and camera 1102.

Next, the relationship between the three-dimensional space and the encoded data will be described. FIG. 13 is a diagram for describing the relationship between a three-dimensional space and encoded data.

As described above, three-dimensional data includes, for example, any of point cloud data, mesh data, and a three-dimensional model.

As shown in FIG. 13, three-dimensional data may be divided into three three-dimensional data items for three three-dimensional spaces (tiles or spaces). The encoding device encodes each of the three three-dimensional data items resulting from dividing, and transforms the encoded data into a data unit by adding a header. The header signals (includes) the identifier (Space_ID) of the space to which the encoded data of the data unit belongs, and the identifier (DataUnit_ID) of the data unit.

The data unit is further transformed into an encoding scheme unit by adding a header that includes the identifier of the data unit or information on the data unit length.

Next, syntax of an encoding scheme unit will be described. FIG. 14 is a diagram illustrating an example of syntax of an encoding scheme unit. FIG. 15 is a diagram illustrating an example of syntax of an encoded point cloud. FIG. 16 is a diagram illustrating an example of syntax of an encoded mesh. FIG. 17 is a diagram illustrating an example of syntax of an encoded three-dimensional model.

"unit_type" indicates the type of the data unit stored in the encoding scheme unit. This specifies the type of the data unit stored in the encoding scheme unit.

"length" indicates the length of the data unit.

"data()" indicates the body of the data unit.

In FIG. 15, "unit_type" of 0 indicates that the data unit is geometry information (geometry) of the encoded point cloud. "unit_type" of 1 indicates that the data unit is attribute information of the encoded point cloud. "unit_type" of 2 indicates that the data unit is metadata of the encoded point cloud.

In FIG. 16, "unit_type" of 0 indicates that the data unit is geometry information (geometry) of the encoded mesh. "unit_type" of 1 indicates that the data unit is attribute information of the encoded mesh. "unit_type" of 2 indicates that the data unit is metadata of the encoded mesh.

In FIG. 17, "unit_type" of 0 indicates that the data unit is element 1 of the encoded three-dimensional model. "unit_type" of 1 indicates that the data unit is element 2 of the encoded three-dimensional model. "unit_type" of 2 indicates that the data unit is metadata of the encoded three-dimensional model.

It should be noted that the syntax is not limited to the exemplary syntax configurations described above and shown in FIGS. 15 to 17. The syntax may use only some of the syntax elements, may include types (categories) not described above, or may have syntax elements reordered. For example, the syntax of an encoding scheme unit may have a structure common to multiple encoding schemes as in FIG. 14 and also indicate unit_type, length, and data() shown in FIGS. 15 to 17.

It should be noted that an encoding scheme unit may be provided with a further header indicating the type of the encoding scheme unit. Exemplary encoding scheme unit types include "point_cloud_codec_unit" indicating point cloud data, "mesh_codec_unit" indicating mesh data, and "model_codec_unit" indicating three-dimensional model data. This allows integrated handling of multiple encoding schemes.

FIG. 18 is a diagram illustrating an example of syntax of three-dimensional data information.

Syntax for storing multiple encoding schemes in a single format may indicate the number of three-dimensional data items (number_of_3Dformat) included in the format and the types of the three-dimensional data items (format_type), and may store data of each format. This allows integrated handling of multiple encoding schemes or three-dimensional data items, as well as identification of multiple encoding schemes or three-dimensional data items.

"3Ddata_info" indicates information on the format structure that stores multiple three-dimensional data items.

"number_of_3Dformat" indicates the number of three-dimensional formats used.

"format_type" indicates the types of the formats of the stored three-dimensional data. For example, the values of "format_type" and the formats corresponding to the values may be defined as follows. "format_type" of 0 indicates that the format of the stored three-dimensional data is point cloud data (point cloud). "format_type" of 1 indicates that the format of the stored three-dimensional data is mesh data (mesh). "format_type" of 2 indicates that the format of the stored three-dimensional data is G-PCC data (g-pcc). "format_type" of 3 indicates that the format of the stored three-dimensional data is V-DMC data (v-dmc). "format_type" of 4 indicates that the format of the stored three-dimensional data is three-dimensional model data (3Dmodel).

Next, the data structure of encoded data of a plurality of three-dimensional data will be described for each type of three-dimensional data. FIG. 19 is a diagram for describing the data structure of an encoded point cloud. FIG. 20 is a diagram for describing the data structure of an encoded mesh. FIG. 21 is a diagram for describing the data structure of an encoded three-dimensional model.

The encoding device divides each type of three-dimensional data into three-dimensional data items for the respective spatial regions, and encodes each of the three-dimensional data items resulting from dividing (i.e., divided three-dimensional data items) to generate an encoded data item.

Each encoded data item is provided with a header that stores at least one of "data_unit_id" and "space_id."

Here, "data_unit_id" is an identifier identifying the data unit within the encoded data and is unique within the encoded data. Furthermore, "space_id" indicates identification information of the spatial region. If "data_unit_id" or "space_id" is common among multiple types of three-dimensional data, the same values are indicated for the multiple types of three-dimensional data.

In the examples shown in FIGS. 19 to 21, space_id = 1 is assigned to all of the following data units: the data unit with data_unit_id = 0 in the encoded point cloud, the data unit with data_unit_id = 3 in the encoded mesh, and the data unit with data_unit_id = 0 in the encoded three-dimensional model. This means that these three-dimensional data units belong to the same three-dimensional space indicated by Space_ID #1.

The data, such as data and a header, may be included in a bitstream structure such as a data unit or an encoding scheme unit, or may be stored in a predetermined file format such as some type of box in ISOBMFF.

Next, three-dimensional space information will be described. FIG. 22 is a diagram two-dimensionally illustrating an example of a plurality of three-dimensional spaces. FIG. 23 is a diagram illustrating an example of a bounding box. FIG. 24 is a diagram illustrating an example of syntax of three-dimensional space information.

In the syntax of the three-dimensional spatial information, "3Dspace_info" is information indicating divided three-dimensional spaces. "3Dspace_info" can be used for partial decoding.

"number_of_space" indicates the number of divided three-dimensional spaces.

"space_id" indicates the identifier of each divided three-dimensional space.

The three-dimensional spatial information includes bounding box information, which is information for defining each bounding box as illustrated in FIG. 23.

The bounding box information includes "bounding_box_xyz" and "bounding_box_whd."

"bounding_box_xyz" indicates the coordinates of the reference point of the bounding box. In the example in FIG. 23, the coordinates are represented by the x, y, and z coordinate values (x0, y0, z0), for example.

"bounding_box_whd" indicates the size of the bounding box. In the example in FIG. 23, the size is represented by the width w, height h, and depth d (w0, h0, d0), for example.

In addition, the three-dimensional spatial information may include the identifiers of the data units of the respective encoded data types. It should be noted that the three-dimensional spatial information does not necessarily need to include these identifiers. That is, these identifiers do not necessarily need to be signaled.

"pointcloud_id" indicates the identifier of the data unit of the encoded point cloud for the space corresponding to "space_id."

"mesh_id" indicates the identifier of the data unit of the encoded mesh for the space corresponding to "space_id."

"model_id" indicates the identifier of the data unit of the encoded three-dimensional model for the space corresponding to "space_id."

It should be noted that the data units may have "data_unit_id" indicated but no "space_id" indicated. In that case, information on each space in the three-dimensional spatial information may store the identifiers of the data units of the respective encoded data types. In this manner, the three-dimensional spatial information may be associated with the divided three-dimensional encoded data items.

Furthermore, if the data units have "space_id" indicated, "space_id" may associate the three-dimensional spatial information with the identifiers of the data units of the respective encoded data types. In that case, the identifiers of the data units of the respective encoded data types need not be stored.

The three-dimensional spatial information may be standardized so that point cloud data and mesh data comply with a standard dividing method, a standard origin of each divided space, and a standard bounding box size. Alternatively, the three-dimensional spatial information may be set identically for both point cloud data and mesh data. Thus, the three-dimensional spatial information may be standardized or identical between different types of three-dimensional data. Standardizing the three-dimensional spatial information facilitates switching (e.g., switching the presentation or transmission) to a different type of three-dimensional data. In addition, in a format capable of integrated handling of multiple types of three-dimensional data, this eliminates the need to provide three-dimensional spatial information for each type of three-dimensional data. Rather, the same three-dimensional spatial information can be used for all the types of three-dimensional data, reducing the data amount of the three-dimensional spatial information.

It should be noted that, in addition to the three-dimensional spatial information of point cloud data and mesh data, the three-dimensional spatial information of a three-dimensional model may similarly be synchronized or standardized with the three-dimensional spatial information of other types of three-dimensional data.

Next, the relationship between the data structure of three-dimensional data and partial decoding will be described. FIG. 25 is a flowchart illustrating an example of partial decoding. FIG. 26 is a diagram illustrating an example of a three-dimensional spatial region that is to be the target of partial decoding. FIG. 27 is a diagram illustrating an example of the data structure of an encoded point cloud that is to undergo partial decoding. FIG. 28 is a diagram illustrating an example of the data structure of an encoded mesh that is to undergo partial decoding. FIG. 29 is a diagram illustrating an example of the data structure of an encoded three-dimensional model that is to undergo partial decoding.

In partial decoding, first, the decoding device determines a three-dimensional spatial region that is to be the target of partial decoding (S1001).

Next, the decoding device refers to three-dimensional spatial information (3Dspace_info) to identify a region that overlaps the target three-dimensional spatial region from bounding box information of three-dimensional spatial regions, and obtains space_id of the identified region (S1002).

Next, the decoding device obtains, from encoded data, data units having space_id obtained, and decodes the data units (S1003). Thus, the decoding device performs partial decoding for decoding a portion of three-dimensional data. In partial decoding, the decoding device decodes only a portion of three-dimensional data rather than the entire three-dimensional data.

For example, as shown in FIG. 26, the target three-dimensional spatial region for partial decoding may be the region indicated by thick lines. Then, space_id of the three-dimensional space to be obtained is determined to be #2 from the three-dimensional space information.

Then, as shown in FIGS. 27 to 29, data units corresponding to Space_id = #2 in the encoded data of multiple types of three-dimensional data are obtained and decoded.

It should be noted that, instead of space_id, the decoding device may obtain data unit IDs from the three-dimensional spatial information, and obtain data units having the obtained data unit IDs to perform partial decoding.

The above embodiment has illustrated point cloud data, mesh data, and three-dimensional model data as three-dimensional data representing a three-dimensional object. However, the three-dimensional data is not limited to such data. For example, the three-dimensional object may be represented by multiple sets, each including: line of sight information indicating a line of sight; and a two-dimensional image of the three-dimensional object viewed from the line of sight. That is, data including such sets may be regarded as a type of three-dimensional data. Furthermore, three-dimensional data in other formats may be used, such as Gaussian splatting data.

FIG. 30 is a diagram illustrating an example of the configuration of a decoding device. FIG. 31 is a flowchart illustrating an example of a decoding method performed by the decoding device.

Decoding device 1130 includes circuitry 1131 and memory 1132 coupled to circuitry 1131.

Circuitry 1131 performs the processes described below.

Circuitry 1131 performs obtaining encoded data that includes (i) encoding scheme information (format) indicating one of encoding schemes that include first data representing a three-dimensional object and second data representing the three-dimensional object and (ii) identification information indicating a three-dimensional space including the three-dimensional object (S1021). Next, circuitry 1131 performs decoding, based on the encoded data, the first data and the second data that correspond to the three-dimensional space (S1022). Next, circuitry 1131 performs generating first presentation data for presentation, by rendering the first data (S1023). Next, circuitry 1131 performs generating second presentation data for presentation, by rendering the second data (S1024). Next, circuitry 1131 performs presenting including switching from a presentation of the second presentation data generated to a presentation of the first presentation data (S1025). It should be noted that the first presentation data and the second presentation data are two-dimensional data or three-dimensional data generated by rendering reconstructor 1034.

Accordingly, first presentation data and second presentation data are generated based on first data and second data that correspond to the three-dimensional space, and presenting including switching from a presentation of the second presentation data to a presentation of the first presentation data is performed, and thus, in the switching between two data representing the three-dimensional object, the switching and presenting can be performed without causing spatial deviation. Therefore, the first presentation data and the second presentation data can be appropriately presented.

For example, the first data is point cloud data representing the three-dimensional object.

For this reason, presenting including switching from the presentation of the second presentation data to the presentation of the first presentation data that is based on point cloud data is performed, and thus, in the switching between the two data representing the three-dimensional object, the two data can be switched and presented without causing spatial deviation.

For example, the second data is mesh data representing the three-dimensional object.

For this reason, presenting including switching from the presentation of the second presentation data that is based on the mesh data to the presentation of the first presentation data is performed, and thus, in the switching between the two data representing the three-dimensional object, the two data can be switched and presented without causing spatial deviation.

For example, the second data is three-dimensional model data representing the three-dimensional object. The three-dimensional model data indicates a machine learning model obtainable through machine learning of sets of (i) lines of sight and (ii) two-dimensional images.

For this reason, presenting including switching from the presentation of the second presentation data that is based on the three-dimensional model data to the presentation of the first presentation data is performed, and thus, in the switching between the two data representing the three-dimensional object, the two data can be switched and presented without causing spatial deviation.

For example, the second data is a two-dimensional image of the three-dimensional object when viewed from a predetermined line-of-sight direction.

For this reason, presenting including switching from the presentation of the second presentation data that is based on the two-dimensional image to the presentation of the first presentation data is performed, and thus, in the switching between the two data representing the three-dimensional object, the two data can be switched and presented without causing spatial deviation.

For example, the circuitry further performs: obtaining, from a user, a switching request for switching presentation data. In the presenting, the circuitry performs the presenting including the switching from the presentation of the second presentation data to the presentation of the first presentation data, according to the switching request.

For this reason, switching can be performed at the timing specified by the user.

For example, the circuitry further performs: receiving, from a user, an operation for changing a mode of presentation. In the presenting, the circuitry changes the mode of presentation according to the operation, and performs the presenting including the switching from the presentation of the second presentation data to the presentation of the first presentation data, according to the change.

For this reason, switching can be performed at a timing that is in accordance with the operation by the user.

For example, in the obtaining, the circuitry obtains the encoded data from an encoding device via a communication network. In the presenting, the circuitry performs the presenting including the switching from the presentation of the second presentation data to the presentation of the first presentation data, according to a bandwidth of the communication network.

For this reason, switching can be performed according to the bandwidth of the communication network, and thus, the presenting including switching from a presentation of the second presentation data generated to a presentation of the first presentation data can be performed when the bandwidth of the communication network changes from being lower than a predetermined bandwidth to being higher than or equal to the predetermined band, for example.

For example, in the presenting, the circuitry performs the presenting including the switching from the presentation of the second presentation data to the presentation of the first presentation data, according to an available capacity of the circuitry.

For this reason, switching can be performed according to the available capacity of the circuitry, and thus, the presenting including switching from a presentation of the second presentation data generated to a presentation of the first presentation data can be performed when the available capacity of the circuitry changes from being lower than a predetermined capacity to being higher than or equal to the predetermined capacity, for example.

For example, the encoded data includes synchronization information for synchronizing a coordinate system of the first data and a coordinate system of the second data. In the presenting, the circuitry presents the first presentation data and the second presentation data, based on the synchronization information.

For this reason, the switching from the presentation of the second presentation data to the presentation of the first presentation data can be performed after synchronizing the coordinate systems of the first presentation data and the second presentation data. For this reason, in the switching between the two data representing the three-dimensional object, the two data can be switched and presented without causing spatial deviation.

For example, the circuitry further performs: determining whether a coordinate system of the first data and a coordinate system of the second data are to be synchronized. In the presenting, the circuitry presents the first presentation data and the second presentation data, based on the synchronization information, when the circuitry determines that the coordinate system of the first data and the coordinate system of the second data are to be synchronized.

For this reason, synchronization processing can be performed when required, and synchronization processing can be skipped when not required. Therefore, there is a possibility that the processing load can be reduced.

For example, each of the first data and the second data has a configuration that is common between the first data and the second data.

For this reason, the data amount of encoded data can be reduced. Therefore, communication capacity can be reduced.

For example, the encoded data includes space information for identifying the three-dimensional space in which the three-dimensional object is included. The circuitry further performs: obtaining a target region indicating one region of the three-dimensional space; and identifying, based on the space information, first overlapping data that is part of the first data and overlaps the target region. In the decoding, the circuitry decodes the first overlapping data identified.

For this reason, the volume of data to be obtained can be reduced by obtaining only the first overlapping data, for example. Therefore, communication capacity can be reduced. Furthermore, for example, it is possible to decode only the first overlapping data. Therefore, the processing load can be reduced.

Furthermore, circuitry 1131 may operate like the decoding method illustrated in the flowchart in FIG. 32. FIG. 32 is a flowchart illustrating another example of a decoding method performed by the decoding device.

Circuitry 1131 performs decoding encoding scheme information indicating a second encoding scheme that represents the three-dimensional object and is different from a first encoding scheme of the first data (S1031). Circuitry 1131 performs decoding second data of the second encoding scheme indicated by the encoding scheme information (S1032). The second data is to be used for generating second presentation data for presentation.

Accordingly, since second data of a second encoding scheme indicated by the encoding scheme information obtained by decoding is decoded, it is possible to obtain second data for generating the appropriate second presentation data for presentation.

FIG. 33 is a diagram illustrating an example of the configuration of an encoding device. FIG. 34 is a flowchart illustrating an example of an encoding method performed by the encoding device.

Encoding device 1140 includes circuitry 1141 and memory 1142 coupled to circuitry 1141.

Circuitry 1141 performs the processes described below.

Circuitry 1141 performs generating encoding scheme information indicating a second encoding scheme that represents the three-dimensional object and is different from a first encoding scheme of the first data (S1041). Circuitry 1141 performs generating second data of the second encoding scheme indicating the encoding scheme information (S1042). Circuitry 1141 performs generating a bitstream including the encoding scheme information and the second data (S1043). The second data is to be used in generating second presentation data for presentation.

Accordingly, since a bitstream including encoding scheme information and second data is generated, a decoding device that obtains the bitstream can obtain second data for generating the appropriate second presentation data for presentation.

### (Embodiment 2)

A method of generating a static image of a subject (three-dimensional object) viewed from an arbitrary viewpoint in a static space using a three-dimensional data generative model, which is a learning model obtained based on learning, will be described.

FIG. 35 is a diagram for describing a process in learning of a three-dimensional data generative model in Embodiment 2. FIG. 36 is a diagram for describing a process of generating a static image of a subject viewed from an arbitrary viewpoint using the three-dimensional data generative model in Embodiment 2.

An information processing device can generate a static image viewed from an arbitrary viewpoint in a static space by obtaining a three-dimensional data generative model by learning. For example, there is a three-dimensional data generative model generated in the Neural Radiance Fields (NeRF) method.

In learning, the information processing device obtains training data including a viewpoint A image (correct value) obtained from arbitrary viewpoint A and viewpoint information (such as camera posture) of viewpoint A at the time when the image is obtained, for example. The viewpoint information may include viewpoint A and a line-of-sight direction from viewpoint A. Using evaluation function 1402, for example, the information processing device inputs the viewpoint information of the training data to three-dimensional data generative model 1401 and optimizes a parameter or the like of a network included in a three-dimensional data generative model in such a manner that the difference between a generated image from viewpoint A output from three-dimensional data generative model 1401 and the viewpoint A image, which is an input image corresponding to viewpoint A, is minimized. By performing this learning process using a plurality of items of training data corresponding to a plurality of different viewpoints, the information processing device can obtain a precise three-dimensional data generative model. The learning process is performed for training data corresponding to each of the plurality of viewpoints. That is, the same process as the learning process for viewpoint A is performed for each viewpoint.

In generation, when the information processing device inputs viewpoint information of viewpoint B, for example, to trained three-dimensional data generative model 1403, three-dimensional data generative model 1403 outputs a generated image from viewpoint B. When the information processing device inputs viewpoint information of viewpoint Z different from viewpoint B to trained three-dimensional data generative model 1403, three-dimensional data generative model 1403 outputs a generated image from viewpoint Z. The viewpoint information of viewpoint B may include viewpoint B and a line-of-sight direction from viewpoint B. The viewpoint information of viewpoint Z may include viewpoint Z and a line-of-sight direction from viewpoint Z.

By obtaining three-dimensional data generative model 1403 by learning as described above, a static image viewed from an arbitrary viewpoint in a static space can be generated. However, no moving image cannot be generated in this manner.

Note that although FIG. 36 illustrates an example of the three-dimensional data generative model that generates an image from a viewpoint when receiving viewpoint information, this is not intended to be limiting, the three-dimensional data generative model can output data in any form. For example, the three-dimensional data generative model may be a network model that outputs three-dimensional data of a target space obtained by learning in the form of point cloud data or mesh data. This allows the user to stereoscopically watch the target space in the form of three-dimensional data such as point cloud data or mesh data or to measure, using point cloud data or mesh data, a dimension or the like of an object in the target space output as three-dimensional data.

### [Example 1]

FIG. 37 is a diagram for describing a moving image generation method using a three-dimensional data generative model according to Example 1 in Embodiment 2. Note that although a configuration example of a device that encodes or decodes three-dimensional data generative models NNt0 to NNt5 generated corresponding to times t0 to t5 and a method therefor will be described in this example, this is not intended to be limiting, and this example may be applied to a device that encodes or decodes a three-dimensional data generative model at each time during any period and a method therefor.

In this example, a method of generating a moving image of a target object (subject) viewed from an arbitrary viewpoint using a three-dimensional data generative model will be described. According to this method, as illustrated in FIG. 37, for example, a static image of a target object viewed from an arbitrary viewpoint at each time can be generated by obtaining a three-dimensional data generative model corresponding to the time, and a moving image can be generated by arranging the plurality of generated static images in temporal order. More specifically, when generating a moving image from time t0 to time t5, a plurality of three-dimensional data generative models NNt0 to NNt5 corresponding to time t0 to t5 are generated by learning, and viewpoint information (such as camera posture) of viewpoint A for which a moving image is to be generated is input thereto. Then, three-dimensional data generative models NNt0 to NNt5 output generated images from viewpoint A at times t0 to t5, and a moving image from time t0 to time t5 of the target object viewed from viewpoint A can be generated by temporally connecting the generated images.

In this case, however, a plurality of three-dimensional data generative models corresponding to a plurality of times need to be held, so that an enormous storage capacity of a storage for storing the data of the plurality of three-dimensional data generative models or an enormous network bandwidth for transmitting the data of the plurality of three-dimensional data generative models over a network is required. Thus, the data size may be reduced by encoding the plurality of three-dimensional data generative models corresponding to the plurality of times by using the Neural Network Coding (NNC) according to the Moving Picture Experts Group (MPEG) standard. In the present disclosure, a method of more efficiently compressing the data will be described.

The NNC is described in Non-Patent Literature 1.

FIG. 38 is a diagram illustrating a first example of a configuration of an encoding device according to Example 1 in Embodiment 2.

Encoding device 1420 includes three-dimensional data generative model obtainer 1421, buffer 1422, and network model encoder 1423.

Three-dimensional data generative model obtainer 1421 obtains training data at times t0 to t5, and generates three-dimensional data generative models NNt0 to NNt5 at times t0 to t5 by learning using the obtained training data at times t0 to t5. The training data includes a plurality of viewpoint images obtained by capturing a target object in one or more line-of-sight directions from one or more viewpoint positions and one or more items of viewpoint information indicating the one or more viewpoint positions and the one or more line-of-sight directions corresponding to the plurality of viewpoint images. The one or more items of viewpoint information may be the position and posture of the camera when taking each of the plurality of viewpoint images. Note that the training data is not limited to this and may include information obtained from another sensor, for example. For example, the training data may include point cloud data or a depth image at each time obtained using an LiDAR or TOF sensor. In this way, the precision of the three-dimensional data generative model obtained by learning can be improved.

Buffer 1422 stores the three-dimensional data generative model at time t generated by three-dimensional data generative model obtainer 1421. Buffer 1422 is implemented by a storage device, such as a memory. The three-dimensional data generative model at time t stored in buffer 1422 may be used as an initial model when three-dimensional data generative model obtainer 1421 obtains (generates) a three-dimensional data generative model after time t by learning. In this way, the precision of the three-dimensional data generative model after time t can be improved while reducing the learning time.

Note that buffer 1422 may store a plurality of three-dimensional data generative models corresponding to a plurality of times. In this way, for example, based on the plurality of three-dimensional data generative models stored in buffer 1422, one initial model may be generated by processing, such as averaging, for example. Three-dimensional data generative model obtainer 1421 can obtain precise three-dimensional data generative models by using this initial model to train a three-dimensional data generative model after time t. Note that when three-dimensional data generative model obtainer 1421 refers to no past three-dimensional data generative model in learning, encoding device 1420 need not include buffer 1422. In this way, the memory space used as buffer 1422 can be omitted.

Network model encoder 1423 encodes three-dimensional data generative models NNt0 to NNt5 obtained by three-dimensional data generative model obtainer 1421 and outputs a bitstream.

Note that the data size may be reduced by encoding data using the NNC according to the MPEG standard as a network model encoding method. That is, network model encoder 1423 encodes three-dimensional data generative models NNt0 to NNt5 using the NNC and adds the encoding result to the bitstream. In other words, network model encoder 1423 generates encoded data as an encoding result, and generates a bitstream including the encoded data.

Specifically, network model encoder 1423 first encodes three-dimensional data generative model NNt0 at time t0 using the NNC and adds the encoding result to the bitstream. Network model encoder 1423 then encodes three-dimensional data generative model NNt1 at time t1 using the NNC and adds the encoding result to the bitstream. In this way, network model encoder 1423 may reduce the code amount by sequentially encoding the three-dimensional data generative model at each time using the NNC and adding the encoding result to the bitstream.

Note that in this process, network model encoder 1423 may add, as metadata to the bitstream, time information indicating to which time the encoded three-dimensional data generative model corresponds. This allows the decoding device to know to which time the decoded three-dimensional data generative model corresponds by decoding and referring to the metadata included in the bitstream, and to properly generate a moving image of the target object from an arbitrary viewpoint.

Note that the metadata is not limited to the time information and may include information regarding obtaining (generation) of the training data or information required for the decoding device to generate a moving image.

For example, network model encoder 1423 may add, as the metadata, information regarding the frame rate of the camera at the time of obtaining (generating) the training data. This allows the decoding device to decode the frame rate of the generated moving image from the bitstream and to properly set the frame rate.

Furthermore, network model encoder 1423 may add, as the metadata to the bitstream, a frame number corresponding to each time instead of the time information, and link each frame number with the time information by using another parameter. For example, if network model encoder 1423 adds the time information and the frame rate of the leading frame as the metadata, and the decoding device calculates the time information of each frame from the metadata, the code amount of the time information of each frame can be omitted.

Furthermore, network model encoder 1423 may add, to the bitstream, the viewpoint information of the viewpoint image used for learning. This allows the decoding device to generate a moving image of high quality by preferentially selecting a viewpoint close to the viewpoint position corresponding to the image used for learning, for example. This is because the closer to the viewpoint position or time at the time of learning the viewpoint position or time is, the more likely the three-dimensional data generative model is to generate a viewpoint image of higher quality.

FIG. 39 is a diagram illustrating a first example of a configuration of a decoding device according to Example 1 in Embodiment 2.

Decoding device 1425 includes network model decoder 1426 and renderer 1427.

Network model decoder 1426 obtains a bitstream and decodes, based on the obtained bitstream, three-dimensional data generative models NNt0 to NNt5 at times t0 to t5 and metadata such as time information.

Using three-dimensional data generative models NNt0 to NNt5 and the metadata such as time information decoded by network model decoder 1426, renderer 1427 generates a moving image from viewpoint A based on viewpoint information of viewpoint A specified by a user, a system or the like. Specifically, renderer 1427 receives the viewpoint information of viewpoint A to three-dimensional data generative model NNt0 at time t0 and generates image IMGt0 from viewpoint A at time t0, and then receives the viewpoint information of viewpoint A to three-dimensional data generative model NNt1 at time t1 and generates image IMGt1 from viewpoint A at time t1. Renderer 1427 applies the generation process for the image at each of these times to each of times t2 to t5, thereby generating images IMGt2 to IMGt5 from viewpoint A at times t2 to t5. Renderer 1427 then generates a moving image from time t0 to time t5 of the target object viewed from viewpoint A using images IMGt0 to IMGt5 and the metadata such as the time information. The moving image may include images IMGt0 to IMGt5 and presentation time information for calculating a presentation time for images IMGt0 to IMGt5 based on times t0 to t5.

Note that the viewpoint information may be changed with time. For example, the viewpoint information of viewpoint A may be input to three-dimensional data generative models NNt0 to NNt3 at times t0 to t3, and the viewpoint information of viewpoint B may be input to three-dimensional data generative models NNt4 to NNt5 at times t4 to t5. In this case, renderer 1427 generates a plurality of images of the target object viewed from viewpoint A at times t0 to t3, and generates a plurality of images of the target object viewed from the viewpoint B at times t4 to t5. That is, renderer 1427 can generate a moving image of the target object that changes the viewpoint from viewpoint A to viewpoint B at time t4.

Furthermore, renderer 1427 does not necessarily need to generate a moving image and may generate a static image of specified viewpoint information at a specified time. Thus, the user can switch between the moving image generation and the static image generation according to the application.

Note that renderer 1427 is not limited to generating a moving image or static image from the three-dimensional data generative model. For example, renderer 1427 may generate point cloud data or mesh data from a three-dimensional data generative model and output the generated point cloud data or mesh data as dynamic point cloud data or dynamic mesh data. In this case, the user can watch dynamic three-dimensional data of a dynamic target object on a head mount display (HMD) or the like, and measure the amount of movement or the like of the target object using the dynamic three-dimensional data.

FIG. 40 is a diagram illustrating a second example of the configuration of the encoding device according to Example 1 in Embodiment 2.

Encoding device 1430 includes three-dimensional data generative model obtainer 1431, buffer 1432, difference calculator 1433, and network model encoder 1434.

Three-dimensional data generative model obtainer 1431 is the same as three-dimensional data generative model obtainer 1421 of encoding device 1420.

Buffer 1432 is basically the same as buffer 1422 of encoding device 1420 but differs from buffer 1422 in that buffer 1422 inputs a three-dimensional data generative model stored in a memory or the like to difference calculator 1433 as a reference three-dimensional data generative model.

Difference calculator 1433 calculates difference information indicating the difference between each of three-dimensional data generative models NNt0 to NNt5 at times t0 to t5 generated by three-dimensional data generative model obtainer 1431 and a three-dimensional data generative model (referred to as a reference three-dimensional data generative model, hereinafter) generated by three-dimensional data generative model obtainer 1431 before the time. Here, the difference information may include the difference in weight parameter of a node between the network models, for example. For example, difference calculator 1433 obtains three-dimensional data generative model NNt5 at time t5 from three-dimensional data generative model obtainer 1431, and obtains three-dimensional data generative model NNt4 at time t4 from buffer 1432 as a reference three-dimensional data generative model.

Difference calculator 1433 may use three-dimensional data generative models NNt5 and NNt4 to calculate the difference (amount of change) of the weight parameter of a node in the network model in three-dimensional data generative model NNt5 from the weight parameter of the node in the network model in three-dimensional data generative model NNt4, and input difference information indicating the difference to network model encoder 1434, for example. In this way, the difference information is encoded by network model encoder 1434. That is, encoding device 1430 may predict information regarding the network model in three-dimensional data generative model NNt5 from three-dimensional data generative model NNt4 and perform predictive encoding to encode the difference from the predicted value, thereby reducing the data amount. In such predictive encoding, for example, when the three-dimensional data generative model only slightly changes with time, such as when the target object is almost motionless, the value of the difference to be encoded is small, and therefore, the encoding efficiency can be improved. For example, encoding device 1430 may assume that RNNt0 = 0 and RNNtn = NNt(n-1) (n denotes an integer value from 1 to 5) and reduce the bit amount by predictive encoding using the three-dimensional data generative model at the previous time as a reference three-dimensional data generative model.

Note that although encoding device 1430 in the second example has been described as predictively encoding information regarding the network model in three-dimensional data generative model NNt5 from information regarding the network model in three-dimensional data generative model NNt4, this is not intended to be limiting. For example, encoding device 1430 may select a reference three-dimensional data generative model used for prediction from among one or more three-dimensional data generative models stored in buffer 1432 and use the selected three-dimensional data generative model for predictive encoding. In that case, to inform the decoding device of the selected three-dimensional data generative model, encoding device 1430 may add, to the bitstream, information (reference three-dimensional data generative model information) indicating the selected three-dimensional data generative model. In this way, encoding device 1430 can select an optimum reference three-dimensional data generative model from the viewpoint of encoding efficiency and improve the encoding efficiency. In addition, the decoding device can properly decode the bitstream with the improved encoding efficiency by decoding the reference three-dimensional data generative model information.

Note that when performing predictive encoding by referring to two or more three-dimensional data generative models stored in buffer 1432, encoding device 1430 may add, to the bitstream, information indicating the two or more reference three-dimensional data generative models. In this way, encoding device 1430 can improve the encoding efficiency of the predictive encoding by using two or more reference three-dimensional data generative models. In addition, the decoding device can properly decode the bitstream with the improved encoding efficiency.

Note that in the case where buffer 1432 stores no reference three-dimensional data generative model, for example, when encoding a three-dimensional data generative model placed first in data order (leading frame), encoding device 1430 may encode the three-dimensional data generative model to be processed without calculation of the difference from a predicted value and prediction (which will be referred to as intra prediction, hereinafter), or may encode the three-dimensional data generative model to be processed by calculating the difference from a predicted value set to 0. Furthermore, when time t is set as a random access point, encoding device 1430 may encode the three-dimensional data generative model corresponding to time t by intra prediction, or may encode the three-dimensional data generative model corresponding to time t by calculating the difference from a predicted value set to 0. In this way, the decoding device can start decoding of the three-dimensional data generative model from the three-dimensional data generative model placed first in data order (leading frame) or the random access point and improve the functionality in reproduction.

Furthermore, a group of a plurality of three-dimensional data generative models (a plurality of frames) (referred to as a group of frames (GOF), hereinafter) may be defined, and the leading frame of the GOF may be encoded by intra prediction. In this way, the decoding device can randomly access the leading frame of the GOF and can improve the functionality, such as fast forward, by decoding the leading frame of the GOF.

Furthermore, encoding device 1430 may add, to the bitstream, permission information indicating whether predictive reference between GOFs is allowed. For example, when the bitstream includes permission information indicating that predictive reference between GOFs is prohibited, the decoding device can determine that a plurality of GOFs can be decoded in parallel. Furthermore, for example, if predictive reference between GOFs is allowed, the encoding efficiency can be improved.

Network model encoder 1434 is basically the same as network model encoder 1423 of encoding device 1420 but differs from network model encoder 1423 in that network model encoder 1434 encodes difference information d0 to d5 of three-dimensional data generative models NNt0 to NNt5 input from difference calculator 1433 before outputting the bitstream.

Note that although difference calculator 1433 and network model encoder 1434 have been described as being separate from each other in encoding device 1430, this is not intended to be limiting, and for example, difference calculator 1433 may be included in network model encoder 1434. That is, network model encoder 1434 may perform the processing of difference calculator 1433.

Note that encoding device 1430 may add, to the bitstream, predictive encoding information indicating whether the three-dimensional data generative model is encoded by intra prediction or is predictively encoded using a reference three-dimensional data generative model (which will be referred to as inter prediction, hereinafter). In this way, the decoding device can properly determine whether to use the intra prediction or the inter prediction to decode the three-dimensional data generative model, by decoding the predictive encoding information.

FIG. 41 is a diagram illustrating a second example of the configuration of the decoding device in Example 1 in Embodiment 2.

Decoding device 1435 includes network model decoder 1436, adder 1437, buffer 1438, and renderer 1439.

Network model decoder 1436 obtains a bitstream and decodes, based on the obtained bitstream, difference information d0 to d5 of three-dimensional data generative models NNt0 to NNt5 at times t0 to t5 and metadata such as time information.

Adder 1437 sums difference information d0 to d5 of the three-dimensional data generative models corresponding to times t0 to t5 and reference three-dimensional data generative models RNNt0 to RNNt5 obtained from buffer 1438 on a time basis, thereby calculating three-dimensional data generative models NNt0 to NNt5. In this way, decoding device 1435 may assume that RNNt0 = 0 and RNNtn = NNt(n-1) (n denotes an integer value from 1 to 5) and perform predictive decoding using the three-dimensional data generative model at the previous time as a reference three-dimensional data generative model.

Note that although adder 1437 and network model decoder 1436 have been described as being separate from each other in decoding device 1435 in the second example, this is not intended to be limiting, and for example, adder 1437 may be included in network model decoder 1436. That is, network model decoder 1436 may perform the processing of adder 1437.

Note that in the case where buffer 1438 stores no reference three-dimensional data generative model, for example, when decoding a three-dimensional data generative model placed first in data order (leading frame), decoding device 1435 may perform decoding without adder 1437 summing the difference information and the reference three-dimensional data generative model and without prediction (which will be referred to as intra prediction, hereinafter), or may perform decoding by summing a predicted value set to 0 and the difference information. Furthermore, when time t is set as a random access point, decoding device 1435 may decode the three-dimensional data generative model corresponding to time t by intra prediction, or may decode the three-dimensional data generative model corresponding to time t by summing a predicted value set to 0 and the difference information. Furthermore, when the bitstream includes predictive encoding information indicating that the three-dimensional data generative model to be decoded is encoded by intra prediction, the three-dimensional data generative model may be decoded by intra prediction or may be decoded by summing a predicted value set to 0 and the difference information. In this way, decoding device 1435 can start decoding of the three-dimensional data generative model from the three-dimensional data generative model placed first in data order (leading frame), the random access point, or the three-dimensional data generative model encoded by intra prediction and improve the functionality in reproduction.

Note that although decoding device 1435 in the second example has been described as predictively decoding information regarding the network model in three-dimensional data generative model NNt5 from information regarding the network model in three-dimensional data generative model NNt4, this is not intended to be limiting. For example, decoding device 1435 may select a reference three-dimensional data generative model used for prediction from among one or more three-dimensional data generative models stored in buffer 1438 and use the selected three-dimensional data generative model for predictive decoding. In that case, decoding device 1435 may decode, from the bitstream, the information indicating the selected three-dimensional data generative model (reference three-dimensional data generative model information). In this way, from the bitstream generated by encoding device 1430 selecting an optimum reference three-dimensional data generative model from the viewpoint of encoding efficiency, decoding device 1435 can properly decode the bitstream with the improved encoding efficiency by decoding the reference three-dimensional data generative model information.

Note that when performing predictive decoding by referring to two or more three-dimensional data generative models stored in buffer 1438, decoding device 1435 may decode, from the bitstream, information indicating the two or more reference three-dimensional data generative models. In this way, decoding device 1435 can properly decode the bitstream with the improved encoding efficiency by using two or more reference three-dimensional data generative models.

Renderer 1439 is the same as renderer 1427 of decoding device 1425. Renderer 1439 does not necessarily need to generate a moving image and may generate a static image of specified viewpoint information at a specified time.

### [Example 2]

FIG. 42 is a diagram for describing a moving image generation method using an extended three-dimensional data generative model according to Example 2 in Embodiment 2. Note that although a configuration example of a device that encodes or decodes extended three-dimensional data generative model NNt0-2 and extended three-dimensional data generative model NNt3-5 generated corresponding to period t0 to t2 and period t3 to t5 from time t0 to time t5 and a method therefor will be described in this example, this is not intended to be limiting, and this example may be applied to a device that encodes or decodes an extended three-dimensional data generative model in an arbitrary period and a method therefor.

In this example, a method of generating a moving image of a target object (subject) viewed from an arbitrary viewpoint using a three-dimensional data generative model will be described. According to this method, as illustrated in FIG. 42, for example, a static image of a target object viewed from an arbitrary viewpoint at an arbitrary time in each period can be generated by obtaining a three-dimensional data generative model that can generate an image from an arbitrary viewpoint in a certain time range (period) (referred to as an extended three-dimensional data generative model, hereinafter), and a moving image can be generated by arranging the plurality of generated static images in temporal order. The extended three-dimensional data generative model is a three-dimensional data generative model generated in the NeRF or other method, for example, as with the three-dimensional data generative model in Example 1.

More specifically, when generating a moving image from time t0 to time t5, extended three-dimensional data generative model NNt0-2 capable of representation in a period from time t0 to time t2 and extended three-dimensional data generative model NNt3-5 capable of representation in a period from time t3 to time t5 are generated by learning, and viewpoint information (such as camera posture) of viewpoint A for which a moving image is to be generated is input to generated extended three-dimensional data generative models NNt0-2 and NNt3-5. Then, extended three-dimensional data generative models NNt0-2 and NNt3-5 output generated images from viewpoint A from time t0 to time t5, and a moving image from time t0 to time t5 of the target object viewed from viewpoint A can be generated by temporally connecting the generated images.

In this case, however, the extended three-dimensional data generative model corresponding to each period (each time zone) need to be held, so that an enormous storage capacity of a storage for storing the data of the extended three-dimensional data generative models or an enormous network bandwidth for transmitting the data of the extended three-dimensional data generative models over a network is required. Thus, the data size may be reduced by encoding the extended three-dimensional data generative model corresponding to each period by using the Neural Network Coding (NNC) according to the Moving Picture Experts Group (MPEG) standard. In the present disclosure, a method of more efficiently compressing the data will be described.

Note that with the configuration described above, the information processing device can generate any viewpoint image at any time in the period from time t0 to time t5. When obtaining extended three-dimensional data generative model NNt0-2, for example, the information processing device generates extended three-dimensional data generative model NNt0-2 by machine learning based on, as the training data, a plurality of viewpoint images captured at times t0, t1, and t2 and the camera postures corresponding to the plurality of viewpoints. When generating a moving image from viewpoint A, the information processing device may generate not only viewpoint images at times t0, t1, and t2 but also images from an arbitrary viewpoint at times t0.5 and t1.5 between times t0, t1, and t2. Time t0.5 is a time between times t0 and t1, and time t1.5 is a time between times t1 and t2.

In this way, the information processing device can generate images from an arbitrary viewpoint that correspond to not only the times to which images used for learning correspond but also to times shifted from the times to which images used for learning correspond, and therefore can generate a moving image from viewpoint A at a high frame rate.

Note that as training data for extended three-dimensional data generative model NNt0-2, the information processing device may perform learning using not only training data at times t0, t1, and t2 but also training data at time t3, for example. In this way, a viewpoint image of an arbitrary viewpoint after time t2, for example, an image from an arbitrary viewpoint at time t2.5, can be generated with high precision.

Furthermore, as training data for extended three-dimensional data generative model NNt3-5, the information processing device may perform learning using not only training data corresponding to times t3, t4, and t5 but also training data corresponding to times t2 and t6, for example. In this way, the information processing device can generate an image from an arbitrary viewpoint before time t3 or an image from an arbitrary viewpoint after time t5. Note that in the case of the example described above, for example, when generating a viewpoint image at time t2.5 between times t2 and t3 as the switching point of the extended three-dimensional data generative model at which extended three-dimensional data generative model NNt0-2 changes to extended three-dimensional data generative model NNt3-5, the information processing device may generate a viewpoint image at time t2.5 with each of extended three-dimensional data generative models NNt0-2 and NNt3-5 and generate, as a viewpoint image at time t2.5, an average image of the generated two viewpoint images at time t2.5. In this way, a precise viewpoint image at time t2.5 can be generated.

As described above, the information processing device can generate an image of a target object viewed from a specified viewpoint at a specified time by specifying, in an extended three-dimensional data generative model, a time in a period to which the extended three-dimensional data generative model corresponds and viewpoint information.

FIG. 43 is a diagram illustrating a first example of a configuration of an encoding device according to Example 2 in Embodiment 2.

Encoding device 1450 includes extended three-dimensional data generative model obtainer 1451, buffer 1452, and network model encoder 1453.

Extended three-dimensional data generative model obtainer 1451 obtains training data for each of period t0 to t2 and period t3 to t5 from time t0 to time t5, and generates, by learning using the obtained training data for each period, extended three-dimensional data generative model NNt0-2 for period t0 to t2 and extended three-dimensional data generative model NNt3-5 for period t3 to t5. The training data includes a plurality of viewpoint images obtained by capturing a target object in one or more line-of-sight directions from one or more viewpoint positions at each time t0 to t5 and one or more items of viewpoint information indicating the one or more viewpoint positions and the one or more line-of-sight directions corresponding to the plurality of viewpoint images. The one or more items of viewpoint information may be the position and posture of the camera when taking each of the plurality of viewpoint images. Note that the training data is not limited to this and may include information obtained from another sensor, for example. For example, the training data may include point cloud data or a depth image at each time obtained using an LiDAR or TOF sensor. In this way, the precision of the extended three-dimensional data generative model obtained by learning can be improved.

Buffer 1452 stores an extended three-dimensional data generative model for period tm-n from time tm (m denotes an integer) to time tn (n denotes an integer greater than m) generated by extended three-dimensional data generative model obtainer 1451. Buffer 1452 is implemented by a storage device, such as a memory. The extended three-dimensional data generative model for period tm-n stored in buffer 1452 may be used as an initial model when extended three-dimensional data generative model obtainer 1451 obtains (generates) an extended three-dimensional data generative model for a period after period tm-n by learning. In this way, the precision of the extended three-dimensional data generative model for a period after period tm-n can be improved while reducing the learning time.

Note that buffer 1452 may store a plurality of extended three-dimensional data generative models corresponding to a plurality of periods. In this way, for example, based on the plurality of extended three-dimensional data generative models stored in buffer 1452, one initial model may be generated by processing, such as averaging, for example. Extended three-dimensional data generative model obtainer 1451 can obtain a precise extended three-dimensional data generative models by using this initial model to train an extended three-dimensional data generative model for a period after period tm-n. Note that when extended three-dimensional data generative model obtainer 1451 refers to no past extended three-dimensional data generative model in learning, encoding device 1450 need not include buffer 1452. In this way, the memory space used as buffer 1452 can be omitted.

Network model encoder 1453 encodes three-dimensional data generative models NNt0-2 and NNt3-5 obtained by extended three-dimensional data generative model obtainer 1451 and outputs a bitstream.

Note that the data size may be reduced by encoding data using the NNC according to the MPEG standard as a network model encoding method, for example. That is, network model encoder 1453 encodes extended three-dimensional data generative models NNt0-2 and NNt3-5 using the NNC and adds the encoding result to the bitstream. In other words, network model encoder 1453 generates encoded data as an encoding result, and generates a bitstream including the encoded data.

Specifically, network model encoder 1453 first encodes extended three-dimensional data generative model NNt0-2 for period t0 to t2 using the NNC and adds the encoding result to the bitstream. Network model encoder 1453 then encodes extended three-dimensional data generative model NNt3-5 for period t3 to t5 using the NNC and adds the encoding result to the bitstream. In this way, network model encoder 1453 may reduce the code amount by sequentially encoding the extended three-dimensional data generative model for each period using the NNC and adding the encoding result to the bitstream.

Note that in this process, network model encoder 1453 may add, as metadata to the bitstream, time information indicating to which period the encoded extended three-dimensional data generative model corresponds. This allows the decoding device to know to which period the decoded extended three-dimensional data generative model corresponds by decoding and referring to the metadata included in the bitstream, and to properly generate a moving image of the target object from an arbitrary viewpoint.

Note that network model encoder 1453 may generate, as time information, information indicating for what period the extended three-dimensional data generative model can generate a viewpoint image, and add the generated time information to the bitstream as metadata. This allows the decoding device to know for what period the extended three-dimensional data generative model can generate a viewpoint image and to properly generate a moving image.

Note that the metadata is not limited to the time information and may include information regarding obtaining (generation) of the training data or information required for the decoding device to generate a moving image.

For example, network model encoder 1453 may add, as the metadata, information regarding the frame rate of the camera at the time of obtaining (generating) the training data. This allows the decoding device to decode the frame rate of the generated moving image from the bitstream and to properly set the frame rate.

Furthermore, network model encoder 1453 may add, as the metadata to the bitstream, a frame number corresponding to each period instead of the time information, and link each frame number with the time information by using another parameter. For example, if network model encoder 1453 adds the time information and the frame rate of the leading frame as the metadata, and the decoding device calculates the time information of each frame from the metadata, the code amount of the time information of each frame can be omitted.

Furthermore, network model encoder 1453 may add, to the bitstream, the viewpoint information of the viewpoint image used for learning or the time information indicating the time at which the viewpoint image is taken. This allows the decoding device to generate a moving image of high quality by preferentially selecting a viewpoint close to the viewpoint position corresponding to the image used for learning or a time close to the time corresponding to the image used for learning, for example. This is because the closer to the viewpoint position or time at the time of learning the viewpoint position or time is, the more likely the extended three-dimensional data generative model is to generate a viewpoint image of higher quality.

FIG. 44 is a diagram illustrating a first example of a configuration of a decoding device according to Example 2 in Embodiment 2.

Decoding device 1455 includes network model decoder 1456 and renderer 1457.

Network model decoder 1456 obtains a bitstream and decodes, based on the obtained bitstream, extended three-dimensional data generative model NNt0-2 for period t0 to t2, extended three-dimensional data generative model NNt3-5 for period t3 to t5, and metadata such as time information corresponding to these extended three-dimensional data generative models NNt0-2 and NNt3-5.

Using extended three-dimensional data generative models NNt0-2 and NNt3-5 and the metadata such as time information decoded by network model decoder 1456, renderer 1457 generates a moving image from viewpoint A based on viewpoint information of viewpoint A specified by a user, a system or the like. Specifically, renderer 1457 inputs the viewpoint information of viewpoint A and times in period t0 to t2 to extended three-dimensional data generative model NNt0-2 for period t0 to t2 to generate image IMGt0 from viewpoint A at time t0, image IMGt1 from viewpoint A at time t1, and image IMGt2 from viewpoint A at time t2. Renderer 1457 applies the generation process for the images for period t0 to t2 to extended three-dimensional data generative model NNt3-5 for period t3 to t5, thereby generating images IMGt3 to IMGt5 from viewpoint A at times t3 to t5. Renderer 1457 then generates a moving image from time t0 to time t5 of the target object viewed from viewpoint A using images IMGt0 to IMGt5 and the metadata such as the time information. The moving image may include images IMGt0 to IMGt5 and presentation time information for calculating a presentation time for images IMGt0 to IMGt5 based on times t0 to t5.

Note that the viewpoint information may be changed with time. For example, the viewpoint information of viewpoint A may be input to extended three-dimensional data generative model NNt0-2 for period t0 to t2, and the viewpoint information of viewpoint B may be input to extended three-dimensional data generative model NNt3-5 for period t3 to t5. In this way, renderer 1457 generates a plurality of images of the target object viewed from viewpoint A at times t0 to t2, and generates a plurality of images of the target object viewed from the viewpoint B at times t3 to t5. That is, renderer 1457 can generate a moving image of the target object that changes the viewpoint from viewpoint A to viewpoint B at time t3.

Furthermore, renderer 1457 does not necessarily need to generate a moving image and may generate a static image of specified viewpoint information at a specified time. Thus, the user can switch between the moving image generation and the static image generation according to the application.

Note that renderer 1457 is not limited to generating a moving image or static image from the extended three-dimensional data generative model. For example, renderer 1457 may generate, from an extended three-dimensional data generative model, point cloud data or mesh data for a period for which the extended three-dimensional data generative model is capable of representation and output the generated point cloud data or mesh data as dynamic point cloud data or dynamic mesh data. In this case, the user can watch dynamic three-dimensional data of a dynamic target object on a head mount display (HMD) or the like, and measure the amount of movement or the like of the target object by using the dynamic three-dimensional data.

FIG. 45 is a diagram illustrating a second example of the configuration of the encoding device according to Example 2 in Embodiment 2.

Encoding device 1460 includes extended three-dimensional data generative model obtainer 1461, buffer 1462, difference calculator 1463, and network model encoder 1464.

Extended three-dimensional data generative model obtainer 1461 is the same as extended three-dimensional data generative model obtainer 1451 of encoding device 1450.

Buffer 1462 is basically the same as buffer 1452 of encoding device 1450 but differs from buffer 1425 in that an extended three-dimensional data generative model stored in a memory or the like is input to difference calculator 1463 as a reference extended three-dimensional data generative model.

Difference calculator 1463 calculates difference information indicating the difference between each of extended three-dimensional data generative model NNt0-2 for period t0 to t2 and extended three-dimensional data generative model NNt3-5 for period t3 to t5 generated by extended three-dimensional data generative model obtainer 1461 and an extended three-dimensional data generative model (referred to as a reference extended three-dimensional data generative model, hereinafter) generated by extended three-dimensional data generative model obtainer 1461 before the period. Here, the difference information may include the difference in weight parameter of a node between the network models, for example. For example, difference calculator 1463 obtains extended three-dimensional data generative model NNt3-5 for period t3 to t5 from extended three-dimensional data generative model obtainer 1461, and obtains extended three-dimensional data generative model NNt0-2 for period t0 to t2 from buffer 1462 as a reference extended three-dimensional data generative model.

Difference calculator 1463 may use extended three-dimensional data generative models NNt3-5 and NNt0-2 to calculate the difference (amount of change) of the weight parameter of a node in the network model in extended three-dimensional data generative model NNt3-5 from the weight parameter of the node in the network model in extended three-dimensional data generative model NNt0-2, and input difference information indicating the difference to network model encoder 1464, for example. In this way, the difference information is encoded by network model encoder 1464. That is, encoding device 1460 may predict information regarding the network model in extended three-dimensional data generative model NNt3-5 from extended three-dimensional data generative model NNt0-2 and perform predictive encoding to encode the difference from the predicted value, thereby reducing the data amount. In such predictive encoding, for example, when the extended three-dimensional data generative model only slightly changes with time, such as when the target object is almost motionless, the value of the difference to be encoded is small, and therefore, the encoding efficiency can be improved. For example, encoding device 1460 may assume that RNNt0-2 = 0 and RNNt3-5 = NNt0-2 and reduce the bit amount by predictive encoding using the extended three-dimensional data generative model for the previous time zone as a reference extended three-dimensional data generative model.

Note that although encoding device 1460 in the second example has been described as predictively encoding information regarding the network model in extended three-dimensional data generative model NNt3-5 from information regarding the network model in extended three-dimensional data generative model NNt0-2, this is not intended to be limiting. For example, encoding device 1460 may select a reference extended three-dimensional data generative model used for prediction from among one or more extended three-dimensional data generative models stored in buffer 1462 and use the selected extended three-dimensional data generative model for predictive encoding. In that case, to inform the decoding device of the selected extended three-dimensional data generative model, encoding device 1460 may add, to the bitstream, information (reference extended three-dimensional data generative model information) indicating the selected extended three-dimensional data generative model. In this way, encoding device 1460 can select an optimum reference extended three-dimensional data generative model from the viewpoint of encoding efficiency and improve the encoding efficiency. In addition, the decoding device can properly decode the bitstream with the improved encoding efficiency by decoding the reference extended three-dimensional data generative model information.

Note that when performing predictive encoding by referring to two or more extended three-dimensional data generative models stored in buffer 1462, encoding device 1460 may add, to the bitstream, information indicating the two or more reference extended three-dimensional data generative models. In this way, encoding device 1460 can improve the encoding efficiency of the predictive encoding by using two or more reference extended three-dimensional data generative models. In addition, the decoding device can properly decode the bitstream with the improved encoding efficiency.

Note that in the case where buffer 1462 stores no reference extended three-dimensional data generative model, for example, when encoding an extended three-dimensional data generative model placed first in data order (leading frame), encoding device 1460 may encode the extended three-dimensional data generative model to be processed without calculation of the difference from a predicted value and prediction (which will be referred to as intra prediction, hereinafter), or may encode the extended three-dimensional data generative model to be processed by calculating the difference from a predicted value set to 0. Furthermore, when period tm-n is set as a random access point, encoding device 1460 may encode the extended three-dimensional data generative model corresponding to period tm-n by intra prediction, or may encode the extended three-dimensional data generative model corresponding to period tm-n by calculating the difference from a predicted value set to 0. In this way, the decoding device can start decoding of the extended three-dimensional data generative model from the extended three-dimensional data generative model placed first in data order (leading frame) or the random access point and improve the functionality in reproduction.

Furthermore, a group of a plurality of extended three-dimensional data generative models (a plurality of frames) (referred to as a group of frames (GOF), hereinafter) may be defined, and the leading frame of the GOF may be encoded by intra prediction. In this way, the decoding device can randomly access the leading frame of the GOF and can improve the functionality, such as fast forward, by decoding the leading frame of the GOF.

Furthermore, encoding device 1460 may add, to the bitstream, permission information indicating whether predictive reference between GOFs is allowed. For example, when the bitstream includes permission information indicating that predictive reference between GOFs is prohibited, the decoding device can determine that a plurality of GOFs can be decoded in parallel. Furthermore, for example, if predictive reference between GOFs is allowed, the encoding efficiency can be improved.

Network model encoder 1464 is basically the same as network model encoder 1453 of encoding device 1450 but differs from network model encoder 1453 in that network model encoder 1464 encodes difference information d0-2 and d3-5 of extended three-dimensional data generative models NNt0-2 and NNt3-5 input from difference calculator 1463 before outputting the bitstream.

Note that although difference calculator 1463 and network model encoder 1464 have been described as being separate from each other in encoding device 1460, this is not intended to be limiting, and for example, difference calculator 1463 may be included in network model encoder 1464. That is, network model encoder 1464 may perform the processing of difference calculator 1463.

Note that encoding device 1460 may add, to the bitstream, predictive encoding information indicating whether the extended three-dimensional data generative model is encoded by intra prediction or is predictively encoded using a reference extended three-dimensional data generative model (which will be referred to as inter prediction, hereinafter). In this way, the decoding device can properly determine whether to use the intra prediction or the inter prediction to decode the extended three-dimensional data generative model, by decoding the predictive encoding information.

FIG. 46 is a diagram illustrating a second example of the configuration of the decoding device in Example 2 in Embodiment 2.

Decoding device 1465 includes network model decoder 1466, adder 1467, buffer 1468, and renderer 1469.

Network model decoder 1466 obtains a bitstream and decodes, based on the obtained bitstream, difference information d0-2 and d3-5 of extended three-dimensional data generative model NNt0-2 for period t0 to t2 and extended three-dimensional data generative model NNt3-5 and metadata such as time information.

Adder 1467 sums difference information d0-2 and d3-5 of extended three-dimensional data generative models NNt0-2 and NNt3-5 corresponding to periods t0 to t2 and t3 to t5 and reference extended three-dimensional data generative models RNNt0-2 and RNNt3-5 obtained from buffer 1468 on a period basis, thereby calculating extended three-dimensional data generative models NNt0-2 and NNt3-5. In this way, decoding device 1465 may assume that RNNt0-2 = 0 and RNNt3-5 = NNt0-2 and perform predictive decoding using the extended three-dimensional data generative model for the previous period as a reference extended three-dimensional data generative model.

Note that although adder 1467 and network model decoder 1466 have been described as being separate from each other in decoding device 1465 in the second example, this is not intended to be limiting, and for example, adder 1467 may be included in network model decoder 1466. That is, network model decoder 1466 may perform the processing of adder 1467.

Note that in the case where buffer 1468 stores no reference extended three-dimensional data generative model, for example, when decoding an extended three-dimensional data generative model placed first in data order (leading frame), decoding device 1465 may perform decoding without adder 1467 summing the difference information and the reference extended three-dimensional data generative model and without prediction (which will be referred to as intra prediction, hereinafter), or may perform decoding by summing a predicted value set to 0 and the difference information. Furthermore, when period tm-n is set as a random access point, decoding device 1465 may decode the extended three-dimensional data generative model corresponding to period tm-n by intra prediction, or may decode the extended three-dimensional data generative model corresponding to period tm-n by summing a predicted value set to 0 and the difference information. Furthermore, when the bitstream includes predictive encoding information indicating that the extended three-dimensional data generative model to be decoded is encoded by intra prediction, the extended three-dimensional data generative model may be decoded by intra prediction or may be decoded by summing a predicted value set to 0 and the difference information. In this way, decoding device 1465 can start decoding of the extended three-dimensional data generative model from the extended three-dimensional data generative model placed first in data order (leading frame), the random access point, or the extended three-dimensional data generative model encoded by intra prediction and improve the functionality in reproduction.

Note that although decoding device 1465 in the second example has been described as predictively decoding information regarding the network model in extended three-dimensional data generative model NNt3-5 from information regarding the network model in extended three-dimensional data generative model NNt0-2, this is not intended to be limiting. For example, decoding device 1465 may select a reference extended three-dimensional data generative model used for prediction from among one or more extended three-dimensional data generative models stored in buffer 1468 and use the selected extended three-dimensional data generative model for predictive decoding. In that case, decoding device 1465 may decode, from the bitstream, the information indicating the selected extended three-dimensional data generative model (reference extended three-dimensional data generative model information). In this way, from the bitstream generated by encoding device 1460 selecting an optimum reference extended three-dimensional data generative model from the viewpoint of encoding efficiency, decoding device 1465 can properly decode the bitstream with the improved encoding efficiency by decoding the reference extended three-dimensional data generative model information.

Note that when performing predictive decoding by referring to two or more extended three-dimensional data generative models stored in buffer 1468, decoding device 1465 may decode, from the bitstream, information indicating the two or more reference extended three-dimensional data generative models. In this way, decoding device 1465 can properly decode the bitstream with the improved encoding efficiency by using two or more reference extended three-dimensional data generative models.

Renderer 1469 is the same as renderer 1427 of decoding device 1425. Renderer 1469 does not necessarily need to generate a moving image and may generate a static image of specified viewpoint information at a specified time.

### [Variations]

Note that encoding device 1460 may include, in the metadata added to the bitstream of the extended three-dimensional data generative model for period tm-n, information regarding the number of images that can be generated by the extended three-dimensional data generative model (that is, the maximum number of images). In this way, decoding device 1465 can know the number of images that can be generated by the decoded extended three-dimensional data generative model and, for example, properly set the frame rate of the generated moving image or calculate the number of frames of latency before the moving image is displayed.

Note that encoding device 1460 may add, as the time information added to the bitstream, information indicating in what unit of time the extended three-dimensional data generative model can generate a viewpoint image (that is, the minimum unit of time). For example, encoding device 1460 may add, as the time information to the bitstream, whether the viewpoint image can be generated in time units of msec or whether the viewpoint image can be generated in time units of µmsec. In this way, decoding device 1465 can know in what time units the viewpoint information is to be generated and accordingly can generate a moving image or three-dimensional data at a higher frame rate.

Furthermore, encoding device 1460 may add, to the metadata added to the bitstream of the extended three-dimensional data generative model for period tm-n, information concerning the learning of the extended three-dimensional data generative model. For example, if encoding device 1460 adds the time information or viewpoint information of the image used for learning to the bitstream as the metadata, decoding device 1465 can obtain information about the time or viewpoint at which the extended three-dimensional data generative model can generate a viewpoint image of high quality by decoding the metadata, and therefore can create a moving image of high quality.

Note that the length of the period of the viewpoint image that can be generated by the extended three-dimensional data generative model may be dynamically changed as illustrated in FIG. 47. Specifically, the length of the period may be changed with the subject. FIG. 47 is a diagram for describing a moving image generation method using an extended three-dimensional data generative model according to a variation of Embodiment 2.

For a scene in which many of the subjects are static objects (a scene in which the number of the static objects of the plurality of subjects is equal to or greater than a first number or a scene in which the volume (area) occupied by the static objects of the plurality of subjects is equal to or greater than a first quantity), encoding device 1460 can increase the length of the period (that is, elongate the period) for the training data used for learning, thereby generating an extended three-dimensional data generative model that can generate a viewpoint image of high quality for a longer period. For a scene in which many of the subjects are dynamic objects (a scene in which the number of the dynamic objects of the plurality of subjects is equal to or greater than a first number or a scene in which the volume (area) occupied by the dynamic objects of the plurality of subjects is equal to or greater than a first quantity), for example, encoding device 1460 can reduce the length of the period for the training data used for learning, thereby generating an extended three-dimensional data generative model that can generate a viewpoint image of high quality even for dynamic objects for a shorter period.

Note that encoding device 1460 may use training data for period tm-n (for example, a group of frames (GOF) of training images in period tm-n) to generate extended three-dimensional data generative model NNtm-n for that period tm-n. In that case, encoding device 1460 buffers the training image frame for period tm-n to generate an extended three-dimensional data generative model and compresses and transmits the extended three-dimensional data generative model, so that a transmission delay corresponding to the GOF size occurs. Encoding device 1460 may add, to the bitstream, information regarding the transmission delay, for example, the number of frames of the GOF or the number of frames of latency. In this way, decoding device 1465 can obtain delay information by decoding the bitstream, and can properly reproduce the moving image or three-dimensional data by taking the delay into consideration.

Note that in the embodiments described above, examples have been described in which a three-dimensional data generative model or an extended three-dimensional data generative model generates a static image from an arbitrary viewpoint at a time or in a period, this is not intended to be limiting. For example, as illustrated in FIG. 48, a three-dimensional data generative model or an extended three-dimensional data generative model may generate (output) three-dimensional data, such as point cloud data or mesh data, at a time in a period. In this way, the user can measure dimensions of the target object or watch a more precise three-dimensional data. FIG. 48 is a diagram for describing a moving image generation method using a three-dimensional data generative model according to a variation of Embodiment 2.

Furthermore, encoding devices 1420 and 1460 may include, in the metadata of the bitstream, information indicating a recommended output form among output forms, such as image, point cloud data, and mesh data, according to the use case. In this way, the user can select a recommended output form according to the use case.

Note that encoding devices 1420 and 1460 may add one or more items of viewpoint information to the metadata added to the bitstream of the three-dimensional data generative model or extended three-dimensional data generative model. For example, encoding devices 1420 and 1460 may include, in the metadata, viewpoint information about a recommended viewpoint for watching the target object or viewpoint information about the viewpoint of the user at the time when the training data is obtained. In this way, decoding devices 1425 and 1465 can generate a moving image or three-dimensional data using viewpoint information selected according to the intention of the user from among one or more items of viewpoint information added to the bitstream.

Note that a default viewpoint may be determined in advance from one or more items of viewpoint information, and decoding devices 1425 and 1465 may use the default viewpoint determined in advance to generate a moving image or three-dimensional data, unless otherwise specified by the user. In this way, decoding devices 1425 and 1465 can automatically generate a moving image or three-dimensional data without specification by the user.

For example, a use case of the embodiments is as follows.

First, encoding devices 1420 and 1460 obtain data of a dynamic object to be transmitted to a remote location with a camera or a sensor, and generate a three-dimensional data generative model or extended three-dimensional data generative model of the dynamic object by using the data of the dynamic object as training data.

Encoding devices 1420 and 1460 then encode the three-dimensional data generative model or extended three-dimensional data generative model according to the encoding method described in the embodiments, and transmit a bitstream including the encoding result to the remote location.

Then, decoding devices 1425 and 1465 decode the bitstream received at the remote location, generate a moving image or three-dimensional data of an arbitrary viewpoint using the decoded three-dimensional data generative model or extended three-dimensional data generative model of the dynamic object, and use the generated three-dimensional data for viewing, measurement or other application. The embodiments can be generally applied to use cases in which information on a space is shared at a remote location.

Note that when in a space, there are one or more objects to be transmitted to a remote location, the three-dimensional data generative modelling process, the encoding and transmission process, and the decoding and rendering process illustrated in the embodiments may be separately applied to each object. For example, a dynamic object in the foreground of a space and a static object in the background may be separately subjected to the three-dimensional data generative modelling, and the resulting three-dimensional data generative models may be separately encoded and transmitted. In this way, the three-dimensional data generative modelling or encoding method that is optimum for each object can be applied, and the encoding efficiency can be improved.

Furthermore, this is not intended to be limiting, and one or more objects may be regarded as one object, and the three-dimensional data generative modelling process, the encoding and transmission process, and the decoding and rendering process illustrated in the embodiments may be separately applied to the one object. In this way, one or more objects can be transmitted to a remote location while reducing the processing amount.

FIG. 49 is a diagram illustrating an example of the configuration of the encoding device in Embodiment 2. FIG. 50 is a flowchart illustrating an example of an encoding method by the encoding device in Embodiment 2.

Encoding device 1470 includes circuitry 1471 and memory 1472. Encoding device 1470 is a device for implementing encoding devices 1420 and 1460.

Circuitry 1471 performs the processes described below.

Encoding device 1471 obtains a first three-dimensional data generative model (e.g., three-dimensional data generative model NNt0) corresponding to a first time (e.g., time t0) and a second three-dimensional data generative model (e.g., three-dimensional data generative model NNt1) corresponding to a second time (e.g., time t1) (S1401). Encoding device 1471 generates a bitstream by encoding the first three-dimensional data generative model obtained and the second three-dimensional data generative model obtained (S1402). When receiving viewpoint information including a viewpoint and a line-of-sight direction, each of the first three-dimensional data generative model and the second three-dimensional data generative model outputs a two-dimensional image of a subject as viewed from the viewpoint and the line-of-sight direction.

Accordingly, a bitstream including the first three-dimensional data generative model from which a two-dimensional image corresponding to the first time is obtained according to arbitrary viewpoint information and the second three-dimensional data generative model from which a two-dimensional image corresponding to the second time is obtained can be generated, so that a bitstream generated by compressing data from which a moving image from an arbitrary viewpoint is obtained can be generated. Therefore, the storage capacity for storing the data from which a moving image from an arbitrary viewpoint is obtained or the network bandwidth for transmitting the data can be reduced.

For example, each of the first three-dimensional data generative model and the second three-dimensional data generative model is a learning model using a neural network.

For example, the bitstream includes first time information indicating the first time and second time information indicating the second time.

For example, the bitstream includes a first frame number corresponding to the first time and a second frame number corresponding to the second time.

For example, the bitstream includes frame rate information regarding a frame rate of a plurality of training images used to generate the first three-dimensional data generative model and the second three-dimensional data generative model. The plurality of training images are two-dimensional images obtained by capturing the subject at different points in time.

For example, the bitstream includes viewpoint information including a viewpoint and a line-of-sight direction for a plurality of training images used to generate the first three-dimensional data generative model and the second three-dimensional data generative model.

For example, the plurality of training images are two-dimensional images obtained by capturing the subject from mutually different viewpoints and mutually different line-of-sight directions. The viewpoint information includes the mutually different viewpoints and the mutually different line-of-sight directions.

For example, in encoding the second three-dimensional data generative model, circuitry 1471 calculates difference information indicating a difference between the first three-dimensional data generative model and the second three-dimensional data generative model. The bitstream includes the difference information.

For example, the difference includes a difference between a weight parameter associated with a node included in the first three-dimensional data generative model and a weight parameter associated with a node included in the second three-dimensional data generative model.

For example, the bitstream includes reference information indicating that the difference information has been calculated with reference to the first three-dimensional data generative model.

For example, the first time corresponds to a random access point. The first three-dimensional data generative model is encoded using intra prediction or using inter prediction with a predicted value of 0.

For example, the first three-dimensional data generative model and the second three-dimensional data generative model are included in one group among a plurality of groups. The first three-dimensional data generative model is placed first in data order of three-dimensional data generative models included in the one group.

For example, in encoding each of the three-dimensional data generative models, the bitstream includes permission information indicating whether referring to another three-dimensional data generative model included in a different group is allowed for the three-dimensional data generative model.

For example, the first three-dimensional data generative model (e.g., extended three-dimensional data generative model NNt0-2) corresponds to a first period (e.g., period t0 to t2) including the first time (e.g., time t0). The second three-dimensional data generative model (e.g., extended three-dimensional data generative model NNt3-5) corresponds to a second period (e.g., period t3 to t5) including the second time (e.g., time t3).

For example, a plurality of first training images used to generate the first three-dimensional data generative model are two-dimensional images obtained by capturing the subject at different points in time during the first period.

For example, when receiving a time included in the first period, the first three-dimensional data generative model outputs a two-dimensional image of the subject captured at the time received.

For example, the bitstream includes count information indicating a maximum number of images to be generated by the first three-dimensional data generative model.

For example, the bitstream includes first information regarding the plurality of first training images. The first information includes a plurality of viewpoints, a plurality of line-of-sight directions, and a plurality of points in time, corresponding to the plurality of first training images.

For example, the first period or the second period is dynamically determined according to the subject.

For example, circuitry 1471 stores, in memory 1472, the first three-dimensional data generative model generated. Circuitry 1471 generates the second three-dimensional data generative model based on the first three-dimensional data generative model stored in memory 1472.

For example, circuitry 1471 stores, in memory 1472, the first three-dimensional data generative model generated and the second three-dimensional data generative model generated. Circuitry 1471 generates an initial model based on the first three-dimensional data generative model stored in memory 1472 and the second three-dimensional data generative model stored in memory 1472. Circuitry 1471 generates a third three-dimensional data generative model (e.g., three-dimensional data generative model NNt2) corresponding to a third time (e.g., time t2) based on the initial model.

FIG. 51 is a diagram illustrating an example of the configuration of the decoding device in Embodiment 2. FIG. 52 is a flowchart illustrating an example of a decoding method by the decoding device in Embodiment 2.

Decoding device 1480 includes circuitry 1481 and memory 1482. Decoding device 1480 is a device for implementing decoding devices 1425 and 1465.

Circuitry 1481 performs the processes described below.

Circuitry 1481 obtains a bitstream (S1411). Circuitry 1481 decodes, from the bitstream, a first three-dimensional data generative model (e.g., three-dimensional data generative model NNt0) corresponding to a first time (e.g., time t0) and a second three-dimensional data generative model (e.g., three-dimensional data generative model NNt1) corresponding to a second time (e.g., time t1) (S1412). When receiving viewpoint information including a viewpoint and a line-of-sight direction, each of the first three-dimensional data generative model and the second three-dimensional data generative model outputs a two-dimensional image of a subject as viewed from the viewpoint and the line-of-sight direction.

Accordingly, based on a bitstream generated by compressing data from which a moving image from an arbitrary viewpoint is obtained, a first three-dimensional data generative model from which a two-dimensional image corresponding to a first time is obtained according to arbitrary viewpoint information and a second three-dimensional data generative model from which a two-dimensional image corresponding to a second time is obtained can be decoded. Therefore, the bitstream that allows reduction of the storage capacity for storing data from which a moving image from an arbitrary viewpoint is obtained or the network bandwidth for transmitting the data can be properly decoded.

For example, each of the first three-dimensional data generative model and the second three-dimensional data generative model is a learning model using a neural network.

For example, the bitstream includes first time information indicating the first time and second time information indicating the second time.

For example, the bitstream includes a first frame number corresponding to the first time and a second frame number corresponding to the second time.

For example, the bitstream includes frame rate information regarding a frame rate of a plurality of training images used to generate the first three-dimensional data generative model and the second three-dimensional data generative model. The plurality of training images are two-dimensional images obtained by capturing the subject at different points in time.

For example, the bitstream includes viewpoint information including a viewpoint and a line-of-sight direction for a plurality of training images used to generate the first three-dimensional data generative model and the second three-dimensional data generative model.

For example, the plurality of training images are two-dimensional images obtained by capturing the subject from mutually different viewpoints and mutually different line-of-sight directions. The viewpoint information includes the mutually different viewpoints and the mutually different line-of-sight directions.

For example, the bitstream includes difference information indicating a difference between the first three-dimensional data generative model and the second three-dimensional data generative model.

For example, the difference includes a difference between a weight parameter associated with a node included in the first three-dimensional data generative model and a weight parameter associated with a node included in the second three-dimensional data generative model.

For example, the bitstream includes reference information indicating that the difference information has been calculated with reference to the first three-dimensional data generative model.

For example, the first time corresponds to a random access point. The first three-dimensional data generative model is decoded using intra prediction or using inter prediction with a predicted value of 0.

For example, the first three-dimensional data generative model and the second three-dimensional data generative model are included in one group among a plurality of groups. The first three-dimensional data generative model is placed first in data order of three-dimensional data generative models included in the one group.

For example, in decoding each of the three-dimensional data generative models, the bitstream includes permission information indicating whether referring to another three-dimensional data generative model included in a different group is allowed for the three-dimensional data generative model.

For example, the first three-dimensional data generative model (e.g., extended three-dimensional data generative model NNt0-2) corresponds to a first period (e.g., period t0 to t2) including the first time (e.g., time t0). The second three-dimensional data generative model (e.g., extended three-dimensional data generative model NNt3-5) corresponds to a second period (e.g., period t3 to t5) including the second time (e.g., time t3).

For example, a plurality of first training images used to generate the first three-dimensional data generative model are two-dimensional images obtained by capturing the subject at different points in time during the first period.

For example, when receiving a time included in the first period, the first three-dimensional data generative model outputs a two-dimensional image of the subject captured at the time received.

For example, the bitstream includes count information indicating a maximum number of images to be generated by the first three-dimensional data generative model.

For example, the bitstream includes first information regarding the plurality of first training images. The first information includes a plurality of viewpoints, a plurality of line-of-sight directions, and a plurality of points in time, corresponding to the plurality of first training images.

For example, the first period or the second period is dynamically determined according to the subject.

For example, circuitry 1471 stores, in memory 1472, the first three-dimensional data generative model generated. Circuitry 1471 generates the second three-dimensional data generative model based on the first three-dimensional data generative model stored in memory 1472.

For example, circuitry 1471 stores, in memory 1472, the first three-dimensional data generative model generated and the second three-dimensional data generative model generated. Circuitry 1471 generates an initial model based on the first three-dimensional data generative model and the second three-dimensional data generative model that are stored in memory 1472. Circuitry 1471 generates a third three-dimensional data generative model (e.g., three-dimensional data generative model NNt2) corresponding to a third time (e.g., time t2) based on the initial model.

### (Others)

A method of generating a moving image as viewed from a predetermined viewpoint in an example of an embodiment will be described. Generation of a moving image is implemented by a device that includes a memory and a circuit connected to the memory, for example. In an example of the device, the memory stores a three-dimensional data generative model (neural network) generated by learning, and the circuit obtains the three-dimensional data generative model (neural network) stored in the memory and performs generation of a moving image based on the three-dimensional data generative model. Note that the three-dimensional data generative model or an extended three-dimensional data generative model need not be stored in the memory. For example, encoding devices 1420 and 1460 may obtain specification information that specifies an URL on a network and obtain a three-dimensional data generative model based on the specification information.

FIG. 53 is a diagram illustrating an example of a configuration of an encoding device.

Encoding device 1490 includes processor 1491 and memory 1492.

Processor 1491 is a circuit that performs information processing and can access memory 1492. For example, processor 1491 is a dedicated or general-purpose electronic circuit that encodes a three-dimensional data generative model. Processor 1491 may be a processor such as a CPU. Alternatively, processor 1491 may be a group of a plurality of electronic circuits. Furthermore, for example, processor 1491 may serve functions of a plurality of components among the plurality of components of the encoding device described above excluding any component for storing information.

Memory 1492 is a dedicated or general-purpose memory that stores information for processor 1491 to encode a three-dimensional data generative model. Memory 1492 may be an electronic circuit and be connected to processor 1491. Alternatively, memory 1492 may be included in processor 1491. Alternatively, memory 1492 may be a group of a plurality of electronic circuits. Furthermore, memory 1492 may be a magnetic disk, an optical disk or the like, and may be referred to as a storage, a storage medium or the like. Furthermore, memory 1492 may be a nonvolatile memory or a volatile memory.

For example, memory 1492 may store a three-dimensional data generative model to be encoded or store a stream corresponding to an encoded three-dimensional data generative model. Furthermore, memory 1492 may store a program for processor 1491 to encode a three-dimensional data generative model.

Note that in encoding device 1490, all of the plurality of components of the encoding device described above need not be implemented, and all of the plurality of processes described above need not be performed. Some of the plurality of components may be included in another device, and some of the plurality of processes described above may be performed by another device.

FIG. 54 is a diagram illustrating an example of a configuration of a decoding device.

Decoding device 1495 includes processor 1496 and memory 1497.

Processor 1496 is a circuit that performs information processing and can access memory 1497. For example, processor 1496 is a dedicated or general-purpose electronic circuit that decodes a stream. Processor 1496 may be a processor such as a CPU. Alternatively, processor 1496 may be a group of a plurality of electronic circuits. Furthermore, for example, processor 1496 may serve functions of a plurality of components among the plurality of components of the decoding device described above excluding any component for storing information.

Memory 1497 is a dedicated or general-purpose memory that stores information for processor 1496 to decode a stream. Memory 1497 may be an electronic circuit and be connected to processor 1496. Alternatively, memory 1497 may be included in processor 1496. Alternatively, memory 1497 may be a group of a plurality of electronic circuits. Furthermore, memory 1497 may be a magnetic disk, an optical disk or the like, and may be referred to as a storage, a storage medium or the like. Furthermore, memory 1497 may be a nonvolatile memory or a volatile memory.

For example, memory 1497 may store a three-dimensional data generative model or store a stream. Furthermore, memory 1497 may store a program for processor 1496 to decode a stream.

Note that in decoding device 1495, all of the plurality of components of the decoding device described above need not be implemented, and all of the plurality of processes described above need not be performed. Some of the plurality of components may be included in another device, and some of the plurality of processes described above may be performed by another device.

### (Embodiment 3)

In Embodiment 3, a method for encoding and transmitting a three-dimensional model (a learning model for generating three-dimensional data) will be described.

For example, point cloud data, such as a point cloud, a mesh, and the like, includes three-dimensional points or line information for connecting points, surface information, attribute information corresponding to points, and attribute information corresponding to surfaces, and so on. For this reason, when the resolution of the points or mesh increases or the region of the points or mesh increases, the amount of data of the point cloud data increases in proportion to the increase in resolution or region.

When the region of the points or mesh is large, even if the elements of the point cloud data such as the points or mesh are encoded, the amount of data after encoding will also be large because the amount of data of the point cloud data is large.

In contrast, in a three-dimensional model, which is a learning model for generating three-dimensional data, the increase in the amount of data is small even when the region of the points or mesh increases. A three-dimensional model is a network model which, by learning from two-dimensional data (two-dimensional images) or three-dimensional data (point clouds or meshes), obtains three-dimensional shapes and attribute information corresponding to the three-dimensional shapes through learning using a neural network or the like. It should be noted that a three-dimensional model is a network model for generating three-dimensional data, and thus can also be referred to as a three-dimensional (data) generative model.

In view of this, in order to reduce the storage capacity for three-dimensional data or reduce the transmission amount of three-dimensional data, a method for encoding and transmitting the three-dimensional model is required.

In the present embodiment, with regard to the three-dimensional model learner (three-dimensional model obtainer), three-dimensional model encoder (network model encoder), and three-dimensional model decoder (network model decoder) described in the previous embodiment, a modeling method using Neural Radiance Fields (NeRF) as a method of modeling a three-dimensional model, a method for encoding the three-dimensional model, a method for decoding the encoded three-dimensional model, and a method for decoding two-dimensional images and three-dimensional data from the three-dimensional model will be specifically described.

A three-dimensional model generated using basic NeRF may be composed of a plurality of networks. It should be noted that the network referred to here is a learning model obtained by learning using a neural network. The plurality of networks may include, for example, a network trained using sparse sampling points and a network trained using dense sampling points. In this manner, the plurality of networks are networks that differ in the number of sampling points to be inputted or the density of the sampling points. The sampling points may be, for example, three-dimensional points indicating three-dimensional positions.

Alternatively, the plurality of networks may include, for example, either a network for outputting geometry information indicating the density of an object, the probability of the presence of an object, or the coordinates of the geometry, or a network for outputting information (attribute information) associated with the geometry, such as color information, reflectance, normal vector, color coordinates, timestamp, and object ID, based on the geometry information. The plurality of networks may include two or more networks. The plurality of networks may be three or more networks with different sampling points, or may have two or more networks for outputting geometry information, or two or more networks for outputting attribute information.

The plurality of networks may be encoded using a plurality of network encoders. The plurality of network encoders may encode the plurality of networks using an existing network encoding means, such as Neural Network Coding (NNC) of the MPEG standard, for example.

FIG. 55 is a block diagram illustrating an example of a configuration of an encoding device in Embodiment 3.

Encoding device 1500 includes NeRF three-dimensional generative model learner 1501 and NeRF generative model encoder 1502.

NeRF three-dimensional generative model learner 1501 generates NeRF model data by obtaining and learning a plurality of two-dimensional images (or three-dimensional data, and so on), and outputs the generated NeRF model data. The NeRF model data is an example of a three-dimensional model.

NeRF generative model encoder 1502 encodes the NeRF model data outputted from NeRF three-dimensional generative model learner 1501, and outputs NeRF model encoded data which is the encoded NeRF model data. In the NeRF model encoded data, in addition to encoded data obtained by encoding elements of the NeRF model, metadata relating to the encoding (additional information, control information, encoding parameters), and the like, are also encoded and output in a predetermined bitstream format. The elements of the NeRF model include, for example, a plurality of layers included in the learning model of the neural network, a plurality of nodes included in each layer of the plurality of layers, and edges that connect nodes between layers. NeRF model encoded data may be processed in the same manner as the encoded data illustrated FIG. 1 of Embodiment 1. For example, the NeRF model encoded data may be multiplexed into a predetermined format and accumulated in a file, or the file may be transmitted. Furthermore, the multiplexed data may be transmitted using a predetermined communication scheme.

FIG. 56 is a block diagram illustrating an example of a configuration of a decoding device in Embodiment 3.

Decoding device 1510 includes NeRF generative model decoder 1511 and rendering data reconstructor 1512.

NeRF generative model decoder 1511 obtains NeRF model encoded data that has been received or reproduced and demultiplexed, decodes metadata relating to encoding from the obtained NeRF model encoded data, and decodes NeRF model data using the metadata.

Rendering data reconstructor 1512 reproduces three-dimensional data from the NeRF model data, and outputs the reproduced three-dimensional data. Alternatively, rendering data reconstructor 1512 may output, from the NeRF model data and based on a viewpoint position and line-of-sight vector information, a two-dimensional image as viewed in the direction of a line-of-sight indicated by line-of-sight vector information from a position indicated by a viewpoint position. In other words, rendering data reconstructor 1512 may generate and output, from the NeRF model data, a two-dimensional image of an arbitrary viewpoint specified by a user, for example.

Next, using NeRF, which is one example of a method for three-dimensional modeling, as an example, a method for generating a three-dimensional model from a plurality of two-dimensional images and encoding the generated network model will be described using FIG. 57. It should be noted that the method described here is merely an example, and is not limited to the NeRF scheme described here, but can also be applied to other NeRF schemes or three-dimensional modeling schemes.

FIG. 57 is a block diagram illustrating an example of a configuration of an encoding device that encodes a plurality of networks in Embodiment 3.

Encoding device 1520 includes three-dimensional generative model learner 1521 and three-dimensional generative model encoder 1525. Encoding device 1520 further includes bitstream data constructor 1529.

First, the specific configuration of three-dimensional generative model learner 1521 will be described. Three-dimensional generative model learner 1521 specifically includes first network learner 1522, sampling point determiner 1523, and second network learner 1524.

First network learner 1522 executes a learning process of a three-dimensional model by using a plurality of two-dimensional images that are inputted and the viewpoint information (camera posture) of each of the plurality of two-dimensional images inputted. In other words, first network learner 1522 generates a three-dimensional model (first network) by learning the two-dimensional images associated with the respective viewpoint information, based on the plurality of two-dimensional images and the viewpoint information of each of the two-dimensional images. It should be noted that viewpoint information includes the viewpoint when the two-dimensional image was shot and the line-of-sight vector (line-of-site direction) from the viewpoint. First network learner 1522 may receive input of sampling points (first sampling points) for learning. The first sampling points may be, for example, a set of points having course (large) intervals between points. The coordinates of each point included in the first sampling points may be predetermined coordinates or may be coordinates calculated through a predetermined method. First network learner 1522 outputs a three-dimensional model (first network) obtained by learning. The three-dimensional model (first network) generated by first network learner 1522 is a network that outputs density information for sampling points. Furthermore, first network learner 1522 may output the density information for sampling points that was obtained during learning.

Here, density information is information indicating the density of an object at a sampling point. The density information is set, for example, to a high value (i.e., higher than a predetermined value) if the object is a person or a desk, to a low value (i.e., lower than the predetermined value) if the object is a light-transmissive object such as glass, and to a value close to zero if no object is present. Therefore, the density information can also be regarded as information indicating whether an object is present, or information indicating a probability of the presence of an object. Furthermore, the density information can also be regarded as geometry information.

Sampling-point determiner 1523 determines, based on the density information for the first sampling points outputted from first network learner 1522, the density of an object at the coordinates indicated by the coarsely sampled first sampling points, and determines second sampling points to be used for learning by second network learner 1524. In determining the second sampling points, sampling point determiner 1523 may, for example, determine that an object is present when the density of a sampling point is larger than a predetermined density, and may determine to sample more finely the vicinity of the object whose presence has been determined (i.e., the space in which the object is determined to be present and the surrounding space). Further, in determining the second sampling points, sampling point determiner 1523 may, for example, determine that no object is present in a space in which a sampling point is located when the density of the sampling point is smaller than a predetermined density, and may determine to sample the space more coarsely, or determine not to sample the space. A PDF sampler, for example, may be used for sampling point determiner 1523.

The meaning of the sampling points outputted by sampling point determiner 1523 differs depending on the density determination method. For example, sampling points that are outputted when it is determined that an object is present can be regarded as geometry information indicating coordinates of the object. Furthermore, depending on the density of the sampling points, it is possible to distinguish between, for example, a highly transmissive object such as glass and a hard substance, and it is possible to perform processing such as removing, from the sampling points to be extracted, sampling points in an objects (space) determined to be a highly transmissive object or a hard substance. In this manner, the sampling points to be extracted can be determined according to the density of the sampling points. For this reason, by extracting sampling points of an object or material having a specific density that satisfies specific conditions, the extracted sampling points can be determined as geometry information.

In determining the sampling points, sampling point determiner 1523 may use a predetermined method or parameter, or may use a method or parameter selected from among a plurality of methods or a plurality of parameters. In this case, information indicating the predetermined method or parameter may be encoded as learning metadata and stored in the bitstream. Accordingly, the information indicating the predetermined method or parameter may be notified to the decoding device as learning metadata included in the bitstream.

The configuration of second network learner 1524 is the same as the configuration of first network learner 1522. Second network learner 1524 executes a learning process of a three-dimensional model by using a plurality of two-dimensional images that are inputted, the viewpoint information (camera posture) of each of the plurality of two-dimensional images inputted, and second sampling points outputted from sampling point determiner 1523. In other words, second network learner 1524 generates a three-dimensional model (second network) by learning the two-dimensional images associated with respective viewpoint information based on the plurality of two-dimensional images, the viewpoint information of each of the two-dimensional images, and the second sampling points.

Here, the second network generated by second network learner 1524 is a network for which color information and density information can be outputted. It should be noted that second network learner 1524 outputs the density information and color information for the sampling points that were obtained during learning, and the density information and the color information may be used for other processing.

Next, the specific configuration of three-dimensional generative model encoder 1525 will be described.

Three-dimensional generative model encoder 1525 includes first network encoder 1526, second network encoder 1527, and metadata encoder 1528.

First network encoder 1526 encodes the trained first network generated by first network learner 1522. First network encoder 1526 outputs encoded data obtained by encoding the first network.

Second network encoder 1527 encodes the trained second network generated by second network learner 1524. Second network encoder 1527 outputs encoded data obtained by encoding the second network.

Metadata encoder 1528 encodes metadata generated by sampling point determiner 1523. Metadata encoder 1528 outputs encoded data obtained by encoding the metadata.

In this manner, in three-dimensional generative model encoder 1525, encoded data obtained by encoding each of the first network, the second network, and the metadata is generated, and the generated encoded data is outputted.

It should be noted that three-dimensional generative model encoder 1525 may perform encoding using an existing network coding means such as Neural Network Coding (NNC) of the MPEG standard. The trained first network and second network include a plurality of layers such as an input layer, intermediate layers, and an output layer of the network, nodes in the respective layers, weighting factors for the respective nodes, and transformation functions of the respective nodes. Each of the trained first network and second network may include a density network which is a network for outputting density information, a color network for outputting color information, reflectance information for outputting reflectance information, and so on. Alternatively, each of the trained first network and second network may include an attribute network for outputting attribute information such as color information or reflectance information.

FIG. 58 is a diagram illustrating an example of encoded data of the trained first network in Embodiment 3.

When the trained first network is a network for generating sampling points, it may include at least a density network for outputting density information. The trained first network may further include a color network for outputting color information, or an attribute network (reflectance network) for outputting other attribute information (for example, reflectance information).

FIG. 59 is a diagram illustrating an example of encoded data of the trained second network in Embodiment 3.

The trained second network may be a network for outputting color information or other attribute information for the sampling points. The trained second network may include a density network for outputting density information and a color network for outputting color information. Furthermore, the trained second network may further include an attribute network (reflectance network) for outputting other attribute information (for example, reflectance information).

It should be noted that when output of attribute information is unnecessary, the trained first network or second network need not include a color network for outputting color information or an attribute network (reflectance network) for outputting other attribute information (for example, reflectance information).

Next, the detailed configuration of the first network learner will be described. FIG. 60 is a diagram illustrating an example of the detailed configuration of the first network learner in Embodiment 3. It should be noted that the configuration (learning method) of first network learner 1522 described here is an example of a means for executing a learning process of a network, and other means may be used.

First network learner 1522 includes first network unit 1522a, comparer 1522b, and renderer 1522c.

First network unit 1522a estimates density information and color information for a plurality of sampling points, based on the two-dimensional image for each item of viewpoint information that has been inputted, the viewpoint information (camera posture) for each two-dimensional image inputted, and the plurality of sampling points corresponding to each item of viewpoint information inputted, and outputs the estimated density information and color information. Specifically, first-network unit 1522a inputs, to the first network before training, the two-dimensional image for each item of viewpoint information, the viewpoint information for each two-dimensional image, and the plurality of sampling points corresponding to each item of viewpoint information, to thereby output the density information and color information outputted from the first network.

Renderer 1522c executes a rendering process based on the density information and color information for each sampling point that were outputted by first network unit 1522a, generates a two-dimensional image for each item of viewpoint information, and outputs the generated two-dimensional image for each item of viewpoint information. A volume renderer may be used for the renderer 1522c.

Comparer 1522b compares, for each item of viewpoint information, a two-dimensional image outputted by renderer 1522c with a training two-dimensional image that has been inputted to first network unit 1522a, and feeds back a difference obtained as a result of the comparison to first network unit 1522a.

First network unit 1522a adjusts the parameters of the first network so that the difference that is fed back becomes smaller.

First network learner 1522 repeats the above process for each item of viewpoint information to thereby train the first network whose parameters are optimally adjusted, and output the trained first network. Furthermore, first network unit 1522a outputs density information for each of the plurality of sampling points.

First network learner 1522 may output the color information for each of the plurality of sampling points that was obtained during learning. The color information may be used for other processing.

Next, the network learning process will be described. FIG. 61 is a flowchart illustrating an example of a learning process of a network in Embodiment 3.

First network learner 1522 inputs, to the first network before training, a two-dimensional image for each item of viewpoint information and the viewpoint information for each two-dimensional image (S1501).

First network learner 1522 trains the first network as a three-dimensional model, for each item of viewpoint information (S1502).

In step S1502, first network learner 1522 executes the processes of steps S1511 to S1514.

First network learner 1522 inputs, to the first network to be trained, a plurality of sampling points in the line-of-sight direction for each pixel of a two-dimensional image, to thereby obtain three-dimensional information (density information and color information) (S1511).

First network learner 1522 generates the color of each pixel of the two-dimensional image from the three-dimensional information, to thereby generate a two-dimensional image (S1512). In other words, first network learner 1522 renders the two-dimensional image.

First network learner 1522 extracts the difference between the input two-dimensional image and the rendered two-dimensional image (S1513).

First network learner 1522 trains the first network based on the difference (S1514). Specifically, first network learner 1522 adjusts the parameters of the first network so that the difference becomes smaller.

First network learner 1522 determines whether learning has been completed for all the items of viewpoint information (S1503).

When first network learner 1522 determines that learning has been completed for all the items of viewpoint information (Yes in S1503), the process proceeds to step S1504; and when it determines that learning has not been completed for all the items of viewpoint information (No in S1503), step S1502 is executed based on the next item of viewpoint information.

First network learner 1522 outputs the trained network (first network) (S1504).

First network learner 1522 may output three-dimensional information obtained during the learning process (S1505). The three-dimensional model may be, for example, density information or color for each point of the sampling points.

It should be noted that, although the above-described network learning process has been described as the learning process of the first network, it is also applicable to the learning process of the second network.

Next, decoding device 1530 that decodes a plurality of networks will be described. FIG. 62 is a block diagram illustrating an example of a configuration of a decoding device that decodes a plurality of networks in Embodiment 3.

Decoding device 1530 includes bitstream data divider 1531, three-dimensional generative model decoder 1532, and reconstructor 1536.

Bitstream data divider 1531 divides an inputted bitstream into the encoding data of a first network, a second network, and metadata.

Next, the specific configuration of three-dimensional generative model decoder 1532 will be described. Three-dimensional generative model decoder 1532 includes first network decoder 1533, second network decoder 1534, and metadata decoder 1535.

First network decoder 1533 decodes the trained first network based on the encoded data of the first network. First network decoder 1533 outputs the decoded trained first network.

Second network decoder 1534 decodes the trained second network based on the encoded data of the second network. Second network decoder 1534 outputs the decoded trained second network.

Metadata decoder 1535 decodes metadata based on the encoded data of the metadata. Metadata decoder 1535 outputs the decoded metadata.

Next, the specific configuration of reconstructor 1536 will be described. Reconstructor 1536 includes density estimator 1537, sampling point determiner 1538, attribute information estimator 1539, and renderer 1540.

Density estimator 1537 estimates density information for the first sampling points using the trained first network and first sampling points, and outputs the estimated density information.

Sampling point determiner 1538 determines second sampling points based on density information. Sampling point determiner 1538 determines the second sampling points in the same manner as encoding device 1520, by using parameters included in metadata. Sampling point determiner 1538 outputs the determined second sampling points.

Attribute information estimator 1539 estimates density information and color information corresponding to the second sampling points, using the trained second network and the second sampling points. Attribute information estimator 1539 outputs the estimated density information and color information. When sampling points of an arbitrary viewpoint are input, attribute information estimator 1539 may estimate density information and color information corresponding to the inputted sampling points of the arbitrary viewpoint, and output the estimated density information and color information.

Renderer 1540 executes a rendering process based on the density information and color information for each of the second sampling points, generates a two-dimensional image for each item of viewpoint information, and outputs the generated two-dimensional image for each item of viewpoint information.

It should be noted that reconstructor 1536 may output the second sampling points and the attribute information (density information and color information) corresponding to the second sampling points as estimated by attribute information estimator 1539.

Next, a data structure that stores encoded data, which is data that has been encoded, will be described.

With this configuration, decoder 1530 can identify data of each type from a NeRF encoded bitstream, and thus data can be divided, and decoding for each type becomes possible. Furthermore, in decoding device 1530, per data unit handling (i.e., processing) becomes easy, enabling functions such as parallel decoding, random access, partial decoding, and scalable decoding to be realized.

Furthermore, in a three-dimensional model including a plurality of networks, by assigning an identical identification ID to data included in the same three-dimensional model, a decoder can identify networks of the same three-dimensional model.

FIG. 63 is a diagram illustrating an example of syntax of sequence unit metadata in Embodiment 3. FIG. 64 is a diagram illustrating an example of syntax of frame unit metadata.

The trained network that was trained by NeRF includes a plurality of layers such as an input layer, intermediate layers, and an output layer of the network, nodes in the respective layers, weighting factors for the respective nodes, and transformation functions of the respective nodes. Among these, parameters that are the same throughout one sequence (over one sequence) are stored in metadata common to one sequence, such as an SPS (Sequence Parameter Set). Furthermore, parameters that are common on a per frame basis, per access unit basis, or a per multiple frame basis are stored in metadata common to a frame or metadata common to a plurality of frame units.

For example, configuration information indicating the configuration of a network, such as information on a plurality of layers of the network, may be stored in an SPS or may be stored in frame unit metadata when constant within a sequence. The network configuration information may be stored in both the SPS and the frame unit metadata, and in this case, the frame unit metadata may be preferentially used. Furthermore, the network configuration information may be stored in either the SPS or the frame unit metadata, and in this case, a flag, which indicates in which of the SPS or in the metadata the network configuration information is stored, is stored in a higher-level SPS, and decoding device 1530 may determine in which of the SPS or the metadata the network configuration is stored, based on the flag.

Next, a data structure of encoded layers of the network will be described.

FIG. 65 is a diagram illustrating an example of syntax of a data unit of a network having a large density in Embodiment 3. FIG. 66 is a diagram illustrating an example of syntax of a data unit of a network having a small density in Embodiment 3. It should be noted that a large density indicates that an interval between sampling points is larger than a predetermined value and that the sampling points are coarse. It should be noted that a small density indicates that an interval between sampling points is smaller than a predetermined value and that the sampling points are fine.

FIG. 67 is a diagram illustrating an example of a configuration of a data unit of a first network in Embodiment 3. FIG. 68 is a diagram illustrating an example of a configuration of a data unit of a second network in Embodiment 3. It should be noted that the first network is a network with a large density, and the second network is a network with a small density.

Network parameters obtained as a result of learning, such as weighting factors of nodes, may be stored as network data in a data unit of the network. Network data may be included in the network configuration information. The network configuration information includes, for example, information for specifying a plurality of layers of the network including an input layer, intermediate layers, and an output layer of the network, nodes in the respective layers, weighting factors for the respective nodes, and transformation functions of the respective nodes.

It should be noted that, among the network data, data related to output of density information (a density network for outputting density information), data related to output of color information (a color network for outputting color information), and data related to other attribute information (an attribute network for outputting other attribute information, such as reflectance information) may be collectively stored as a group.

For example, when a trained first network has a density network for outputting density for sampling points, network data and the density network are encoded and stored in a payload of the data unit of the network.

Furthermore, for example, when a trained second network has a density network for outputting density for sample points and a color network for outputting color information, network data, the density network, and the color network are encoded and stored in a payload of the data unit of the network.

For encoding of the network, existing network encoding means, such as Neural Network Coding (NNC) of the MPEG standard, for example, may be used. In this case, an NNC data unit may be used as the data unit of the network. Encoded data defined by NNC may be stored in a data structure defined by NNC. In addition, the network data unit (NetworkDataUnit) may be divided into a plurality of data formats per network configuration.

Next, a data structure of encoded data of a NeRF three-dimensional model will be described. FIG. 69 is a diagram illustrating an example of syntax of encoded data of a NeRF three-dimensional model in Embodiment 3. FIG. 70 is a diagram illustrating an example of NeRF unit types in Embodiment 3. FIG. 71 is a diagram illustrating an example of the data structure of encoded data of a NeRF three-dimensional model in Embodiment 3.

Encoded data of the NeRF three-dimensional model is stored in, for example, a model_codec_unit in a codec_unit() that handles encoding schemes in an integrated manner, as described in the data structure of encoded data of the above embodiments, and is transmitted. Furthermore, the encoded data of the NeRF three-dimensional model may be transmitted as a model_codec_unit without being stored in the codec_unit. The encoded data of the NeRF three-dimensional model is referred to herein as a NeRF 3D model Unit.

The encoded data of the NeRF three-dimensional model has a header and a configuration of NeRF 3D model data, and may have a configuration capable of storing a Fine NW Data Unit, a Coarse NW Data Unit, NeRF Metadata, an SPS, an FPS, an NPS, an SEI, and the like. In a nerf_unit_type in the header, a type of data stored in the NeRF 3D model data is indicated. Accordingly, the encoding device can generate data that enables decoding device 1530 to identify elements of the encoded data of the NeRF model.

Here, when the data is a Fine NW Data Unit or a Coarse NW Data Unit, a 3D sub model id for identifying a three-dimensional model may be assigned. For example, when the data is a Fine NW Data Unit or a Coarse NW Data Unit of the same three-dimensional model, an ID indicating that the data unit belongs to the same three-dimensional model may be assigned.

Furthermore, the encoded data of the NeRF three-dimensional model may include a 3D model frame id indicating a frame number of the three-dimensional model. Furthermore, in the encoded data of the NeRF three-dimensional model, the same frame id may be assigned to data units of frames at the same time. Furthermore, when the encoded data of the NeRF three-dimensional model is data obtained when 3D model data is divided into regions, the encoded data may include a space id indicating to which region the data belongs. In other words, the same space id is assigned to data of the same region. It should be noted that this space id is the same as the space id described in the above embodiments.

Furthermore, a 3D model sub model id and a data unit id described in the above embodiments may be the same. With these identifiers, related data can be associated with each other, and decoding device 1530 can recognize the associated data.

Next, structure information of a NeRF three-dimensional model (a first network or a second network) will be described. FIG. 72 is a diagram illustrating an example of syntax of SPS of a NeRF three-dimensional model in Embodiment 3. FIG. 73 is a diagram illustrating an example of syntax of structure information of a NeRF three-dimensional model in Embodiment 3. FIG. 74 is a diagram illustrating an example of a component_type in Embodiment 3. FIG. 75 is a diagram illustrating an example of component coding type in Embodiment 3.

Structure information of NeRF that configures a sequence to which the SPS corresponds is stored in an SPS (Sequence Parameter Set). Accordingly, decoding device 1530 can obtain information on elements or respective components of a bitstream in which the SPS is stored, and can start decoding based on this information.

The SPS includes number_of_component indicating the number of components included in the bitstream, and includes, for the number of components, component_type, which is an identifier of a component. The component_type indicates, for example, that encoded data is geometry or density of geometry. In addition, the component_type may indicate types exemplified in FIG. 74.

Furthermore, the SPS includes a component coding type indicating the encoding method by which the component is encoded. The encoding method indicated by the component coding type is, for example, mpeg g-pcc for point cloud compression, vvc as a video codec, or nnc for network compression. In addition, the component coding type may indicate encoding methods exemplified in FIG. 75.

In an example of a bitstream including two networks in the present embodiment, the number of components is 2, and the components may be indicated as follows.
component0: component_type = 1 or 5, component coding type = 4
component1: component_type = 2 or 6, component coding type = 4

It should be noted that the above indicates a case where component0 has component_type = 1 and component1 has component_type = 2, or a case where component0 has component_type = 5 and component1 has component_type = 6.

Accordingly, structure information of the NeRF three-dimensional model is notified to decoding device 1530, and decoding device 1530 can start decoding based on the structure information of the NeRF three-dimensional model.

It should be noted that component_type indicated by 0 to 6 in FIG. 75 is merely an example; not all component types need to be indicated, and only some of them may be indicated.

Next, the reference relationship of encoded data of a NeRF three-dimensional model will be described. FIG. 76 is a diagram for describing reference relationships of encoded data of a NeRF three-dimensional model in Embodiment 3.

For example, a first network (CoarseNW) and a second network (FineNW) in a three-dimensional generative model of frame 0 are assigned the same frame number, that is, a 3D model frame id, to indicate that the networks correspond to the same frame 0. Furthermore, the first network (CoarseNW) and the second network (FineNW) are assigned the same model identifier, that is, a 3D model sub model id, to indicate that the networks correspond to the same three-dimensional generative model.

Accordingly, decoding device 1530 can identify the first network (CoarseNW) and the second network (FineNW) used at the time of generation of the three-dimensional model. Furthermore, a ref_nerf_metadata_id is assigned to each of the first network (CoarseNW) and the second network (FineNW), and decoding device 1530 can perform decoding using referenced NeRF metadata by referring to NeRF metadata having the same nerf_metadata_id during decoding.

Next, a bitstream division process in decoding device 1530 will be described.

A bitstream input to decoding device 1530 includes data of various NeRF 3D model Units. Decoding device 1530 first parses the header of a NeRF 3D model Unit. When nerf_unit_type is a Fine NW Data Unit, decoding device 1530 recognizes that data following the header is encoded data of a second network (FineNW), and decodes data of the second network (FineNW). Similarly, decoding device 1530 determines, using nerf_unit_type, whether the data is a Coarse NW Data Unit, NeRF Metadata, a Sequence Parameter Set, a Frame Parameter Set, or a Network Parameter Set, and decodes data indicated by each.

Next, the decoding process for a first network and a second network will be described.

Decoding device 1530 parses a 3D model frame id, a 3D model sub model id, a 3D model space id, and a ref_nerf_metadata_id, determines to which frame, to which model, and to which space, the encoded data of the first network or encoded data of the second network belongs, and pairs encoded data having the same identifiers. Decoding device 1530 can execute decoding when encoded data having the same identifiers are assembled.

For example, when decoding device 1530 receives a Fine NW Data Unit having 3D model frame id = 0 and 3D model sub model id = 1, decoding device 1530 searches for a Coarse NW Data Unit having the same ID, determines that decoding is possible when the Coarse NW Data Unit is found, and starts decoding.

Next, constraints on the arrangement order of data will be described.

When a second network (Fine Network) necessarily needs to refer to a first network (Coarse Network), encoding device 1520 may impose a constraint that encoded data of the first network (Coarse Network) is transmitted before encoded data of the second network (Fine Network). The first network (Coarse Network) is received and decoded by decoding device 1530 before the second network (Fine Network). Decoding device 1530 receives and decodes the second network (Fine Network) after the first network (Coarse Network), and searches for corresponding 3D model frame id and 3D model sub model id.

In addition, when received data is encoded data of a network, decoding device 1530 parses the header of a network data unit and decodes the network by a predetermined method. For example, when the data is an NNC data unit, decoding device 1530 decodes the data by a method defined by the NNC standard.

Next, an example of data division will be described based on the process of dividing three-dimensional data into one or more items of three-dimensional data described in the above embodiments.

FIG. 77 is a diagram illustrating an example in which data of one frame is divided into three three-dimensional spaces in Embodiment 3. This diagram illustrates an example in which data in one three-dimensional space among the three divided three-dimensional spaces is further divided into two.

FIG. 78 is a diagram illustrating an example of IDs assigned to divided data in Embodiment 3.

This diagram illustrates an example in which a unique 3D model sub model id is assigned to each item of the divided data. The 3D model sub model id is an ID for identifying the divided data.

For example, the 3D model sub model id may be a value that is unique within the same subspace data. For example, when four items of three-dimensional data (sub_model) have the same space_id, IDs may be assigned to the four items of three-dimensional data (sub_model) in ascending order starting from 0. For example, in FIG. 78, a 3D model sub model id and a 3D model space id may be assigned as follows to an upper-left model, an upper-center model, a lower-center model, and an upper-right model, in this order.
[3D model sub model id, 3D model space id] = [0, 0], [0, 1], [1, 1], [0, 2]

Furthermore, for example, in the example in FIG. 77, since the data is divided into four items of three-dimensional data (sub_model), IDs of 0, 1, 2, and 3 may be sequentially assigned to the four items of three-dimensional data (sub_model) regardless of the three-dimensional subspace to which each item belongs (that is, regardless of space_id).

Furthermore, for the four pieces of three-dimensional data (sub_model), the same space id may be assigned to data of the same subspace.

Accordingly, decoding device 1530 can identify a data unit of the first network (coarse NW data unit) and a data unit of the second network (fine NW data unit) that are obtained by dividing.

It should be noted that although an example has been described in which a 3D model sub model id and a 3D model space id are assigned to both a data unit of the first network (coarse NW data unit) and a data unit of the second network (fine NW data unit), when the two data units are associated with each other by a 3D model sub model id, a 3D model space id need not be assigned to one of the data units.

Next, examples of encoding methods and decoding device outputs corresponding thereto will be described.

FIG. 79 is a diagram for describing a first example of an encoding method in Embodiment 3. FIG. 80 is a diagram for describing a first example of a decoding device in Embodiment 3.

As illustrated in this diagram, in the encoded data, a first network includes a density network for first sampling points and does not include a color network for the first sampling points, and a second network includes a density network for second sampling points and a color network for the second sampling points.

Accordingly, the decoding device generates second sampling points from density information for the first sampling points using the first network. Then, the decoding device can generate density information and color information for the second sampling points using the second network, and reproduce and output three-dimensional data or two-dimensional data based on the density information and the color information.

FIG. 81 is a diagram for describing a second example of an encoding method in Embodiment 3. FIG. 82 is a diagram for describing a second example of a decoding device in Embodiment 3.

As illustrated in this diagram, in the encoded data, a first network includes a density network for first sampling points and a color network for the first sampling points, and a second network includes a density network for second sampling points and a color network for the second sampling points.

Accordingly, the decoding device can generate density information and color information for the first sampling points using the first network, and reproduce and output three-dimensional data or two-dimensional data based on the density information and the color information. Furthermore, similarly to the first example, the decoding device can generate second sampling points based on the density information generated using the first network, generate density information and color information for the second sampling points using the second network, and reproduce and output three-dimensional data or two-dimensional data based on the density information and the color information.

In this manner, the decoding device in the second example can output three-dimensional data or two-dimensional data for the first sampling points, and can output three-dimensional data or two-dimensional data for the second sampling points.

FIG. 83 is a diagram for describing a third example of an encoding method in Embodiment 3. FIG. 84 is a diagram for describing a third example of a decoding device in Embodiment 3.

As illustrated in this diagram, in the encoded data, a first network includes a density network for first sampling points and does not include a color network for the first sampling points, a second network includes a density network for second sampling points and a color network for the second sampling points, and a third network includes a density network for the second sampling points and a reflectance network for the second sampling points.

Accordingly, the decoding device generates second sampling points from the density information for the first sampling points using the first network. Then, the decoding device can generate density information and color information for the second sampling points using the second network, and reproduce and output three-dimensional data or two-dimensional data based on the density information and the color information. In addition, the decoding device can generate density information and reflectance information for the second sampling points using the third network, and reproduce and output three-dimensional data or two-dimensional data based on the density information and the reflectance information. In this manner, the decoding device can output three-dimensional data including color information for the second sampling points and two-dimensional data including color information for the second sampling points, and can output three-dimensional data including reflectance information for the second sampling points and two-dimensional data including reflectance information for the second sampling points.

FIG. 85 is a diagram for describing a fourth example of an encoding method in Embodiment 3. FIG. 86 is a diagram for describing a fourth example of a decoding device in Embodiment 3.

The fourth example is an example of generating third sampling points that are denser than the second sampling points.

As illustrated in this diagram, in the encoded data, a first network includes a density network for first sampling points and does not include a color network for the first sampling points, a second network includes a density network for second sampling points and does not include a color network for the second sampling points, and a third network includes a density network for third sampling points and a color network for the third sampling points.

Accordingly, the decoding device generates second sampling points from the density information for the first sampling points using the first network. Then, the decoding device generates third sampling points from density information for second sampling points using the second network. Then, the decoding device can generate density information and color information for the third sampling points using the third network, and reproduce and output three-dimensional data or two-dimensional data based on the density information and the color information.

FIG. 87 is a diagram for describing a fifth example of an encoding method in Embodiment 3. FIG. 88 is a diagram for describing a fifth example of a decoding device in Embodiment 3.

The fifth example is an example of generating third sampling points that are denser than the second sampling points, similar to the fourth example.

As illustrated in this diagram, in the encoded data, a first network includes a density network for first sampling points and a color network for the first sampling points, a second network includes a density network for second sampling points and a color network for the second sampling points, and a third network includes a density network for third sampling points and a color network for the third sampling points.

Accordingly, the decoding device can generate density information and color information for the first sampling points using the first network, and reproduce and output three-dimensional data or two-dimensional data based on the density information and the color information. Furthermore, the decoding device can generate second sampling points based on the density information generated using the first network, generate density information and color information for the second sampling points using the second network, and reproduce and output three-dimensional data or two-dimensional data based on the density information and the color information. Furthermore, the decoding device can generate third sampling points based on the density information generated using the second network, generate density information and color information for the third sampling points using the third network, and reproduce and output three-dimensional data or two-dimensional data based on the density information and the color information.

In this manner, the decoding device in the fifth example can output three-dimensional data or two-dimensional data for first sampling points, can output three-dimensional data or two-dimensional data for second sampling points, and can output three-dimensional data or two-dimensional data for third sampling points.

Next, a method of notifying conformance supported by a bitstream or conformance supported by a decoding device will be described.

FIG. 89 is a diagram for describing data exchange between a decoder and a controller in Embodiment 3.

As illustrated in this diagram, decoder 1541 may store, in metadata such as SEI, information indicating what kind of data is encoded, and transmit the information to controller (application executer) 1542 (SEI information transmission).

By decoding and analyzing the SEI, controller 1542 can determine what kind of data is encoded in the bitstream, or what kind of data the decoding device can output.

Furthermore, controller 1542 can specify, to decoder 1541, which data is to be output (specify output data), and decoder 1541 may output specific data specified by controller 1542 (output specific data).

FIG. 90 is a diagram for describing conformance points in Embodiment 3. Decoding device 1530 in FIG. 90 is the same as decoding device 1530 described using FIG. 62.

As illustrated in this diagram, data outputted by decoding device 1530, or blocks to be processed by decoding device 1530, may be defined in a plurality of ways.

For example, a first conformance point may be set to data (a first network, a second network, and metadata) decoded by decoding device 1530. Furthermore, a second conformance point may be set to density information and color information corresponding to second sampling points. Furthermore, a third conformance point may be set to three-dimensional data reconstructed based on the first network and the second network. Furthermore, a fourth conformance point may be set to a two-dimensional image rendered from the first network and the second network.

These conformance points may be information indicating which conformance point data decoding device 1530 is capable of outputting. Furthermore, a conformance point may be information indicating that a bitstream includes data necessary for decoding device 1530 to output the data set using the conformance point. In other words, a conformance point may be information indicating whether the capability of decoding device 1530 allows output of data indicated by the conformance point, or may be information indicating that the bitstream itself includes data necessary for output of data indicated by the conformance point.

For example, when a bitstream supports output at a second conformance point, an SPS or the like in the bitstream indicates that the conformance point is the second conformance point. In this case, additional information related to rendering need not be signaled. Furthermore, controller 1542 can determine which data can be output, by obtaining the conformance point from the bitstream.

Next, a variation of the fifth example of the encoding method and the output of the corresponding decoding device will be described.

FIG. 91 is a diagram illustrating an example of a bitstream including a plurality of networks in Embodiment 3. FIG. 92 is a diagram illustrating an example of syntax of a layer structure of a plurality of networks in Embodiment 3.

As in the fifth example, when encoding device 1520 encodes a plurality of networks including a density network and a color network, the header of each data unit may include nw_level_id indicating a hierarchical level of a network. Accordingly, decoding device 1530 can recognize the hierarchical level from the header of the data unit.

Furthermore, nw_scalable_structure() indicating a layer structure of a plurality of networks may be included in SPS or SEI. Accordingly, decoding device 1530 can identify the layer structure before receiving the data units and can prepare for hierarchical decoding.

The layer structure may include layer_type. layer_type may be an identifier indicating characteristics of a layer. layer_type may indicate, for example, that the layer includes density, or may indicate that the layer includes density and color. layer_type may be identification information for identifying data included in a layer corresponding to such layer_type.

In addition, the header of a data unit may include data length information, a data length of density information, and a data length of color information.

It should be noted that metadata such as SPS may include a flag indicating that a plurality of networks including a density network and a color network are encoded. Accordingly, the flag may be signaled.

When decoding device 1530 determines, based on metadata, that encoded data included in a bitstream is hierarchically encoded data, decoding device 1530 may, after receiving and decoding all data, select which of the decoded data to output. Alternatively, when the data to be outputted is determined in advance, decoding device 1530 may receive specific encoded data corresponding to the data to be outputted, and decode the data to be outputted based on the encoded data.

For example, in the fifth example, when encoded data for third sampling points is unnecessary, decoding device 1530 may decode the first network and the second network without decoding the third network. For example, decoding device 1530 can determine a data unit that is not to be decoded, by referring to nw_level_id included in the header of the data unit. In this manner, by encoding device 1520 generating a bitstream in which data units are generated for each hierarchy and hierarchical identifiers are assigned to the data units, decoding device 1530 can perform partial decoding and hierarchical decoding based on the bitstream. Accordingly, by enabling hierarchical decoding, decoding device 1530 can decode and output three-dimensional data or two-dimensional data having different resolutions.

Furthermore, by controller 1542 notifying decoder 1541 of, for example, a desired resolution, it is possible to decode only encoded data for decoding data of the desired resolution, and thus the processing load can be reduced. Controller 1542 can, depending on the use case, decode and output low-resolution data when displaying a thumbnail, and additionally decode and output differential high-resolution data when displaying the entirety. Accordingly, there is a possibility that the processing load related to decoding in decoding device 1530 can be reduced.

Next, variations of the encoding device and the decoding device will be described.

FIG. 93 is a block diagram illustrating an example of a configuration of a variation of an encoding device in Embodiment 3. FIG. 94 is a block diagram illustrating an example of a configuration of a variation of a decoding device in Embodiment 3.

Encoding device 1550 includes three-dimensional generative model learner 1551, three-dimensional generative model encoder 1553, and bitstream data constructor 1529.

Three-dimensional generative model learner 1551 differs from three-dimensional generative model learner 1521 by including geometry generator 1552 instead of first network learner 1522 and sampling point determiner 1523.

Geometry generator 1552 may generate a three-dimensional point cloud (second sampling points) from a plurality of two-dimensional images using photogrammetry techniques. Furthermore, geometry generator 1552 may also generate second sampling points (point cloud) from data obtained separately using a three-dimensional sensor (distance sensor) or the like. The generated second sampling points are processed in the same manner as in encoding device 1520.

Three-dimensional generative model encoder 1553 differs from three-dimensional generative model encoder 1525 by including point cloud encoder 1554 instead of first network encoder 1526.

Point cloud encoder 1554 encodes the second sampling points generated by geometry generator 1552. Point cloud encoder 1554 may perform the encoding of the second sampling points using, for example, MPEG G-PCC, MPEG V-PCC, Draco, or the like.

It should be noted that, in encoding device 1550, elements assigned the same reference signs as those in encoding device 1520 have the same functions as those elements in encoding device 1520, and therefore description thereof is omitted.

Decoding device 1560 includes bitstream data divider 1561, three-dimensional generative model decoder 1562, and reconstructor 1564.

Bitstream data divider 1561 divides an input bitstream into encoded data of second sampling points (point cloud), second network, and metadata.

Three-dimensional generative model decoder 1562 differs from three-dimensional generative model decoder 1532 by including point cloud decoder 1563 instead of first network decoder 1533.

Point cloud decoder 1563 decodes the second sampling points (point cloud) based on the encoded data of the second sampling points (point cloud). Point cloud decoder 1563 outputs the decoded second sampling points (point cloud).

Reconstructor 1564 differs from reconstructor 1536 by not including density estimator 1537 and sampling point determiner 1538.

Attribute information estimator 1539 estimates density information and color information corresponding to the second sampling points, using a trained second network output by second network decoder 1534 and the second sampling points (point cloud) decoded by point cloud decoder 1563.

It should be noted that, in decoding device 1560, elements assigned the same reference signs as those in decoding device 1530 have the same functions as those elements in decoding device 1530, and therefore description thereof is omitted.

### (Configuration Example 1)

FIG. 95 is a diagram illustrating an example of a configuration of the encoding device in Embodiment 3. FIG. 96 is a flowchart illustrating a first example of an encoding method performed by the encoding device in Embodiment 3.

Encoding device 1570 includes circuitry 1571 and memory 1572 coupled to circuitry 1571. Encoding device 1570 is a device for implementing encoding devices 1500 and 1520.

Circuitry 1571 performs the processes described below.

Circuitry 1571 obtains a plurality of networks included in a three-dimensional data generative model (three-dimensional model) (S1521). Circuitry 1571 encodes the plurality of networks (S1522). Circuitry 1571 outputs a bitstream including the plurality of networks encoded (S1523).

For this reason, encoding device 1570 can output a bitstream that includes encoded data obtained by encoding a plurality of networks included in a three-dimensional generative model. Therefore, a reduction in the storage capacity for the three-dimensional data or a reduction in the transmission amount of the three-dimensional data can be realized.

For example, the plurality of networks include a first network and a second network. Furthermore, the second network is generated using output of the first network. Accordingly, encoding device 1570 can generate the second network using the output of the first network, and thus can realize a reduction in the storage capacity for the three-dimensional data or a reduction in the transmission amount of the three-dimensional data, while improving the precision of the three-dimensional generative model.

For example, a resolution of sampling points for learning in the second network (FineNW) is higher than a resolution of sampling points for learning in the first network (CoarseNW). Accordingly, since the three-dimensional generative model includes the first network and the second network in which the resolution of sampling points for learning is higher than in the first network, the precision of the three-dimensional generative model may be improved.

For example, the first network is a network for outputting geometry information (point cloud). The second network is a network for outputting attribute information (color information or reflectance information) corresponding to the geometry information. Accordingly, since the three-dimensional generative model includes the first network for outputting geometry information and the second network for outputting attribute information corresponding to the geometry information, the precision of the three-dimensional generative model may be improved.

For example, the encoding of the plurality of networks is performed using Neural Network Coding (NNC) of the MPEG standard. Accordingly, compatibility is enhanced, thereby enabling decoding by various decoding devices.

For example, circuitry 1571 inputs, to the first network, a plurality of two-dimensional images, items of viewpoint information corresponding to the plurality of two-dimensional images, and first sampling points, to execute a learning process of a three-dimensional data generative model for each of a plurality of viewpoints indicated by the items of viewpoint information, and output geometry information for the first sampling points. Furthermore, circuitry 1571 inputs, to the second network, second sampling points determined based on the geometry information, to execute a learning process of a three-dimensional data generative model for each of the plurality of viewpoints. Then, circuitry 1571 encodes the first network and the second network obtained through learning. Accordingly, learning using the appropriate sampling points becomes possible, and thus the precision of the three-dimensional generative model may be improved.

For example, circuitry 1571 further encodes metadata to be used in the encoding. The metadata includes at least one of additional information, control information, or an encoding parameter. Accordingly, it becomes possible to send metadata to a decoding device, and the load on the decoding device for generating the three-dimensional generative model may be reduced, or the precision of the three-dimensional generative model may be improved.

FIG. 97 is a diagram illustrating an example of a configuration of a decoding device in Embodiment 3. FIG. 98 is a flowchart illustrating a first example of a decoding method performed by the decoding device in Embodiment 3.

Decoding device 1580 includes circuitry 1581 and memory 1582 coupled to circuitry 1581. Decoding device 1580 is a device for implementing decoding devices 1510 and 1530.

Circuitry 1581 performs the processes described below.

Circuitry 1581 obtains a bitstream including a plurality of networks that are encoded and included in a three-dimensional data generative model (three-dimensional model) (S1531). Circuitry 1581 decodes the plurality of networks, based on the bitstream (S1532).

For this reason, decoding device 1580 can appropriately decode the bitstream for which reduction of transmission amount has been realized.

For example, the plurality of networks include a first network and a second network. The second network is generated using output of the first network. Accordingly, decoding device 1580 can decode the first network and the second network, and thus can decode a three-dimensional generative model that has improved precision.

For example, a resolution of sampling points for learning in the second network (FineNW) is higher than a resolution of sampling points for learning in the first network (CoarseNW). Accordingly, decoding device 1580 can decode the first network and the second network in which the resolution of sampling points for learning is higher than in the first network, and thus can decode a three-dimensional generative model that has improved precision.

For example, the first network is a network for outputting geometry information (point cloud). The second network is a network for outputting attribute information (color information or reflectance information) corresponding to the geometry information. Accordingly, decoding device 1580 can decode the first network for outputting geometry information and the second network for outputting attribute information corresponding to the geometry information, and thus can decode a three-dimensional generative model that has improved precision.

For example, the decoding of the plurality of networks is performed using Neural Network Coding (NNC) of the MPEG standard. Accordingly, decoding device 1580 can appropriately decode a bitstream having high compatibility.

For example, the first network is a network that includes a three-dimensional data generative model for which a learning process has been executed for each of a plurality of viewpoints indicated by items of viewpoint information, based on a plurality of two-dimensional images, the items of viewpoint information corresponding to the plurality of two-dimensional images, and first sampling points, and is for outputting geometry information for the first sampling points. The second network is a three-dimensional data generative model for which a learning process has been executed for each of the plurality of viewpoints, based on second sampling points determined based on the geometry information. Accordingly, decoding device 1580 can decode a three-dimensional generative model for which precision has been improved by learning using the appropriate sampling points.

For example, the bitstream further includes metadata to be used in the encoding. The metadata includes at least one of additional information, control information, or an encoding parameter. Accordingly, the decoding device can obtain metadata, and thus can reduce the load for generating the three-dimensional generative model, and can decode the three-dimensional generative model having improved precision.

### (Configuration Example 2)

Encoding device 1570 may be for implementing encoding device 1550. FIG. 99 is a flowchart illustrating a second example of an encoding method performed by an encoding device in Embodiment 3.

Circuitry 1571 may perform the processes described below.

Circuitry 1571 generates a three-dimensional point cloud (S1541). Circuitry 1571 generates a trained network that has been trained by inputting, to a network, the three-dimensional point cloud (sampling points) generated (S1542). Circuitry 1571 encodes the three-dimensional point cloud and the trained network (S1543). Circuitry 1571 outputs a bitstream including the three-dimensional point cloud encoded and the network encoded (S1544).

For this reason, the encoding device can output a bitstream that includes encoded data obtained by encoding, for example, a sparse three-dimensional point cloud and a network that is included in a three-dimensional generative model. Therefore, a reduction in the storage capacity for the three-dimensional data or a reduction in the transmission amount of the three-dimensional data can be realized.

Decoding device 1580 may be for implementing decoding device 1560. FIG. 100 is a flowchart illustrating a second example of a decoding method performed by a decoding device in Embodiment 3.

Circuitry 1581 obtains a bitstream including an encoded three-dimensional point cloud and an encoded network (S1551). Circuitry 1581 decodes the three-dimensional point cloud and a trained network, based on the bitstream (S1552).

For this reason, the decoding device can appropriately decode the bitstream for which reduction in transmission amount has been realized.

### (Configuration Example 3)

FIG. 101 is a flowchart illustrating a third example of an encoding method performed by the encoding device in Embodiment 3.

Circuitry 1571 may perform the processes described below.

Circuitry 1571 obtains a plurality of networks included in a three-dimensional data generative model (three-dimensional model) (S1561). Circuitry 1571 encodes the plurality of networks (S1562). Circuitry 1571 outputs a bitstream including the plurality of networks encoded (S1563). The bitstream includes (1) first metadata that stores one or more parameters common to a sequence, and (2) second metadata that stores one or more parameters common to a frame, an access unit, or a plurality of frames.

For this reason, the encoding device can output a bitstream that includes encoded data obtained by encoding a plurality of networks included in a three-dimensional generative model. Therefore, a reduction in the storage capacity for the three-dimensional data or a reduction in the transmission amount of the three-dimensional data can be realized.

For example, at least one of the first metadata or the second metadata includes a first parameter indicating a total number of layers of a first network among the plurality of networks, and a second parameter indicating the number of nodes in each of the layers.

For example, the second metadata includes a specific parameter that is same as a specific parameter included in the first metadata. The specific parameter included in the second metadata is used with priority over the specific parameter included in the first metadata.

For example, the first metadata includes a flag indicating in which of the first parameter or the second parameter the first metadata or the second metadata is included.

For example, a header of a unit included in the bitstream includes an identifier (3D model sub model id) indicating a frame number of a frame to which the three-dimensional data generative model corresponds. For this reason, a decoding device that has obtained the bitstream can identify whether networks are for the same three-dimensional model, based on the identifier included in the bitstream.

For example, one frame corresponding to the three-dimensional data generative model is divided into a plurality of spaces. At least one space among the plurality of spaces is divided into a plurality of subspaces. The identifier includes different values each corresponding to a different one of the plurality of subspaces.

For example, a header of a unit included in the bitstream includes an identifier indicating a frame number of a frame to which the three-dimensional data generative model corresponds. For this reason, a decoding device that has obtained the bitstream can identify whether data units are for the same frame, based on the identifier included in the bitstream.

For example, a header of a unit included in the bitstream includes an identifier indicating, among a plurality of spaces into which the three-dimensional data generative model is divided, which region the unit pertains to. For this reason, a decoding device that has obtained the bitstream can identify whether data are for the same region, based on the identifier included in the bitstream.

For example, the first metadata includes: a parameter indicating a total number of one or more components included in the bitstream; and one or more identifiers that identify the one or more components.

FIG. 102 is a flowchart illustrating a third example of a decoding method performed by the decoding device in Embodiment 3.

Circuitry 1581 may perform the processes described below.

Circuitry 1581 obtains a bitstream including a plurality of networks included in a three-dimensional data generative model (three-dimensional model) and are encoded (S1571). The bitstream includes (1) first metadata that stores one or more parameters common to a sequence, and (2) second metadata that stores one or more parameters common to a frame, an access unit, or a plurality of frames. Circuitry 1581 decodes the plurality of networks, based on the bitstream (S1572).

For this reason, the decoding device can appropriately decode the bitstream for which reduction in transmission amount has been realized.

For example, at least one of the first metadata or the second metadata includes a first parameter indicating a total number of layers of a first network among the plurality of networks, and a second parameter indicating the number of nodes in each of the layers.

For example, the second metadata includes a specific parameter that is same as a specific parameter included in the first metadata. The specific parameter included in the second metadata is used with priority over the specific parameter included in the first metadata.

For example, the first metadata includes a flag indicating in which of the first parameter or the second parameter the first metadata or the second metadata is included.

For example, a header of a unit included in the bitstream includes an identifier (3D model sub model id) indicating a frame number of a frame to which the three-dimensional data generative model corresponds. For this reason, a decoding device that has obtained the bitstream can identify whether networks are for the same three-dimensional model, based on the identifier included in the bitstream.

For example, one frame corresponding to the three-dimensional data generative model is divided into a plurality of spaces. At least one space among the plurality of spaces is divided into a plurality of subspaces. The identifier includes different values each corresponding to a different one of the plurality of subspaces.

For example, a header of a unit included in the bitstream includes an identifier indicating a frame number of a frame to which the three-dimensional data generative model corresponds. For this reason, a decoding device that has obtained the bitstream can identify whether data units are for the same frame, based on the identifier included in the bitstream.

For example, a header of a unit included in the bitstream includes an identifier indicating, among a plurality of spaces into which the three-dimensional data generative model is divided, which region the unit pertains to. For this reason, a decoding device that has obtained the bitstream can identify whether data are for the same region, based on the identifier included in the bitstream.

For example, the first metadata includes: a parameter indicating a total number of one or more components included in the bitstream; and one or more identifiers that identify the one or more components.

### (Configuration Example 4)

FIG. 103 is a flowchart illustrating a fourth example of an encoding method performed by the encoding device in Embodiment 3.

Circuitry 1571 may perform the processes described below.

Circuitry 1571 obtains a plurality of networks included in a three-dimensional data generative model, the plurality of networks including a first network and a second network (S1581). Circuitry 1571 encodes the plurality of networks (S1582). Circuitry 1571 outputs a bitstream including the plurality of networks encoded, by storing, in each of a data unit of the first network and a data unit of the second network, at least one of a density network for outputting density information or a color network for outputting color information, the density network and the color network being networks obtained as a result of learning (S1583).

For this reason, the encoding device can output a bitstream that includes encoded data obtained by encoding a plurality of networks included in a three-dimensional generative model. Therefore, a reduction in the storage capacity for the three-dimensional data or a reduction in the transmission amount of the three-dimensional data can be realized.

For example, a density network for outputting density information for first sampling points is stored in the data unit of the first network. A density network for outputting density information for second sampling points and a color network for outputting color information for the second sampling points are stored in the data unit of the second network.

Accordingly, a decoding device that has obtained the bitstream can reproduce and output three-dimensional data or two-dimensional data for second sampling data, from the density network and color network for the second sampling points.

For example, a density network for outputting density information for first sampling points and a color network for outputting color information for the first sampling points are stored in the data unit of the first network. A density network for outputting density information for second sampling points and a color network for outputting color information for the second sampling points are stored in the data unit of the second network.

Accordingly, a decoding device that has obtained the bitstream can reproduce and output three-dimensional data or two-dimensional data for first sampling data, from the density network and color network for the first sampling points. Furthermore, a decoding device that has obtained the bitstream can reproduce and output three-dimensional data or two-dimensional data for second sampling data, from the density network and color network for the second sampling points.

For example, the plurality of networks further include a third network. A density network for outputting density information for first sampling points is stored in the data unit of the first network. A density network for outputting density information for second sampling points and a color network for outputting color information for the second sampling points are stored in the data unit of the second network. A density network for outputting density information for the second sampling points and a reflectance network for outputting reflectance information for the second sampling points are stored in a data unit of the third network.

Accordingly, a decoding device that has obtained the bitstream can reproduce and output three-dimensional data or two-dimensional data for second sampling data, from the density network, color network, and reflectance network for the second sampling points.

For example, the plurality of networks further include a third network. A density network for outputting density information for first sampling points is stored in the data unit of the first network. A density network for outputting density information for second sampling points is stored in the data unit of the second network. A density network for outputting density information for third sampling points and a color network for outputting color information for the third sampling points are stored in a data unit of the third network.

Accordingly, a decoding device that has obtained the bitstream can reproduce and output three-dimensional data or two-dimensional data for third sampling data, from the density network and color network for the denser third sampling points.

For example, the plurality of networks further include a third network. A density network for outputting density information for first sampling points and a color network for outputting color information for the first sampling points are stored in the data unit of the first network. A density network for outputting density information for second sampling points and a color network for outputting color information for the second sampling points are stored in the data unit of the second network. A density network for outputting density information for third sampling points and a color network for outputting color information for the third sampling points are stored in a data unit of the third network.

Accordingly, a decoding device that has obtained the bitstream can reproduce and output three-dimensional data or two-dimensional data for first sampling data, from the density network and color network for the first sampling points. Furthermore, a decoding device that has obtained the bitstream can reproduce and output three-dimensional data or two-dimensional data for second sampling data, from the density network and color network for the second sampling points. Furthermore, a decoding device that has obtained the bitstream can reproduce and output three-dimensional data or two-dimensional data for third sampling data, from the density network and color network for the third sampling points.

For example, the bitstream further includes at least one of a first conformance point, a second conformance point, a third conformance point, or a fourth conformance point. The first conformance point indicates that a decoding device is capable of executing processing for the plurality of networks decoded by the decoding device. The second conformance point indicates that the decoding device is capable of executing processing for at least one of the density information for the second sampling points or the color information for the second sampling points. The third conformance point indicates that the decoding device is capable of executing processing for three-dimensional data generated based on the first network and the second network. The fourth conformance point indicates that the decoding device is capable of executing processing for a two-dimensional image generated based on the first network and the second network.

For this reason, a device that has obtained the bitstream can determine data capable of being outputted based on the bitstream or data capable of being outputted by a decoding device, by referring to conformance points included in the bitstream, and thus the device can determine data that can be outputted.

For example, a header of the data unit of the first network includes first hierarchical level information indicating a hierarchical level of the first network. A header of the data unit of the second network includes second hierarchical level information indicating a hierarchical level of the second network.

FIG. 104 is a flowchart illustrating a fourth example of a decoding method performed by the decoding device in Embodiment 3.

Circuitry 1581 may perform the processes described below.

Circuitry 1581 obtains a bitstream including a plurality of networks that are encoded and included in a three-dimensional data generative model (S1591). The plurality of networks include a first network and a second network. At least one of a density network for outputting density information or a color network for outputting color information is stored in each of a data unit of the first network and a data unit of the second network, the density network and the color network being networks obtained as a result of learning. Circuitry 1581 decodes the plurality of networks, based on the bitstream (S1592).

For this reason, the decoding device can appropriately decode the bitstream for which reduction in transmission amount has been realized.

For example, a density network for outputting density information for first sampling points is stored in the data unit of the first network. A density network for outputting density information for second sampling points and a color network for outputting color information for the second sampling points are stored in the data unit of the second network.

Accordingly, a decoding device that has obtained the bitstream can reproduce and output three-dimensional data or two-dimensional data for second sampling data, from the density network and color network for the second sampling points.

For example, a density network for outputting density information for first sampling points and a color network for outputting color information for the first sampling points are stored in the data unit of the first network. A density network for outputting density information for second sampling points and a color network for outputting color information for the second sampling points are stored in the data unit of the second network.

Accordingly, a decoding device that has obtained the bitstream can reproduce and output three-dimensional data or two-dimensional data for first sampling data, from the density network and color network for the first sampling points. Furthermore, a decoding device that has obtained the bitstream can reproduce and output three-dimensional data or two-dimensional data for second sampling data, from the density network and color network for the second sampling points.

For example, the plurality of networks further include a third network. A density network for outputting density information for first sampling points is stored in the data unit of the first network. A density network for outputting density information for second sampling points and a color network for outputting color information for the second sampling points are stored in the data unit of the second network. A density network for outputting density information for the second sampling points and a reflectance network for outputting reflectance information for the second sampling points are stored in a data unit of the third network.

Accordingly, a decoding device that has obtained the bitstream can reproduce and output three-dimensional data or two-dimensional data for second sampling data, from the density network, color network, and reflectance network for the second sampling points.

For example, the plurality of networks further include a third network. A density network for outputting density information for first sampling points is stored in the data unit of the first network. A density network for outputting density information for second sampling points is stored in the data unit of the second network. A density network for outputting density information for third sampling points and a color network for outputting color information for the third sampling points are stored in a data unit of the third network.

Accordingly, a decoding device that has obtained the bitstream can reproduce and output three-dimensional data or two-dimensional data for third sampling data, from the density network and color network for the denser third sampling points.

For example, the plurality of networks further include a third network. A density network for outputting density information for first sampling points and a color network for outputting color information for the first sampling points are stored in the data unit of the first network. A density network for outputting density information for second sampling points and a color network for outputting color information for the second sampling points are stored in the data unit of the second network. A density network for outputting density information for third sampling points and a color network for outputting color information for the third sampling points are stored in a data unit of the third network.

Accordingly, a decoding device that has obtained the bitstream can reproduce and output three-dimensional data or two-dimensional data for first sampling data, from the density network and color network for the first sampling points. Furthermore, a decoding device that has obtained the bitstream can reproduce and output three-dimensional data or two-dimensional data for second sampling data, from the density network and color network for the second sampling points. Furthermore, a decoding device that has obtained the bitstream can reproduce and output three-dimensional data or two-dimensional data for third sampling data, from the density network and color network for the third sampling points.

For example, the bitstream further includes at least one of a first conformance point, a second conformance point, a third conformance point, or a fourth conformance point. The first conformance point indicates that a decoding device is capable of executing processing for the plurality of networks decoded by the decoding device. The second conformance point indicates that the decoding device is capable of executing processing for at least one of the density information for the second sampling points or the color information for the second sampling points. The third conformance point indicates that the decoding device is capable of executing processing for three-dimensional data generated based on the first network and the second network. The fourth conformance point indicates that the decoding device is capable of executing processing for a two-dimensional image generated based on the first network and the second network.

For this reason, a device that has obtained the bitstream can determine data capable of being outputted based on the bitstream or data capable of being outputted by a decoding device, by referring to conformance points included in the bitstream, and thus the device can determine data that can be outputted.

For example, a header of the data unit of the first network includes first hierarchical level information indicating a hierarchical level of the first network. A header of the data unit of the second network includes second hierarchical level information indicating a hierarchical level of the second network.

### [Industrial Applicability]

The present disclosure is applicable to an encoding device, and the like, that can encode a plurality of networks, or to a decoding device, and the like, that can decode a plurality of networks.

### [Reference Signs List]

- 1001: three-dimensional data encoding system
- 1002: three-dimensional data decoding system
- 1003: sensor terminal
- 1004: external connector
- 1011: three-dimensional data generation system
- 1012: presenter
- 1013: encoder
- 1014: multiplexer
- 1015: input/output unit
- 1016: controller
- 1017: sensor information obtainer
- 1018: three-dimensional data generator
- 1021: sensor information obtainer
- 1022: input/output unit
- 1023: demultiplexer
- 1024: decoder
- 1025: presenter
- 1026: user interface
- 1027: controller
- 1031: three-dimensional model learner
- 1032: three-dimensional model encoder
- 1033: three-dimensional model decoder
- 1034: rendering reconstructor
- 1041: data divider
- 1042: encoder
- 1051: decoder
- 1052: data merger
- 1070: server
- 1071: data generator
- 1072: point cloud generator
- 1073: mesh generator
- 1074: model generator
- 1075: synchronizer
- 1076: point cloud encoder
- 1077: mesh encoder
- 1078: model encoder
- 1079: multiplexer
- 1080: data extractor
- 1090: terminal
- 1091: controller
- 1092: decoder
- 1093: presenter
- 1101: point cloud sensor
- 1102: camera
- 1110: data generator
- 1111: point cloud generator
- 1112: mesh generator
- 1113: model generator
- 1130: decoding device
- 1131: circuitry
- 1132: memory
- 1140: encoding device
- 1141: circuitry
- 1142: memory
- 1401: three-dimensional data generative model
- 1402: evaluation function
- 1403: three-dimensional data generative model
- 1420: encoding device
- 1421: three-dimensional data generative model obtainer
- 1422: buffer
- 1423: network model encoder
- 1425: decoding device
- 1426: network model decoder
- 1427: renderer
- 1430: encoding device
- 1431: three-dimensional data generative model obtainer
- 1432: buffer
- 1433: difference calculator
- 1434: network model encoder
- 1435: decoding device
- 1436: network model decoder
- 1437: adder
- 1438: buffer
- 1439: renderer
- 1450: encoding device
- 1451: extended three-dimensional data generative model obtainer
- 1452: buffer
- 1453: network model encoder
- 1455: decoding device
- 1456: network model decoder
- 1457: renderer
- 1460: encoding device
- 1461: extended three-dimensional data generative model obtainer
- 1462: buffer
- 1463: difference calculator
- 1464: network model encoder
- 1465: decoding device
- 1466: network model decoder
- 1467: adder
- 1468: buffer
- 1469: renderer
- 1470: encoding device
- 1471: circuit
- 1472: memory
- 1480: decoding device
- 1481: circuit
- 1482: memory
- 1490: encoding device
- 1491: processor
- 1492: memory
- 1495: decoding device
- 1496: processor
- 1497: memory
- 1500: encoding device
- 1501: NeRF three-dimensional generative model learner
- 1502: NeRF generative model encoder
- 1510: decoding device
- 1511: NeRF generative model decoder
- 1512: rendering data reconstructor
- 1520: encoding device
- 1521: three-dimensional generative model learner
- 1522: first network learner
- 1522a: first network unit
- 1522b: comparer
- 1522c: renderer
- 1523: sampling point determiner
- 1524: second network learner
- 1525: three-dimensional generative model encoder
- 1526: first network encoder
- 1527: second network encoder
- 1528: meta data encoder
- 1529: bitstream data constructor
- 1530: decoding device
- 1531: bitstream data divider
- 1532: three-dimensional generative model decoder
- 1533: first network decoder
- 1534: second network decoder
- 1535: metadata decoder
- 1536: reconstructor
- 1537: density estimator
- 1538: sampling point determiner
- 1539: attribute information estimator
- 1540: renderer
- 1541: decoder
- 1542: controller
- 1550: encoding device
- 1551: three-dimensional generative model learner
- 1552: geometry generator
- 1553: three-dimensional generative model encoder
- 1554: point cloud encoder
- 1560: decoding device
- 1561: bitstream data divider
- 1562: three-dimensional generative model decoder
- 1563: point cloud decoder
- 1564: reconstructor
- 1570: encoding device
- 1571: circuitry
- 1572: memory
- 1580: decoding device
- 1581: circuitry
- 1582: memory

## Claims

1. An encoding device comprising:
circuitry; and
memory coupled to the circuitry, wherein
in operation, the circuitry:
obtains a plurality of networks included in a three-dimensional data generative model, the plurality of networks including a first network and a second network;
encodes the plurality of networks; and
outputs a bitstream including the plurality of networks encoded, by storing, in each of a data unit of the first network and a data unit of the second network, at least one of a density network for outputting density information or a color network for outputting color information, the density network and the color network being networks obtained as a result of learning.

2. The encoding device according to claim 1, wherein
a density network for outputting density information for first sampling points is stored in the data unit of the first network, and
a density network for outputting density information for second sampling points and a color network for outputting color information for the second sampling points are stored in the data unit of the second network.

3. The encoding device according to claim 1, wherein
a density network for outputting density information for first sampling points and a color network for outputting color information for the first sampling points are stored in the data unit of the first network, and
a density network for outputting density information for second sampling points and a color network for outputting color information for the second sampling points are stored in the data unit of the second network.

4. The encoding device according to claim 1, wherein
the plurality of networks further include a third network,
a density network for outputting density information for first sampling points is stored in the data unit of the first network,
a density network for outputting density information for second sampling points and a color network for outputting color information for the second sampling points are stored in the data unit of the second network, and
the density network for outputting the density information for the second sampling points and a reflectance network for outputting reflectance information for the second sampling points are stored in a data unit of the third network.

5. The encoding device according to claim 1, wherein
the plurality of networks further include a third network,
a density network for outputting density information for first sampling points is stored in the data unit of the first network,
a density network for outputting density information for second sampling points is stored in the data unit of the second network, and
a density network for outputting density information for third sampling points and a color network for outputting color information for the third sampling points are stored in a data unit of the third network.

6. The encoding device according to claim 1, wherein
the plurality of networks further include a third network,
a density network for outputting density information for first sampling points and a color network for outputting color information for the first sampling points are stored in the data unit of the first network,
a density network for outputting density information for second sampling points and a color network for outputting color information for the second sampling points are stored in the data unit of the second network, and
a density network for outputting density information for third sampling points and a color network for outputting color information for the third sampling points are stored in a data unit of the third network.

7. The encoding device according to any one of claims 2 to 6, wherein
the bitstream further includes at least one of a first conformance point, a second conformance point, a third conformance point, or a fourth conformance point,
the first conformance point indicates that a decoding device is capable of executing processing for the plurality of networks decoded by the decoding device,
the second conformance point indicates that the decoding device is capable of executing processing for at least one of the density information for the second sampling points and the color information for the second sampling points,
the third conformance point indicates that the decoding device is capable of executing processing for three-dimensional data generated based on the first network and the second network, and
the fourth conformance point indicates that the decoding device is capable of executing processing for a two-dimensional image generated based on the first network and the second network.

8. The encoding device according to any one of claims 1 to 7, wherein
a header of the data unit of the first network includes first hierarchical level information indicating a hierarchical level of the first network, and
a header of the data unit of the second network includes second hierarchical level information indicating a hierarchical level of the second network.

9. A decoding device comprising:
circuitry; and
memory coupled to the circuitry, wherein
in operation, the circuitry:
obtains a bitstream including a plurality of networks that are encoded and included in a three-dimensional data generative model, the plurality of networks including a first network and a second network, wherein at least one of a density network for outputting density information or a color network for outputting color information is stored in each of a data unit of the first network and a data unit of the second network, the density network and the color network being networks obtained as a result of learning; and
decodes the plurality of networks, based on the bitstream.

10. The decoding device according to claim 9, wherein
a density network for outputting density information for first sampling points is stored in the data unit of the first network, and
a density network for outputting density information for second sampling points and a color network for outputting color information for the second sampling points are stored in the data unit of the second network.

11. The decoding device according to claim 9, wherein
a density network for outputting density information for first sampling points and a color network for outputting color information for the first sampling points are stored in the data unit of the first network, and
a density network for outputting density information for second sampling points and a color network for outputting color information for the second sampling points are stored in the data unit of the second network.

12. The decoding device according to claim 9, wherein
the plurality of networks further include a third network,
a density network for outputting density information for first sampling points is stored in the data unit of the first network,
a density network for outputting density information for second sampling points and a color network for outputting color information for the second sampling points are stored in the data unit of the second network, and
the density network for outputting the density information for the second sampling points and a reflectance network for outputting reflectance information for the second sampling points are stored in a data unit of the third network.

13. The decoding device according to claim 9, wherein
the plurality of networks further include a third network,
a density network for outputting density information for first sampling points is stored in the data unit of the first network,
a density network for outputting density information for second sampling points is stored in the data unit of the second network, and
a density network for outputting density information for third sampling points and a color network for outputting color information for the third sampling points are stored in a data unit of the third network.

14. The decoding device according to claim 9, wherein
the plurality of networks further include a third network,
a density network for outputting density information for first sampling points and a color network for outputting color information for the first sampling points are stored in the data unit of the first network,
a density network for outputting density information for second sampling points and a color network for outputting color information for the second sampling points are stored in the data unit of the second network, and
a density network for outputting density information for third sampling points and a color network for outputting color information for the third sampling points are stored in a data unit of the third network.

15. The decoding device according to any one of claims 10 to 14, wherein
the bitstream further includes at least one of a first conformance point, a second conformance point, a third conformance point, or a fourth conformance point,
the first conformance point indicates that the decoding device is capable of executing processing for the plurality of networks decoded by the decoding device,
the second conformance point indicates that the decoding device is capable of executing processing for at least one of the density information for the second sampling points and the color information for the second sampling points,
the third conformance point indicates that the decoding device is capable of executing processing for three-dimensional data generated based on the first network and the second network, and
the fourth conformance point indicates that the decoding device is capable of executing processing for a two-dimensional image generated based on the first network and the second network.

16. The decoding device according to any one of claims 9 to 15, wherein
a header of the data unit of the first network includes first hierarchical level information indicating a hierarchical level of the first network, and
a header of the data unit of the second network includes second hierarchical level information indicating a hierarchical level of the second network.

17. An encoding method to be executed by an encoding device, the encoding method comprising:
obtaining a plurality of networks included in a three-dimensional data generative model, the plurality of networks including a first network and a second network;
encoding the plurality of networks; and
outputting a bitstream including the plurality of networks encoded, by storing, in each of a data unit of the first network and a data unit of the second network, at least one of a density network for outputting density information or a color network for outputting color information, the density network and the color network being networks obtained as a result of learning.

18. A decoding method to be executed by a decoding device, the decoding method comprising:
obtaining a bitstream including a plurality of networks that are encoded and included in a three-dimensional data generative model, the plurality of networks include a first network and a second network, wherein at least one of a density network for outputting density information or a color network for outputting color information is stored in each of a data unit of the first network and a data unit of the second network, the density network and the color network being networks obtained as a result of learning; and
decoding the plurality of networks, based on the bitstream.
